(19) Europäisches Patentamt / European Patent Office / Office européen des brevets

(11) **EP 4 107 891 B1**

(12) **EUROPÄISCHE PATENTSCHRIFT**

(45) Veröffentlichungstag und Bekanntmachung des Hinweises auf die Patenterteilung:
**11.06.2025  Patentblatt 2025/24**

(21) Anmeldenummer: **21704287.8**

(22) Anmeldetag: **12.02.2021**

(51) Internationale Patentklassifikation (IPC):
***H04L 5/00*** *(2006.01)*     ***H04L 27/26*** *(2006.01)*

(52) Gemeinsame Patentklassifikation (CPC):
**H04L 5/0048; H04L 27/2613; H04L 27/2659;**
**H04L 27/2675;** H04L 5/0012

(86) Internationale Anmeldenummer:
**PCT/EP2021/053560**

(87) Internationale Veröffentlichungsnummer:
**WO 2021/165164 (26.08.2021 Gazette 2021/34)**

(54) **PAKET-KORRELATOR FÜR EIN FUNKÜBERTRAGUNGSSYSTEM MIT ZEITVARIANTEM FREQUENZDRIFT**

PACKET CORRELATOR FOR A RADIO TRANSMISSION SYSTEM WITH TIME-VARYING FREQUENCY DRIFT

CORRÉLATEUR DE PAQUETS POUR UN SYSTÈME DE TRANSMISSION RADIO À DÉRIVE DE FRÉQUENCE VARIANT DANS LE TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **17.02.2020  EP 20157770**

(43) Veröffentlichungstag der Anmeldung:
**28.12.2022  Patentblatt 2022/52**

(73) Patentinhaber: **Fraunhofer-Gesellschaft zur Förderung**
**der angewandten Forschung e.V.**
**80686 München (DE)**

(72) Erfinder:
- **KILIAN, Gerd**
  **91058 Erlangen (DE)**
- **KNEISSL, Jakob**
  **91058 Erlangen (DE)**
- **ERETH, Stefan**
  **91058 Erlangen (DE)**

- **BAUER, Maik**
  **91058 Erlangen (DE)**
- **ROY, Samhita**
  **91058 Erlangen (DE)**
- **DANG, Thi Uyen Ly**
  **91058 Erlangen (DE)**
- **LESCHKA, Florian**
  **91058 Erlangen (DE)**
- **OBERNOSTERER, Frank**
  **90411 Nürnberg (DE)**
- **MEYER, Raimund**
  **90765 Fürth (DE)**

(74) Vertreter: **Schlenker, Julian et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
**US-A1- 2008 158 050     US-A1- 2019 260 628**
**US-B1- 6 748 026**

**Beschreibung**

Ausführungsbeispiele der vorliegenden Erfindung beziehen sich auf einen Datenempfänger und, im speziellen, auf einen Datenempfänger zum Empfangen eines Signals, das mit einem zeitlich veränderlichen Frequenzdrift beaufschlagt ist. Manche Ausführungsbeispiele beziehen sich auf einen Paket-Korrelator für ein Funkübertragungssystem mit zeitvariantem Frequenzdrift.

Bei der Übertragung eines Signals, das ein Datenpaket mit zumindest zwei voneinander beabstandeten Pilotsequenzen aufweist oder das wie in [2] oder [4] beschrieben eine Mehrzahl von Teil-Datenpaketen aufweist, die jeweils eine Pilotsequenz aufweisen und die in der Zeit und Frequenz entsprechend eines Sprungmusters verteilt sind, können die zeitlich voneinander beabstandeten Pilotsequenzen mit einer zeitlich veränderlichen Frequenzverschiebung (Frequenzdrift) beaufschlagt sein, beispielsweise verursacht durch eine relative Bewegungsänderung zwischen Datensender und Datenempfänger oder eine zeitlich veränderliche Fehlanpassung zwischen den Frequenzgebern (z.B. Oszillatoren) von Datensender und Datenempfänger.

Herkömmlicherweise kann ein mit einem solchen Signal übermitteltes Datenpaket bzw. können mit einem solchen Signal übermittelte Teil-Datenpakete nicht mehr basierend auf den Pilotsequenzen detektiert werden, insbesondere wenn diese mit einem größeren zeitlich veränderlichen Frequenzdrift beaufschlagt sind, wie z.B. mit einem Frequenzdrift von mehr als 1/8 der verwendeten Symbolrate in Hertz.

In der US 2008/158050 A1 wird ein GPS-Empfänger mit Abtastzeitfehler- und Frequenzversatzkompensation beschrieben. Es werden GPS-Signale mit mehreren Abtastraten für jeden von mehreren vorbestimmten Frequenzoffsets neu abgetastet, um einen Abtastzeitfehler und einen Frequenzoffset eines Kristalloszillators zu kompensieren. Die neu abgetasteten GPS-Signale können für jeden der vorbestimmten Frequenzversätze kreuzkorreliert werden. In einigen Ausführungsformen können der Abtastzeitfehler und der Frequenzoffset des Kristalloszillators eine Zeit- und Frequenzdrift von Referenzuhren auf GPS-Satelliten wesentlich überschreiten.

Der vorliegenden Erfindung liegt daher die Aufgabe zugrunde, ein Konzept zu schaffen, welches es ermöglicht, zeitlich voneinander beabstandete Pilotsequenzen zu detektieren, die mit einem größeren zeitlich veränderlichen Frequenzdrift beaufschlagt sind.

Diese Aufgabe wird durch die unabhängigen Patentansprüche gelöst.

Vorteilhafte Weiterbildungen finden sich in den abhängigen Patentansprüchen.

Ausführungsbeispiele schaffen einen Datenempfänger, wobei der Datenempfänger konfiguriert ist, um ein Signal von einem Datensender [z.B. stationäre Station, Satellit oder Relay] zu empfangen, wobei das Signal zumindest zwei Pilotsequenzen aufweist, die entsprechend eines Pilotmusters in der Zeit [z.B. und optional in der Frequenz] verteilt [z.B. voneinander beabstandet] sind, wobei zumindest eine zweite Pilotsequenz der zumindest zwei Pilotsequenzen eine zeitlich veränderliche Frequenzverschiebung [z.B. Frequenzdrift] [z.B. durch einen Doppler-Effekt] gegenüber einer ersten Pilotsequenz der zumindest zwei Pilotsequenzen aufweist, wobei der Datenempfänger einen Detektor mit einem Korrelator aufweist, der konfiguriert ist, um die zumindest zwei Pilotsequenzen basierend auf einem [z.B. dem Pilotmuster korrespondierenden oder von dem Pilotmuster abgeleiteten] Korrelationsmuster zu detektieren, wobei das Korrelationsmuster in der Frequenz [z.B. an die zeitlich veränderliche Frequenzverschiebung] angepasst ist, z.B. um einen Einfluss der zeitlich veränderlichen Frequenzverschiebung zu reduzieren [z.B. zu kompensieren].

Bei Ausführungsbeispielen kann der Datenempfänger [z.B. der Detektor des Datenempfängers oder der Korrelator selber] konfiguriert sein, um das Korrelationsmuster in der Frequenz anzupassen, z.B. um einen Einfluss der Frequenzverschiebung zu reduzieren [z.B. zu kompensieren].

Bei Ausführungsbeispielen kann das Signal ein Datenpaket aufweisen, wobei das Datenpaket die zumindest zwei Pilotsequenzen aufweist.

Bei Ausführungsbeispielen kann das Signal zumindest zwei Teil-Datenpakete aufweisen, wobei jedes der zumindest zwei Teil-Datenpakete eine Pilotsequenz der zumindest zwei Pilotsequenzen aufweist.

Bei Ausführungsbeispielen kann das Korrelationsmuster eine Verteilung der zumindest zwei Pilotsequenzen in der Zeit [und optional in der Frequenz] beschreiben.

Bei Ausführungsbeispielen kann sich zumindest einer aus Datensender und Datenempfänger relativ zu dem anderen aus Datensender und Datenempfänger bewegen, wobei die zeitlich veränderliche Frequenzverschiebung durch eine relative Bewegungsänderung zwischen dem Datensender und Datenempfänger resultiert.

Bei Ausführungsbeispielen kann die zeitlich veränderliche Frequenzverschiebung auch zusätzlich oder alternativ durch eine zeitlich veränderliche Fehlanpassung zwischen Oszillatoren von Datensender und Datenempfänger resultieren.

Bei Ausführungsbeispielen kann der Datenempfänger konfiguriert sein, um die zeitlich veränderliche Frequenzverschiebung der zumindest einen zweiten Pilotsequenz gegenüber der ersten Pilotsequenz zu schätzen und um das Korrelationsmuster in der Frequenz basierend auf der geschätzten zeitlich veränderlichen Frequenzverschiebung anzupassen.

Bei Ausführungsbeispielen kann der Korrelator zumindest zwei parallel arbeitende Korrelationseinheiten aufweisen, wobei eine erste Korrelationseinheit der zumindest zwei parallel arbeitenden Korrelationseinheiten konfiguriert ist, um basierend auf dem Korrelationsmuster Korrelationen der zumindest zwei Pilotsequenzen mit Referenzsequenzen durchzuführen, um einen Satz von Korrelationsergebnissen der ersten Korrelationseinheit zu erhalten, wobei eine zweite Korrelationseinheit der zumindest zwei parallel arbeitenden Korrelationseinheiten konfiguriert ist, um basierend auf dem Korrelationsmuster Korrelationen der zumindest zwei Pilotsequenzen mit Referenzsequenzen durchzuführen, um einen Satz von Korrelationsergebnissen der zweiten Korrelationseinheit zu erhalten, wobei der Datenempfänger konfiguriert ist, um das in den zumindest zwei parallel arbeitenden Korrelationseinheiten verwendete Korrelationsmuster in der Frequenz unterschiedlich anzupassen, z.B. um Einflüsse unterschiedlicher Frequenzverschiebungen zu reduzieren [z.B. zu kompensieren], wobei der Datenempfänger konfiguriert ist, um einen Satz von Korrelationsergebnissen aus den Sätzen von Korrelationsergebnissen der zumindest zwei parallel arbeitenden Korrelationseinheiten [z.B. einen Satz von Korrelationsergebnissen aus

- dem Satz von Korrelationsergebnissen der ersten Korrelationseinheit, und
- dem Satz von Korrelationsergebnissen der zweiten Korrelationseinheit,] basierend auf dem die Detektion der zumindest zwei Pilotsequenzen erfolgt, in Abhängigkeit von Werten des jeweiligen Satzes von Korrelationsergebnissen auszuwählen.

Beispielsweise kann der Datenempfänger konfiguriert sein, um die zumindest zwei Pilotsequenzen basierend auf einem aus

- dem Satz von Korrelationsergebnissen der ersten Korrelationseinheit, und
- dem Satz von Korrelationsergebnissen der zweiten Korrelationseinheit,

die die höchsten Werte aufweisen, zu detektieren.

Bei Ausführungsbeispielen kann der Korrelator ein mehrstufiger Korrelator sein, der eine erste Korrelationsstufe und zumindest eine auf die erste Korrelationsstufe folgende zweite Korrelationsstufe [z.B. eine zweite Korrelationsstufe und optional eine dritte Korrelationsstufe] aufweist, die basierend auf Korrelationsergebnissen der ersten Korrelationsstufe arbeitet, wobei der Detektor konfiguriert ist, um die zumindest zwei Pilotsequenzen in dem empfangenen Signal zu detektieren, wobei der Datenempfänger konfiguriert ist, um zumindest ein Korrelationsmuster, das in zumindest einer Korrelationsstufe aus der zumindest einen zweiten Korrelationsstufe des mehrstufigen Korrelators verwendet wird, in der Frequenz anzupassen, z.B. um den Einfluss der Frequenzverschiebung zu reduzieren [z.B. zu kompensieren].

Beispielsweise kann der mehrstufige Korrelator eine erste Korrelationsstufe und eine zweite Korrelationsstufe aufweisen, wobei der Datenempfänger konfiguriert ist, um ein Korrelationsmuster, das in der zweiten Korrelationsstufe des mehrstufigen Korrelators verwendet wird, in der Frequenz anzupassen, z.B. um den Einfluss der Frequenzverschiebung zu reduzieren [z.B. zu kompensieren].

Beispielsweise kann der mehrstufige Korrelator eine erste Korrelationsstufe, eine zweite Korrelationsstufe und eine dritte Korrelationsstufe aufweisen, wobei der Datenempfänger konfiguriert ist, um ein Korrelationsmuster, das in der zweiten Korrelationsstufe des mehrstufigen Korrelators verwendet wird und/oder ein Korrelationsmuster, das in der dritten Korrelationsstufe des mehrstufigen Korrelators verwendet wird, in der Frequenz anzupassen, z.B. um den Einfluss der Frequenzverschiebung zu reduzieren [z.B. zu kompensieren].

Beispielsweise kann das Signal zumindest zwei Teil-Datenpakete [z.B. eine Mehrzahl von Teil-Datenpaketen] aufweisen, die entsprechend eines Sprungmusters in der Zeit- und Frequenz verteilt sind, wobei die zumindest zwei Teil-Datenpakete jeweils eine Pilotsequenz der zumindest zwei Pilotsequenzen [z.B. Mehrzahl von Pilotsequenzen] aufweisen, wobei der Datenempfänger konfiguriert sein kann, um die zumindest zwei Teil-Datenpakete basierend auf den jeweiligen Pilotsequenzen in dem empfangenen Signal zu detektieren. Das Pilotmuster kann hierbei z.B. gleich dem Sprungmuster sein oder z.B. eine in der Zeit verschobene Version des Sprungmusters [z.B. wenn das Sprungmuster absolute Zeitpunkte der Teil-Datenpakete definiert oder sich die Pilotsequenzen an anderen Positionen innerhalb der Teil-Datenpakete befinden als diejenigen, die durch das Sprungmuster definiert werden [z.B. Anfänge der Teil-Datenpakete vs. Midambeln]].

Bei Ausführungsbeispielen können die zumindest zwei Pilotsequenzen entsprechend eines Pilotmuster in der Zeit- und Frequenz verteilt sein, wobei der mehrstufige Korrelator konfiguriert ist, um die zumindest zwei Pilotsequenzen in dem empfangenen Signal oder einer davon abgeleiteten Version [z.B. einer Mehrzahl von Teilbandsignalen] zu detektieren.

Bei Ausführungsbeispielen kann das empfangene Signal eine Mehrzahl von Teilbandsignalen aufweisen, wobei die Mehrzahl von Teilbandsignalen unterschiedliche [z.B. sich teilweise überlappende] Teilbänder des Signals [z.B. Breitbandsignals] aufweisen.

Beispielsweise kann der Datenempfänger konfiguriert sein, um basierend auf dem Signal [z.B. Breitbandsignal] ein empfangenes Signal zu erhalten, das die Mehrzahl von Teilbandsignalen aufweist.

Bei Ausführungsbeispielen können die Mehrzahl von Teilbandsignalen direkt für die durch den mehrstufigen Korrelator durchgeführte Korrelation eingesetzt werden.

Bei Ausführungsbeispielen kann der mehrstufige Korrelator konfiguriert sein, um eine mehrstufige Korrelation von zumindest einer Teilmenge der Mehrzahl von Teilbandsignalen durchzuführen, um die zumindest zwei Pilotsequenzen in der Teilmenge der Mehrzahl von Teilbandsignalen zu detektieren.

Bei Ausführungsbeispielen kann die erste Korrelationsstufe konfiguriert sein, um das empfangene Signal oder eine davon abgeleitete Version mit einer Mehrzahl von Pilotsequenzabschnitten zu korrelieren, die mit unterschiedlichen Abschnitten der zumindest zwei Pilotsequenzen [z.B. der Mehrzahl von Teil-Datenpaketen] korrespondieren, um eine Mehrzahl von Abschnittskorrelationsergebnissen zu erhalten, wobei die erste Korrelationsstufe konfiguriert ist, um die Mehrzahl von Abschnittskorrelationsergebnissen zu kombinieren, um einen Satz von Korrelationsergebnissen oder einen Teilsatz von Korrelationsergebnissen als Korrelationsergebnisse der ersten Korrelationsstufe zu erhalten.

Bei Ausführungsbeispielen können die zumindest zwei Pilotsequenzen gleich sein, z.B. die gleiche Bitfolge abbilden.

Bei Ausführungsbeispielen kann die erste Korrelationsstufe konfiguriert sein, um die Mehrzahl von Abschnittskorrelationsergebnissen zu normieren [z.B. durch Bildung von Betragsquadraten].

Bei Ausführungsbeispielen kann die erste Korrelationsstufe konfiguriert sein, um die Mehrzahl von Abschnittskorrelationsergebnissen in Abhängigkeit von einer ermittelten [z.B. berechneten] Leistung [$p[n]$] des empfangenen Signals oder der davon abgeleiteten Version [z.B. die gefilterte und/oder gespeicherte Version des zu empfangenen Signals] zu normieren.

Beispielsweise kann die erste Korrelationsstufe konfiguriert sein, um die Abschnittskorrelationsergebnissen durch Bildung von Betragsquadraten, Division durch die ermittelte Leistung und Berechnung der Wurzeln der Quotienten zu normieren.

Bei Ausführungsbeispielen kann die Leistung für die Normierung über mehrere Teilbänder ermittelt werden.

Bei Ausführungsbeispielen kann die erste Korrelationsstufe konfiguriert sein, um die Mehrzahl von Abschnittskorrelationsergebnissen separat zu normieren, wobei die Leistung getrennt für jeden Pilotsequenzabschnitt oder gemeinsam für alle Pilotsequenzabschnitte ermittelt wird.

Bei Ausführungsbeispielen kann die erste Korrelationsstufe eine Mehrzahl von Warteschlangenzwischenspeichern [z.B. Ringpuffern] aufweisen, die konfiguriert sind, um die jeweiligen Abschnittskorrelationsergebnisse zwischen zu speichern, wobei die Mehrzahl von Warteschlangenzwischenspeichern unterschiedliche Speicherlängen aufweisen, wobei die Speicherlängen der Mehrzahl von Warteschlangenzwischenspeichern von den jeweiligen Pilotsequenzabschnitten der abhängig sind.

Bei Ausführungsbeispielen kann die erste Korrelationsstufe konfiguriert sein, um zumindest zwei Teilbandsignale der Mehrzahl von Teilbandsignalen [z.B. mehrere Teilbandsignale der Mehrzahl von Teilbandsignalen oder alle Teilbandsignale der Mehrzahl von Teilbandsignalen] jeweils mit der Mehrzahl von Pilotsequenzabschnitten zu korrelieren, um für jedes Teilbandsignal der zumindest zwei Teilbandsignale einen Teilsatz von Korrelationsergebnissen [z.B. (normierte) Korrelationsamplituden oder ein eindimensionales Array von (normierten) Korrelationsamplituden] zu erhalten, wobei die erste Korrelationsstufe konfiguriert ist, um als Korrelationsergebnisse der ersten Korrelationsstufe einen Satz von Korrelationsergebnissen bereitzustellen, der die Teilsätze von Korrelationsergebnissen aufweist.

Beispielsweise kann der Satz von Korrelationsergebnissen die eindimensionalen Teilsätze von Korrelationsergebnissen aufweisen.

Bei Ausführungsbeispielen kann der Satz von Korrelationsergebnissen der ersten Korrelationsstufe ein zweidimensionales Array von Korrelationsergebnissen sein, wobei eine erste Dimension des zweidimensionalen Arrays von Korrelationsergebnissen [z.B. eine Abfolge von] Abtastzeitpunkte des empfangenen Signals beschreibt [z.B. Zeitrichtung], wobei eine zweite Dimension des zweidimensionalen Arrays von Korrelationsergebnissen Teilbänder des empfangenen Signals beschreibt [z.B. Frequenzrichtung].

Bei Ausführungsbeispielen kann die erste Korrelationsstufe einen [z.B. mehrkanaligen] Ausgangs-Warteschlangenzwischenspeicher [z.B. Ringpuffer] aufweisen, der konfiguriert ist, um den Satz von Korrelationsergebnissen der ersten Korrelationsstufe zwischen zu speichern.

Bei Ausführungsbeispielen kann die erste Korrelationsstufe konfiguriert sein, um eine Maximumbildung über Korrelationsergebnisse von benachbarten Teilbandsignalen durchzuführen, und um die kleineren Werte zu verwerfen.

Bei Ausführungsbeispielen können die zumindest zwei Pilotsequenzen eine Vielzahl von Pilotsequenzen sein, wobei zumindest zwei Gruppen von Pilotsequenzen der Vielzahl von Pilotsequenzen, gruppenweise das gleiche relative Gruppenpilotmuster aufweisen [z.B. oder wobei zumindest zwei Gruppen von Teil-Datenpaketen der Vielzahl von Teil-Datenpaketen, gruppenweise das gleiche relative Gruppensprungmuster aufweisen], wobei eine zweite Korrelationsstufe der zumindest einen zweiten Korrelationsstufe des mehrstufigen Korrelators konfiguriert ist, um aus dem Satz von Korrelationsergebnissen der ersten Korrelationsstufe Gruppen von Korrelationsergebnissen basierend auf einem Gruppenkorrelationsmuster, das von dem Gruppenpilotmuster [z.B. oder Gruppensprungmuster] abgeleitet ist, auszuwählen und gruppenweise zu kombinieren, um einen Satz von Korrelationsergebnissen der zweiten Korrelationsstufe zu erhalten.

Beispielsweise kann eine zweite Pilotsequenz der ersten Gruppe von Pilotsequenzen den gleichen Zeit- und Frequenzabstand zu einer ersten Pilotsequenzen der ersten Gruppe von Pilotsequenzen aufweisen, wie eine vierte Pilotsequenz der zweiten Gruppe von Pilotsequenz zu einer dritten Pilotsequenz der zweiten Gruppe von Pilotsequenzen.

Bei Ausführungsbeispielen kann die zweite Korrelationsstufe ausgebildet sein, um die Gruppen von Korrelationsergebnissen aus dem Satz von Korrelationsergebnissen der ersten Korrelationsstufe in Zeit- und oder Frequenzrichtung basierend auf dem Gruppenkorrelationsmuster auszuwählen.

Bei Ausführungsbeispielen kann der Satz von Korrelationsergebnissen der ersten Korrelationsstufe ein zwei dimensionales Array von Korrelationsergebnissen sein, wobei das Gruppenkorrelationsmuster Zeit- und Frequenzabstände der Korrelationsergebnisse des zwei dimensionalen Arrays von Korrelationsergebnissen der ersten Korrelationsstufe angibt, die den relativen Zeit- und Frequenzabständen des Gruppen-Sprungmusters der Gruppen von Pilotsequenzen entsprechen.

Bei Ausführungsbeispielen kann der Satz von Korrelationsergebnissen der zweiten Korrelationsstufe ein zwei dimensionales Array von Korrelationsergebnissen sein, wobei eine erste Dimension des zweidimensionalen Arrays von Korrelationsergebnissen eine [z.B. relative] zeitliche Lage der Gruppe von Pilotsequenzen beschreibt [Zeitrichtung], wobei eine zweite Dimension des zweidimensionalen Arrays von Korrelationsergebnissen eine [z.B. relative] Frequenzlage der Gruppe von Pilotsequenzen beschreibt [Frequenzrichtung].

Bei Ausführungsbeispielen kann zumindest eine Dimension [z.B. Frequenzrichtung] des zweidimensionalen Arrays von Korrelationsergebnissen der zweiten Korrelationsstufe kleiner sein als die jeweilige zumindest eine Dimension des zweidimensionalen Arrays von Korrelationsergebnissen der ersten Korrelationsstufe.

Bei Ausführungsbeispielen kann die zweite Korrelationsstufe einen [z.B. zwei dimensionalen] Ausgangs-Warteschlangenzwischenspeicher [z.B. Ringpuffer] aufweisen, der ausgebildet ist, um den Satz von Korrelationsergebnissen der zweiten Korrelationsstufe zwischen zu speichern.

Bei Ausführungsbeispielen können die zumindest zwei Gruppen von Pilotsequenzen eine Sequenz bilden, wobei die zumindest zwei Gruppen von Pilotsequenzen ein relatives Gruppensequenzpilotmuster aufweisen [z.B. oder wobei die zumindest zwei Gruppen von Teil-Datenpaketen ein relatives Gruppensequenzsprungmuster zueinander aufweisen], wobei eine dritte Korrelationsstufe der zumindest einen zweiten Korrelationsstufe des mehrstufigen Korrelators konfiguriert ist, um aus dem Satz von Korrelationsergebnissen der zweiten Korrelationsstufe Gruppen von Korrelationsergebnissen basierend auf einem Gruppensequenzkorrelationsmuster, das von dem Gruppensequenzpilotmuster [z.B. oder Gruppensequenzsprungmuster] abgeleitet ist, auszuwählen und gruppenweise zu kombinieren, um einen Satz von Korrelationsergebnissen der dritten Korrelationsstufe zu erhalten.

Bei Ausführungsbeispielen kann die dritte Korrelationsstufe ausgebildet sein, um die Gruppen von Korrelationsergebnissen aus dem Satz von Korrelationsergebnissen der zweiten Korrelationsstufe in Zeit- und oder Frequenzrichtung basierend auf dem Gruppensequenzkorrelationsmuster auszuwählen.

Bei Ausführungsbeispielen kann der Satz von Korrelationsergebnissen der zweiten Korrelationsstufe ein zwei dimensionales Array von Korrelationsergebnissen sein, wobei das Gruppensequenzkorrelationsmuster Zeit- und Frequenzabstände der Korrelationsergebnisse des zwei dimensionalen Arrays von Korrelationsergebnissen der zweiten Korrelationsstufe angibt, die den relativen Zeit- und Frequenzabständen des Gruppensequenzsprungmusters entsprechen.

Bei Ausführungsbeispielen kann der Satz von Korrelationsergebnissen der dritten Korrelationsstufe ein zwei dimensionales Array von Korrelationsergebnissen sein, wobei eine erste Dimension des zweidimensionalen Arrays von Korrelationsergebnissen eine [z.B. relative] zeitliche Lage der Gruppen von Pilotsequenzen beschreibt [Zeitrichtung], wobei eine zweite Dimension des zweidimensionalen Arrays von Korrelationsergebnissen eine relative Frequenzlage der Gruppen von Pilotsequenzen beschreibt [Frequenzrichtung].

Bei Ausführungsbeispielen kann zumindest eine Dimension [z.B. Frequenzrichtung] des zweidimensionalen Arrays von Korrelationsergebnissen der dritten Korrelationsstufe kleiner sein als die jeweilige zumindest eine Dimension des zweidimensionalen Arrays von Korrelationsergebnissen der zweiten Korrelationsstufe.

Bei Ausführungsbeispielen kann die dritte Korrelationsstufe einen [z.B. mehrkanaligen] Ausgangs-Warteschlangenzwischenspeicher [z.B. Ringpuffer] aufweisen, der ausgebildet ist, um den Satz von Korrelationsergebnissen der dritten Korrelationsstufe zwischen zu speichern.

Bei Ausführungsbeispielen kann der Datenempfänger ausgebildet sein, um den Satz von Korrelationsergebnissen in einer geeigneten Form an eine nachfolgende Paket-Detektion zu übergeben.

Bei Ausführungsbeispielen kann der Datenempfänger konfiguriert sein, um das Gruppenkorrelationsmuster in der Frequenz anzupassen, z.B. um den Einfluss der Frequenzverschiebung zu reduzieren [z.B. zu kompensieren], und/oder wobei der Datenempfänger konfiguriert sein, um das Gruppensequenzkorrelationsmuster anzupassen, z.B. um den Einfluss der Frequenzverschiebung zu reduzieren [z.B. zu kompensieren].

Bei Ausführungsbeispielen kann das in der dritten Korrelationsstufe des mehrstufigen Korrelators verwendete Gruppensequenzkorrelationsmuster ein erstes Gruppensequenzkorrelationsmuster sein, wobei eine vierte Korrelationsstufe der zumindest einen zweiten Korrelationsstufe des mehrstufigen Korrelators, die parallel zu der dritten

Korrelationsstufe arbeitet, konfiguriert ist, um aus dem Satz von Korrelationsergebnissen der zweiten Korrelationsstufe Gruppen von Korrelationsergebnissen basierend auf einem zweiten Gruppensequenzkorrelationsmuster, das von dem Gruppensequenzpilotmuster [z.B. oder Gruppensequenzsprungmuster] abgeleitet ist, auszuwählen und gruppenweise zu kombinieren, um einen Satz von Korrelationsergebnissen der vierten Korrelationsstufe zu erhalten, wobei der Datenempfänger konfiguriert ist, um das erste Gruppensequenzkorrelationsmuster und das zweite Gruppensequenzkorrelationsmuster unterschiedlich in der Frequenz anzupassen, um unterschiedliche Frequenzverschiebungen zu reduzieren, wobei der Datenempfänger konfiguriert ist, um die zumindest zwei Pilotsequenzen basierend auf

- dem Satz von Korrelationsergebnissen der dritten Korrelationsstufe, und/oder
- dem Satz von Korrelationsergebnissen der vierten Korrelationsstufe zu detektieren.

Bei Ausführungsbeispielen kann der Datenempfänger konfiguriert sein, um einen Satz von Korrelationsergebnissen aus

- dem Satz von Korrelationsergebnissen der dritten Korrelationsstufe, und
- dem Satz von Korrelationsergebnissen der vierten Korrelationsstufe,

basierend auf dem die Detektion [z.B. und nachfolgende Decodierung] der zumindest zwei Pilotsequenzen erfolgt, in Abhängigkeit von Werten des jeweiligen Satzes von Korrelationsergebnissen auszuwählen.

Beispielsweise kann der Datenempfänger konfiguriert sein, um die zumindest zwei Pilotsequenzen [z.B. oder die zumindest zwei Teil-Datenpakete] basierend auf einem aus

- dem Satz von Korrelationsergebnissen der dritten Korrelationsstufe, und
- dem Satz von Korrelationsergebnissen der vierten Korrelationsstufe,

die die höchsten Werte aufweisen, zu detektieren [z.B. und für eine nachfolgende Decodierung zu verwenden].

Bei Ausführungsbeispielen kann der Datenempfänger einen Decoder aufweisen, der konfiguriert ist, um Daten, die das Signal aufweist, basierend auf den zumindest zwei Pilotsequenzen zu decodieren, wobei der Datenempfänger konfiguriert ist, um den Satz von Korrelationsergebnissen aus

- dem Satz von Korrelationsergebnissen der dritten Korrelationsstufe, und
- dem Satz von Korrelationsergebnissen der vierten Korrelationsstufe,

basierend auf dem die Detektion und die Decodierung der Mehrzahl von Teil-Datenpaketen erfolgt, in Abhängigkeit von einem vorherigen Decodierergebnis auszuwählen.

Bei Ausführungsbeispielen kann der Datenempfänger einen Decoder aufweisen, der konfiguriert ist, um Daten, die das empfangene Signal aufweist, zu decodieren, wobei der Decoder konfiguriert ist, um bei der Decodierung der Daten die zeitlich veränderliche Frequenzverschiebung zu berücksichtigen oder zu korrigieren.

Weitere Ausführungsbeispiele schaffen ein Verfahren. Das Verfahren umfasst einen Schritt des Empfangens eines Signals von einem Datensender [z.B. stationäre Station, Satellit oder Relay], wobei das Signal zumindest zwei Pilotsequenzen aufweist, die entsprechend eines Pilotmusters in der Zeit [z.B. und optional in der Frequenz] verteilt [z.B. voneinander beabstandet] sind, wobei zumindest eine zweite Pilotsequenz der zumindest zwei Pilotsequenzen eine zeitlich veränderliche Frequenzverschiebung [z.B. Frequenzdrift] [z.B. durch einen Doppler-Effekt] gegenüber einer ersten Pilotsequenz der zumindest zwei Pilotsequenzen aufweist. Ferner umfasst das Verfahren einen Schritt des Detektierens der zumindest zwei Pilotsequenzen basierend auf einem [z.B. dem Pilotmuster korrespondierenden oder von dem Pilotmuster abgeleiteten] Korrelationsmuster, wobei das Korrelationsmuster in der Frequenz an die zeitlich veränderliche Frequenzverschiebung angepasst ist, z.B. um einen Einfluss der zeitlich veränderlichen Frequenzverschiebung zu reduzieren [z.B. zu kompensieren].

Weitere Ausführungsbeispiele schaffen einen Datenempfänger, wobei der Datenempfänger konfiguriert ist, um ein Signal von einem Datensender [z.B. stationäre Station, Satellit oder Relay] zu empfangen, wobei das Signal zumindest zwei Pilotsequenzen aufweist, die entsprechend eines Pilotmusters in der Zeit [z.B. und optional in der Frequenz] verteilt [z.B. voneinander beabstandet] sind, wobei zumindest eine zweite Pilotsequenz der zumindest zwei Pilotsequenzen eine zeitlich veränderliche Frequenzverschiebung [z.B. Frequenzdrift] [z.B. durch einen Doppler-Effekt] gegenüber einer ersten Pilotsequenz der zumindest zwei Pilotsequenzen aufweist, wobei der Datenempfänger einen Detektor mit einem Korrelator aufweist, der konfiguriert ist, um die zumindest zwei Pilotsequenzen basierend auf einem [z.B. dem Pilotmuster korrespondierenden oder von dem Pilotmuster abgeleiteten] aus einem Satz von Korrelationsmustern ausgewählten Korrelationsmuster zu detektieren, wobei die Korrelationsmuster des Satzes von Korrelationsmustern unterschiedliche Einflüsse von zeitlich veränderlichen Frequenzverschiebungen reduzieren [z.B. kompensieren].

Bei Ausführungsbeispielen kann das Signal ein Datenpaket aufweisen, wobei das Datenpaket die zumindest zwei Pilotsequenzen aufweist.

Bei Ausführungsbeispielen kann das Signal zumindest zwei Teil-Datenpakete aufweisen, wobei jedes der zumindest zwei Teil-Datenpakete eine Pilotsequenz der zumindest zwei Pilotsequenzen aufweist.

Bei Ausführungsbeispielen kann der Detektor konfiguriert ist, um die zeitlich veränderliche Frequenzverschiebung der zumindest einen zweiten Pilotsequenz gegenüber der ersten Pilotsequenz zu schätzen, wobei der Detektor konfiguriert ist, um ein Korrelationsmuster aus dem Satz von Korrelationsmustern in Abhängigkeit der geschätzten Frequenzverschiebung auszuwählen, um das ausgewählte Korrelationsmuster zu erhalten.

Bei Ausführungsbeispielen kann der Datenempfänger einen Decoder aufweisen, der konfiguriert ist, um Daten [z.B. ein Datenpaket oder zumindest zwei Teil-Datenpakete], die das Signal aufweist zu decodieren, wobei der Decoder konfiguriert ist, um bei der Decodierung der Daten den zeitlich veränderlichen Frequenzversatz, der durch das für die Detektion ausgewählte Korrelationsmuster reduziert [z.B. kompensiert] wird, zu berücksichtigen oder zu korrigieren.

Bei Ausführungsbeispielen kann das Signal eine Mehrzahl von Teil-Datenpaketen aufweisen, die entsprechend eines Sprungmusters in der Zeit- und Frequenz verteilt sind, wobei die zumindest zwei Pilotsequenzen eine Mehrzahl von Pilotsequenzen sind, wobei die Mehrzahl von Teildatenpakten jeweils eine Pilotsequenz der Mehrzahl von Pilotsequenzen aufweisen, [z.B. wobei das Pilotmuster gleich dem Sprungmuster ist oder eine in der Zeit verschobene Version des Sprungmusters ist], wobei der Satz von Korrelationsmustern von dem Sprungmuster abgeleitet ist.

Bei Ausführungsbeispielen kann der Satz von Korrelationsmustern von zumindest einem in ETSI TS 103 357 definierten Sprungmuster abgeleitet sein.

Weitere Ausführungsbeispiele schaffen ein Verfahren. Das Verfahren umfasst einen Schritt des Empfangens eines Signals von einem Datensender [z.B. stationäre Station, Satellit oder Relay] zu empfangen, wobei das Signal zumindest zwei Pilotsequenzen aufweist, die entsprechend eines Pilotmusters in der Zeit [z.B. und optional in der Frequenz] verteilt [z.B. voneinander beabstandet] sind, wobei zumindest eine zweite Pilotsequenz der zumindest zwei Pilotsequenzen eine zeitlich veränderliche Frequenzverschiebung [z.B. Frequenzdrift] [z.B. durch einen Doppler-Effekt] gegenüber einer ersten Pilotsequenz der zumindest zwei Pilotsequenzen aufweist. Ferner umfasst das Verfahren einen Schritt des Detektierens der zumindest zwei Pilotsequenzen basierend auf einem aus einem Satz von Korrelationsmustern ausgewählten Korrelationsmuster, wobei die Korrelationsmuster des Satzes von Korrelationsmustern unterschiedliche Einflüsse von zeitlich veränderlichen Frequenzverschiebungen reduzieren [z.B. kompensieren].

Weitere Ausführungsbeispiele schaffen ein Computerprogramm zur Durchführung eines Verfahrens gemäß einem der hierin beschriebenen Ausführungsbeispiele, wenn das Computerprogramm auf einem Computer, Mikroprozessor oder SDR Empfänger (SDR = software defined radio, dt. Empfänger mit softwareimplementierter Signalverarbeitung) abläuft.

Ausführungsbeispiele der vorliegenden Erfindung werden bezugnehmend auf die beiliegenden Figuren näher beschrieben. Es zeigen:

Fig. 1        ein schematisches Blockschaltbild eines Systems mit einem Datensender und einem Datenempfänger;

Fig. 2        in einem Diagramm eine Belegung des Übertragungskanals bei der Übertragung einer Mehrzahl von Teil-Datenpaketen entsprechend einem Zeitfrequenzsprungmuster und einen beispielhaften Aufbau eines Teil-Pakets bestehend aus Daten- und Synchronisationssymbolen;

Fig. 3        ein schematisches Blockschaltbild eines Systems mit einem Datensender und einem Datenempfänger;

Fig. 4        in einem Diagramm eine Belegung eines Übertragungskanals bei der Übertragung einer Vielzahl von Teil-Datenpaketen, wobei drei Gruppen von Teil-Datenpaketen der Vielzahl von Teil-Datenpaketen gruppenweise das gleiche relative Gruppensprungmuster aufweisen;

Fig. 5a       ein schematisches Blockschaltbild eines Datenempfängers mit einem mehrstufigen Korrelator, gemäß einem Ausführungsbeispiel;

Fig. 5b       ein schematisches Blockschaltbild eines Datenempfängers mit einem mehrstufigen Korrelator, gemäß einem weiteren Ausführungsbeispiel;

Fig. 6        ein schematisches Blockschaltbild eines Paket-Detektors (mehrstufigen Korrelators) eines Datenempfängers, gemäß einem Ausführungsbeispiel;

Fig. 7        in einem Diagramm eine Belegung des Übertragungskanals bei der Übertragung von Datenpaketen unter Verwendung von vier unterschiedlichen Übertragungsverfahren;

Fig. 8      eine schematische Ansicht eines Aufbaus eines Teil-Datenpakets, gemäß einem Ausführungsbeispiel;

Fig. 9      in einem Diagramm eine zeit- und frequenzmäßige Anordnung der Teil-Datenpakete eines Datenpakets im zugewiesenen Frequenzband mit der Bandbreite B;

Fig. 10     ein schematisches Blockschaltbild einer ersten Korrelationsstufe des mehrstufigen Korrelators des Datenempfängers, gemäß einem Ausführungsbeispiel;

Fig. 11     ein schematisches Blockschaltbild einer zweiten Korrelationsstufe des mehrstufigen Korrelators des Datenempfängers, gemäß einem Ausführungsbeispiel;

Fig. 12     ein schematisches Blockschaltbild eines mehrstufigen Korrelators eines Datenempfängers, wobei der mehrstufige Korrelator drei Korrelationsstufen aufweist, gemäß einem Ausführungsbeispiel;

Fig. 13     eine schematische Ansicht einer beispielhaften Aufteilung einer Präambel, gemäß einem Ausführungsbeispiel;

Fig. 14     ein schematisches Blockschalbild eines Ausschnitts der in Fig. 12 gezeigten ersten Korrelationsstufe sowie der der ersten Korrelationsstufe vorgeschalteten Filterbank (z.B. Matched-Filterbank) und Zwischenspeicher (z.B. Ring-Puffer), gemäß einem Ausführungsbeispiel;

Fig. 15     eine schematische Ansicht der durch die erste Korrelationsstufe durchgeführten Präambelabschnittskorrelation der in dem Ringpuffer zwischengespeicherten Teilbandsignale einschließlich der Kombination der Abschnittskorrelationsergebnisse, gemäß einem Ausführungsbeispiel;

Fig. 16     ein schematisches Blockschaltbild eines Ausschnitts der in Fig. 12 gezeigten ersten Korrelationsstufe, gemäß einem Ausführungsbeispiel;

Fig. 17     ein schematisches Blockschaltbild der zweiten Korrelationsstufe, gemäß einem Ausführungsbeispiel;

Fig. 18     eine schematische Ansicht der durch die zweite Korrelationsstufe durchgeführten Gruppenkorrelation basierend auf den in dem Ausgangs-Warteschlangenzwischenspeicher der ersten Korrelationsstufe zwischengespeicherten ersten Korrelationsergebnisse, gemäß einem Ausführungsbeispiel;

Fig. 19     ein schematisches Blockschaltbild eines Ausschnitts der in Fig. 12 gezeigten dritten Korrelationsstufe, gemäß einem Ausführungsbeispiel;

Fig. 20     eine schematische Ansicht einer Reduktion der Kanalanzahl der Matched-Filterbank durch eine f/8-Matched-Filterbank und einer f/4-Matched-Filterbank, gemäß einem Ausführungsbeispiel;

Fig. 21     eine schematische Ansicht einer Abschnittskorrelation mit den mit entsprechenden Mischfrequenzen rotierten Präambeln bzw. deren Abschnitten als Referenzsymbole;

Fig. 22     eine schematische Ansicht einer Maximum-Bildung zwischen der ersten Korrelationsstufe und der zweiten Korrelationsstufe des Datenempfängers, gemäß einem Ausführungsbeispiel;

Fig. 23     ein schematisches Blockschaltbild einer ersten Korrelationsstufe des Datenempfängers, gemäß einem weiteren Ausführungsbeispiel;

Fig. 24     ein schematisches Blockschaltbild eines Funkübertragungssystems mit einem Datensender und einem Datenempfänger, gemäß einem Ausführungsbeispiel der vorliegenden Erfindung;

Fig. 25     ein schematisches Blockschaltbild eines Korrelators, gemäß einem Ausführungsbeispiel der vorliegenden Erfindung;

Fig. 26     ein schematisches Blockschaltbild eines Korrelators, gemäß einem weiteren Ausführungsbeispiel der vorliegenden Erfindung;

Fig. 27    in Diagrammen, ausgehend vom Zenit zum Zeitpunkt T = 0, einen Abstand eines LEO Satelliten in km aufgetragen über die Zeit in s, eine relative Geschwindigkeit des LEO Satelliten in m/s aufgetragen über die Zeit, eine Doppler-Verschiebung eines Signals des LEO Satelliten in Hz aufgetragen über die Zeit, und eine Delta-Doppler-Verschiebung eines Signals des LEO Satelliten in Hz/s aufgetragen über die Zeit, jeweils für eine Trägerfrequenz $f_c$ von 1 GHz;

Fig. 28a    in einem Diagramm eine Doppler-Verschiebung in kHz aufgetragen über einen Elevationswinkel des LEO Satelliten;

Fig. 28b    in einem Diagramm eine Delta-Doppler-Verschiebung in kHz aufgetragen über einen Elevationswinkel des LEO Satelliten;

Fig. 29    in einem Diagramm ein herkömmliches Korrelationsmuster;

Fig. 30    in einem Diagramm, ausgehend von dem in Fig. 29 gezeigten Korrelationsmuster, ein modifiziertes Korrelationsmuster, gemäß einem Ausführungsbeispiel der vorliegenden Erfindung;

Fig. 31    ein schematisches Blockschaltbild eines Detektors mit einem mehrstufigen Korrelator, gemäß einem Ausführungsbeispiel der vorliegenden Erfindung;

Fig. 32    ein schematisches Blockschaltbild eines Detektors mit einem mehrstufigen Korrelator, der zumindest zwei dritte Korrelationsstufen (Gruppensequenz-Korrelationen) aufweist, die in der Frequenz unterschiedlich angepasste Korrelationsmuster verwenden, gemäß einem Ausführungsbeispiel der vorliegenden Erfindung;

Fig. 33    ein schematisches Blockschaltbild eines Detektors mit einem mehrstufigen Korrelator, der fünf dritte Korrelationsstufen (Gruppensequenz-Korrelationen) aufweist, die in der Frequenz unterschiedlich angepasste Korrelationsmuster verwenden, um unterschiedliche zeitlich veränderliche Frequenzverschiebungen zu kompensieren, gemäß einem Ausführungsbeispiel der vorliegenden Erfindung;

Fig. 34    ein schematisches Blockschaltbild eines Datenempfängers mit einem Detektor mit einem mehrstufigen Korrelator, der drei dritte Korrelationsstufen (Gruppensequenz-Korrelationen) aufweist, dessen Korrelationsergebnisse in drei Paket-Detektionen zur Detektion der Pilotsequenzen verwendet werden, wobei mittels eines Auswählers nur die Detektionsergebnisse einer der Paket-Detektionen für einen Decoder bereitgestellt werden, gemäß einem Ausführungsbeispiel der vorliegenden Erfindung;

Fig. 35    ein schematisches Blockschaltbild eines Datenempfängers mit einem Detektor, einem Delta-Doppler-Kompensator und einem Decoder, gemäß einem Ausführungsbeispiel der vorliegenden Erfindung;

Fig. 36    ein schematisches Blockschaltbild eines Datenempfängers mit einem Detektor, einem Doppler-Kompensator und einem Decoder, gemäß einem Ausführungsbeispiel der vorliegenden Erfindung;

Fig. 37    ein Flussdiagramm eines Verfahrens zum empfangen eines Signals, gemäß einem Ausführungsbeispiel der vorliegenden Erfindung; und

Fig. 38    ein Flussdiagramm eines Verfahrens zum empfangen eines Signals, gemäß einem weiteren Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Bevor im Abschnitt 4 Ausführungsbeispiele eines Datenempfängers bzw. eines Korrelators beschrieben werden, die es ermöglichen, zeitlich voneinander beabstandete Pilotsequenzen zu detektieren, die mit einem größeren zeitlich veränderlichen Frequenzdrift beaufschlagt sind, wird zunächst in Abschnitt 1 ein beispielhaftes, zugrundeliegendes Funkübertragungssystem sowie in den Abschnitten 2 und 3 beispielhafte Ausgestaltungen eines zu erweiternden / modifizierenden Datenempfängers bzw. Korrelators beschrieben.

**1. Telegram-Splitting basiertes Funkübertragungssystem**

**1.1 Übersicht**

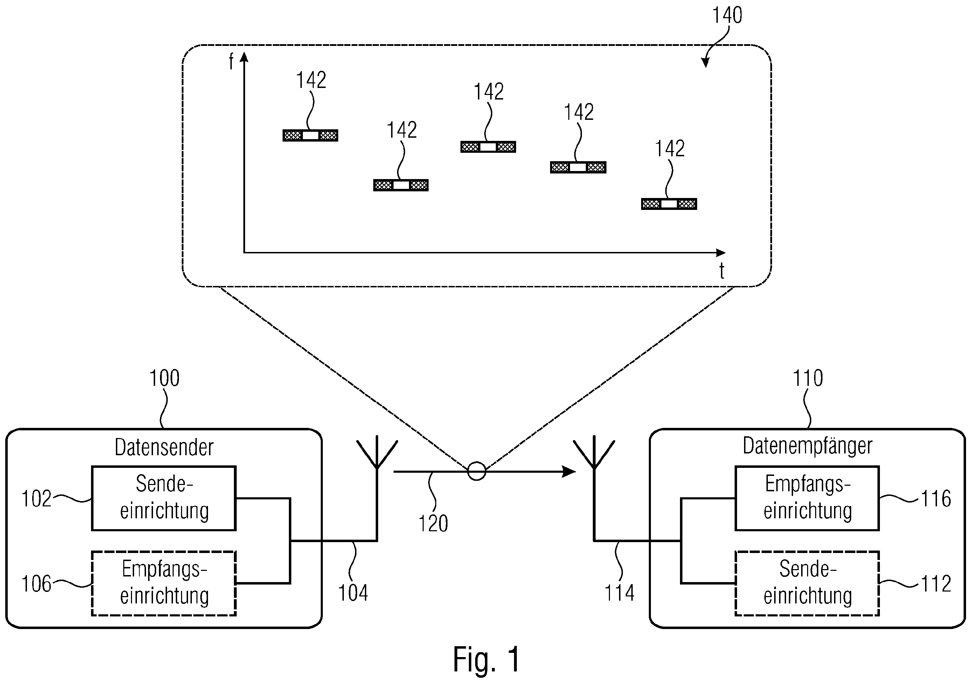

Fig. 1 zeigt ein schematisches Blockschaltbild eines Systems mit einem Datensender 100 und einem Datenempfänger 110. Der Datensender 100 kann ausgebildet sein, um ein Signal 120 zu senden, wobei das Signal 120 zumindest zwei separate Teil-Datenpakete 142 aufweist. Der Datenempfänger 110 kann ausgebildet sein, um das Signal 120 (oder eine durch den Übertragungskanal modifizierte Version des Signals 120)) zu empfangen, welches die zumindest zwei separaten Teil-Datenpakete 142 aufweist.

Wie in Fig. 1 zu erkennen ist, sind die zumindest zwei separaten Teil-Datenpakete 142 in der Zeit und/oder in der Frequenz voneinander separiert bzw. beabstandet. Die Verteilung der zumindest zwei separaten Teil-Datenpakete 142 in der Zeit und/oder Frequenz kann entsprechend eines Sprungmusters (engl. hopping pattern) 140 erfolgen.

Bei Ausführungsbeispielen kann der Datensender 100 eine Sendeeinrichtung (oder Sendemodul, oder Transmitter) 102 aufweisen, die ausgebildet ist, um das Signal 120 zu senden. Die Sendeeinrichtung 102 kann mit einer Antenne 104 des Datensenders 100 verbunden sein. Der Datensender 100 kann ferner eine Empfangseinrichtung (oder Empfangsmodul, oder Receiver) 106 aufweisen, die ausgebildet ist, um ein Signal zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Bei Ausführungsbeispielen kann der Datenempfänger 110 kann eine Empfangseinrichtung (oder Empfangsmodul, oder Receiver) 116 aufweisen, die ausgebildet ist, um das Signal 120 zu empfangen. Die Empfangseinrichtung 116 kann mit einer Antenne 114 des Datenempfängers 110 verbunden sein. Ferner kann der Datenempfänger 110 eine Sendeeinrichtung (oder Sendemodul, oder Transmitter) 112 aufweisen, die ausgebildet ist, um ein Signal zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

Bei Ausführungsbeispielen kann der Datensender 100 ein Sensorknoten sein, während der Datenempfänger 110 eine Basisstation sein kann. Typischerweise umfasst ein Kommunikationssystem zumindest einen Datenempfänger 110 (Basisstation) und eine Vielzahl von Datensendern (Sensorknoten, wie z.B. Heizungszähler). Natürlich ist es auch möglich, dass der Datensender 100 eine Basisstation ist, während der Datenempfänger 110 ein Sensorknoten ist. Ferner ist es möglich, dass sowohl der Datensender 100 als auch der Datenempfänger 110 Sensorknoten sind. Des Weiteren ist es möglich, dass sowohl der Datensender 100 als auch der Datenempfänger 110 Basisstationen sind.

Der Datensender 100 und der Datenempfänger 110 können ausgebildet sein, um Daten unter Verwendung eines Telegram-Splitting-Verfahrens (dt. Telegrammaufteilungsverfahrens) zu senden bzw. zu empfangen. Hierbei wird ein die Daten aufweisendes Datenpaket (oder Telegramm) in eine Mehrzahl von Teil-Datenpakete (oder Sub-Datenpakte) 142 aufgeteilt und die Teil-Datenpakete 142 entsprechend eines Sprungmusters 140 in der Zeit verteilt und/oder in der Frequenz verteilt von dem Datensender 100 zu dem Datenempfänger 110 übertragen, wobei der Datenempfänger 110 die Teil-Datenpakete 142 wieder zusammenfügt (oder kombiniert), um das eigentliche Datenpaket zu erhalten. Jedes der Teil-Datenpakete 142 enthält dabei nur einen Teil des Datenpakets 120. Das Datenpaket kann ferner kanalcodiert sein, so dass zum fehlerfreien Decodieren des Datenpakets nicht alle Teil-Datenpakete 142 sondern nur ein Teil der Teil-Datenpakete 142 erforderlich ist.

Die zeitliche Verteilung der Mehrzahl von Teil-Datenpaketen 142 kann, wie bereits erwähnt, entsprechend eines Zeit- und/oder Frequenzsprungmusters 140 erfolgen.

Ein Zeitsprungmuster kann eine Abfolge von Sendezeitpunkten oder Sendezeitabständen angeben, mit denen die Teil-Datenpakete gesendet werden. Beispielsweise kann ein erstes Teil-Datenpaket zu einem ersten Sendezeitpunkt (oder in einem ersten Sendezeitschlitz) und ein zweites Teil-Datenpaket zu einem zweiten Sendezeitpunkt (oder in einem zweiten Sendezeitschlitz) gesendet werden, wobei der erste Sendezeitpunkt und der zweite Sendezeitpunkt unterschiedlich sind. Das Zeitsprungmuster kann dabei den ersten Sendezeitpunkt und den zweiten Sendezeitpunkt definieren (oder vorgeben, oder angeben). Alternativ kann das Zeitsprungmuster den ersten Sendezeitpunkt und einen zeitlichen Abstand zwischen dem ersten Sendezeitpunkt und dem zweiten Sendezeitpunkt angeben. Natürlich kann das Zeitsprungmuster auch nur den zeitlichen Abstand zwischen dem ersten Zeitpunkt und dem zweiten Sendezeitpunkt angeben. Zwischen den Teil-Datenpaketen können Sendepausen vorhanden sein in denen nicht gesendet wird. Die Teil-Datenpakete können sich auch zeitlich überlappen (überschneiden).

Ein Frequenzsprungmuster kann eine Abfolge von Sendefrequenzen oder Sendefrequenzsprüngen angeben, mit denen die Teil-Datenpakete gesendet werden. Beispielsweise kann ein erstes Teil-Datenpaket mit einer ersten Sendefrequenz (oder in einem ersten Frequenzkanal) und ein zweites Teil-Datenpaket mit einer zweiten Sendefrequenz (oder in einem zweiten Frequenzkanal) gesendet werden, wobei die erste Sendefrequenz und die zweite Sendefrequenz unterschiedlich sind. Das Frequenzsprungmuster kann dabei die erste Sendefrequenz und die zweite Sendefrequenz definieren (oder vorgeben, oder angeben). Alternativ kann das Frequenzsprungmuster die erste Sendefrequenz und einen Frequenzabstand (Sendefrequenzsprung) zwischen der ersten Sendefrequenz und der zweiten Sendefrequenz angeben. Natürlich kann das Frequenzsprungmuster auch nur den Frequenzabstand (Sendefrequenzsprung) zwischen der ersten Sendefrequenz und der zweiten Sendefrequenz angeben.

Natürlich können die Mehrzahl von Teil-Datenpaketen 142 auch sowohl in der Zeit- als auch in der Frequenz verteilt von dem Datensender 100 zu dem Datenempfänger 110 übertragen werden. Die Verteilung der Mehrzahl von Teil-Datenpaketen in der Zeit und in der Frequenz kann entsprechend einem Zeitfrequenzsprungmuster erfolgen. Ein Zeitfrequenzsprungmuster kann die Kombination aus einem Zeitsprungmuster und einem Frequenzsprungmuster sein, d.h. eine Abfolge von Sendezeitpunkten oder Sendezeitabständen mit denen die Teil-Datenpakete 142 übertragen werden, wobei den Sendezeitpunkten (oder Sendezeitabständen) Sendefrequenzen (oder Sendefrequenzsprünge) zugeordnet sind.

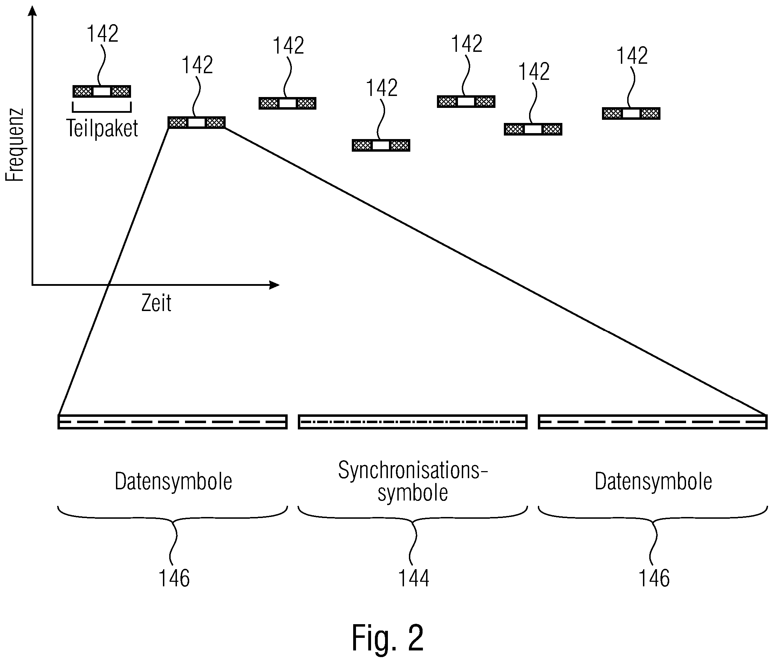

Fig. 2 zeigt in einem Diagramm eine Belegung des Übertragungskanals bei der Übertragung einer Mehrzahl von Teil-Datenpaketen 142 entsprechend einem Zeitfrequenzsprungmuster. Dabei beschreibt die Ordinate die Frequenz und die Abszisse die Zeit.

Wie in Fig. 2 zu erkennen ist, kann das Datenpaket 120 beispielhaft auf n = 7 Teil-Datenpakete 142 aufgeteilt werden und entsprechend eines Zeitfrequenzsprungmusters verteilt in der Zeit und der Frequenz von dem Datensender 100 zu dem Datenempfänger 110 übertragen werden.

Wie in Fig. 2 weiter zu erkennen ist, können die Mehrzahl von Teil-Datenpaketen 142 neben Daten (Datensymbole 146 in Fig. 2) auch Pilotsequenzen (Pilotsymbole (oder Synchronisationssymbole) 144 in Fig. 2) enthalten, basierend auf denen der Datenempfänger 110 die Teil-Datenpakete 142 in einem Empfangssignal 120 oder Empfangsdatenstrom detektieren.

Bei der gleichzeitigen bzw. zeitlich überlappenden Aussendung einer Vielzahl von in Teil-Datenpaketen aufgeteilten Datenpaketen durch eine Vielzahl von Datensendern, steigt die im Datenempfänger erforderliche Rechenleistung zur Detektion und Decodierung der Teil-Datenpakete jedoch erheblich.

Zur Reduktion der für die Detektion und Decodierung erforderlichen Rechenleistung, erfolgt bei Ausführungsbeispielen die Detektion und Decodierung der Teil-Datenpakete getrennt bzw. separat voneinander, wie dies im Folgenden erläutert wird.

## 1.2 Gruppenbildung

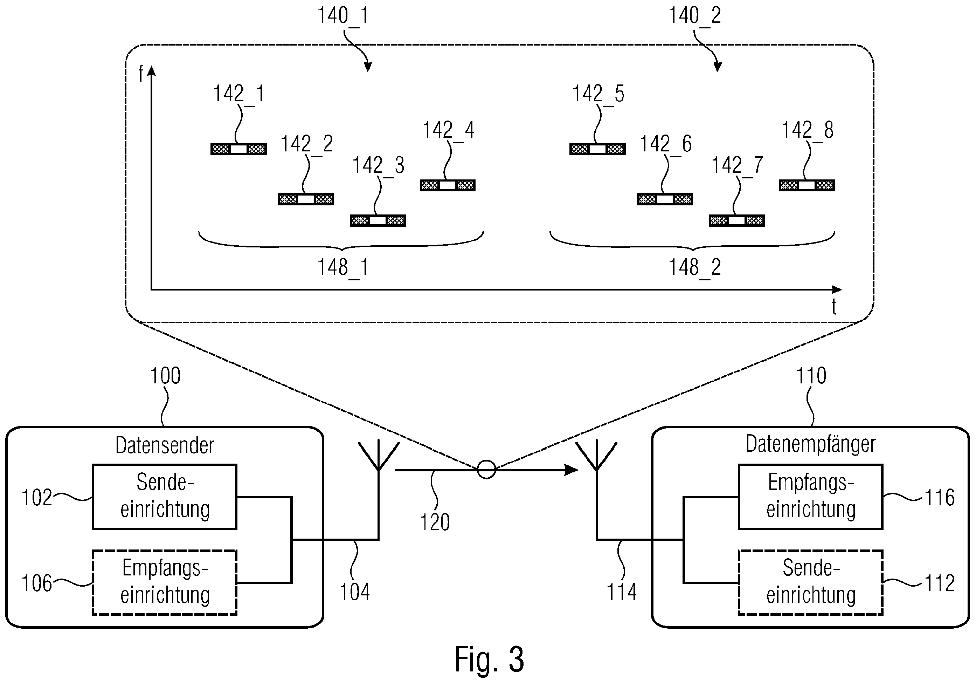

Fig. 3 zeigt ein schematisches Blockschaltbild eines Systems mit einem Datensender 100 und einem Datenempfänger 110. Der Datensender 100 ist ausgebildet, um ein Signal 120 zu senden, das eine Vielzahl von Teil-Datenpaketen 142_1 bis 142_8 aufweist, wobei zumindest zwei Gruppen 148_1 und 148_2 von Teil-Datenpaketen 142_1 bis 142_8 gruppenweise das gleiche relative Gruppensprungmuster 140_1 und 140_2 aufweisen.

Beispielsweise kann, wie in Fig. 3 gezeigt ist, eine erste Gruppe 148_1 von Teil-Datenpaketen (z.B. die Teildatenpakete 142_1 bis 142_4) und eine zweite Gruppe 148_2 von Teil-Datenpaketen (z.B. die Teildatenpakete 142_5 bis 142_8) das gleiche relative Gruppensprungmuster 140_1 und 140_2 aufweisen. Mit anderen Worten, das zweite Gruppensprungsprungmuster 140_2 kann eine in der Zeit und/oder in der Frequenz verschobene Version des ersten Gruppensprungsprungmusters 140_1 sein.

Der Datenempfänger 110 kann ausgebildet, um das Signal 120 (oder eine durch einen Übertragungskanal zwischen Datensender 100 und Datenempfänger 110 modifizierte Version des Signals 120) zu empfangen, wobei das Signal 120 eine Vielzahl von Teil-Datenpaketen 142_1 bis 142_8 aufweist, wobei zumindest zwei Gruppen 148_1 und 148_2 von Teil-Datenpaketen 142_1 bis 142_8 gruppenweise das gleiche relative Gruppensprungmuster 140_1 und 140_2 aufweisen.

In Fig. 3 wird beispielshaft davon ausgegangen, dass die Teil-Datenpakete 142_1 bis 142_8 unter Verwendung von zumindest zwei Frequenz- und Zeitsprungmustern (d.h. kombinierten Frequenzsprungmustern und Zeitsprungmustern) 140_1 und 140_2 übertragen werden. Natürlich können die Teil-Datenpakete 142_1 bis 142_8 auch nur unter Verwendung von reinen Frequenzsprungmustern oder Zeitsprungmustern übertragen werden.

Wie in Fig. 3 zu erkennen ist, kann das zweite Gruppensprungmuster 140_2 eine in der Zeit verschobene Version des ersten Gruppensprungmusters 140_1 sein. Alternativ kann das zweite Gruppensprungmuster 140_2 auch eine in der Frequenz verschobene Version des ersten Gruppensprungmuster 140_1 sein. Natürlich kann das zweite Gruppensprungmuster 140_2 auch eine in der Zeit und der Frequenz verschobene Version des ersten Gruppensprungmusters 140_1 sein.

In Fig. 3 umfasst das Signal 120 beispielhaft n = 8 Teil-Datenpakete 142_1 bis 142_n, die unter Verwendung von m = 2 Zeitsprungmustern und/oder Frequenzsprungmustern 140_1 bis 140_m übertragen werden. Bei Ausführungsbeispielen kann eine Anzahl n der Teil-Datenpakete ein ganzzahliges Vielfaches einer Anzahl m von Zeitsprungmustern und/oder Frequenzsprungmustern sein, so dass die Teil-Datenpakete gleichmäßig auf die Anzahl m von Zeitsprungmustern und/oder Frequenzsprungmustern aufgeteilt werden können, wobei die Anzahl n der Teil-Datenpakete 142_1 bis 142_n zumindest doppelt so groß ist wie die Anzahl m der Zeitsprungmuster und/oder Frequenzsprungmuster 140_1 bis 140_m, so dass in jedem Zeitsprungmuster und/oder Frequenzsprungmuster 140_1 bis 140_m mindestens zwei Teil-Datenpakete übertragen werden.

Die Daten können dabei so übertragen werden, dass zwischen den Teil-Datenpaketen 142_1 bis 142_n Sendepausen (Pausen, in denen der Datensender nicht sendet) vorhanden sind.

Die Daten können ein Telegramm sein, dass in die Mehrzahl von Teil-Datenpaketen 142_1 bis 142_m aufgeteilt ist, wobei jedes der Mehrzahl von Teil-Datenpakete 142_1 bis 142_m kürzer ist als das Telegramm.

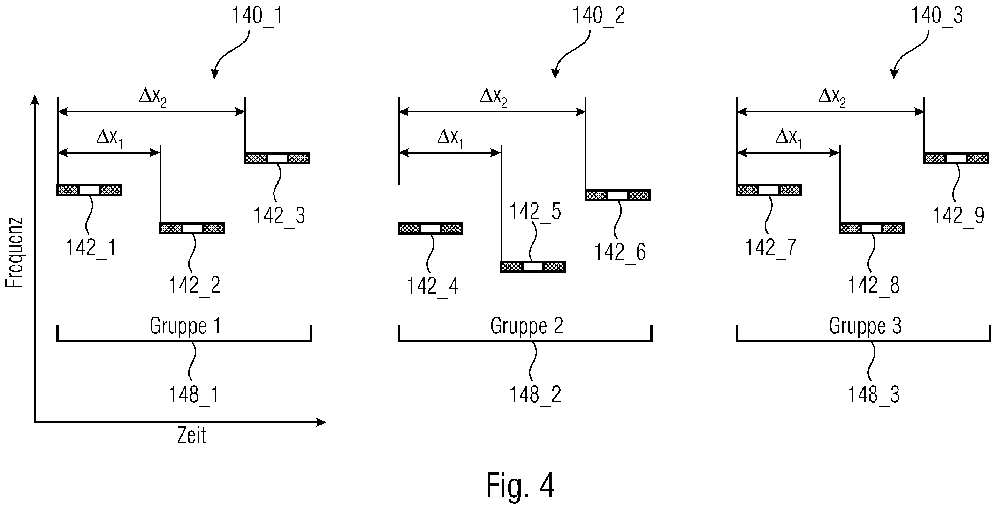

Fig. 4 zeigt in einem Diagramm eine Belegung eines Übertragungskanals bei der Übertragung einer Vielzahl von Teil-Datenpaketen 142_1 bis 142_n, wobei drei Gruppen von Teil-Datenpaketen der Vielzahl von Teil-Datenpaketen gruppenweise das gleiche relative Gruppensprungmuster 140_1, 140_2 und 140_3 aufweisen.

Wie in Fig. 4 beispielhaft zu erkennen ist, können neun Teil-Datenpakete 142_1 bis 142_9 in drei Gruppen 148_1 bis 148_3 unterteilt werden, so dass jede der drei Gruppen 148_1 bis 148_3 drei der Teil-Datenpakete 142_1 bis 142_9 umfasst. Das zweite Gruppensprungmuster 140_2 kann dabei eine in der Zeit und Frequenz verschobene Version des ersten Gruppensprungmuster 140_1 sein, wobei das dritte Gruppensprungmuster 140_3 eine in der Zeit und Frequenz verschobene Version des ersten Gruppensprungmuster 140_1 sein kann. Die Zeitabstände $\Delta x1$ und $\Delta x2$ und die Frequenzabstände zwischen den Teil-Datenpaketen sind in den drei Gruppensprungmustern 140_1 bis 140_3 gleich. Die Teil-Datenpakete 142_1 bis 142_9 oder zumindest ein Teil der Teil-Datenpakete können mit Synchronisationssequenzen oder Teilsynchronisationssequenzen (aufgeteilte Synchronisationssequenz) zur Synchronisation und/oder Detektion am Datenempfänger versehen sein.

Mit anderen Worten, Fig. 4 zeigt eine Unterteilung von Teil-Datenpaketen 142_1 bis 142_n zu Gruppen 148_1 bis 148_m. Fig. 4 zeigt dieses Verfahren beispielhaft für neun Teil-Datenpakete 142_1 bis 142_9 welche zu drei Gruppen 148_1 bis 148_3 mit der Größe von drei Teil-Datenpaketen zusammengefasst wurden. Innerhalb dieser Gruppen 148_1 bis 148_3 ist das Gruppensprungmuster für die Zeit und/oder Frequenz gleich. Zwischen den Gruppen 148_1 bis 148_3 können die Pausen und Frequenzen unterschiedlich sein.

Bei der gleichzeitigen bzw. zeitlich überlappenden Aussendung einer Vielzahl von in Teil-Datenpaketen aufgeteilten Datenpaketen durch eine Vielzahl von Datensendern, steigt die im Datenempfänger erforderliche Rechenleistung zur Detektion der Teil-Datenpakete jedoch erheblich.

Zur Reduktion der für die Detektion und Decodierung erforderlichen Rechenleistung, erfolgt bei Ausführungsbeispielen eine mehrstufige Korrelation zur Detektion der Teil-Datenpakete 142, wie dies im Folgenden erläutert wird.

## 2. Ausführungsbeispiele des Datenempfängers (Systembeschreibung)

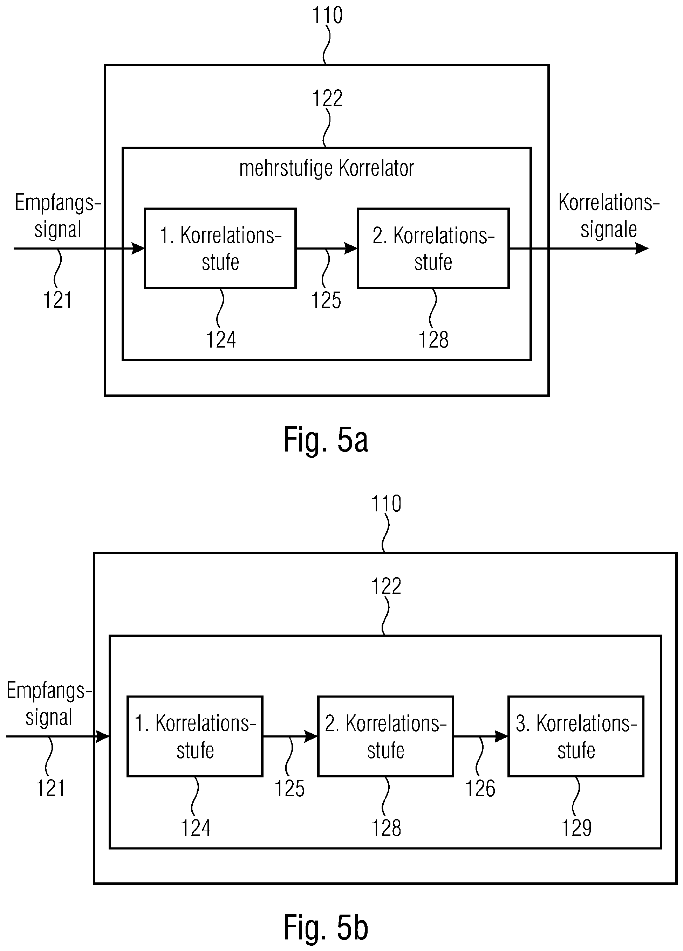

Fig. 5a zeigt ein schematisches Blockschaltbild eines Datenempfängers 110, gemäß einem Ausführungsbeispiel. Der Datenempfänger 110 kann ausgebildet sein, um ein Signal 120 zu empfangen, das eine Mehrzahl von Teil-Datenpaketen 142 aufweist, die z.B. entsprechend eines Sprungmusters in der Zeit- und Frequenz verteilt sind, wobei die Mehrzahl von Teil-Datenpaketen 142 jeweils einen Teil eines Datenpakets aufweisen.

Wie in Fig. 5a zu erkennen ist, kann der Datenempfänger 110 (oder ein Paket-Detektor des Datenempfängers 110) einen mehrstufigen Korrelator 122 aufweisen, der ausgebildet sein kann, um eine mehrstufige Korrelation durchzuführen, um die Teil-Datenpakete 142 in dem empfangenen Signal 121 zu detektieren, wobei eine zweite Korrelationsstufe 128 des mehrstufigen Korrelators 122 basierend auf Korrelationsergebnissen 125 einer ersten Korrelationsstufe 124 des mehrstufigen Korrelators 122 arbeitet.

Bei Ausführungsbeispielen kann der mehrstufige Korrelator 122 ausgebildet sein, um eine mehrstufige Korrelation durchzuführen, im Detail, eine erste Korrelation des empfangenen Signals 121 in der ersten Korrelationsstufe 124 und eine zweite Korrelation einer aufbereiteten Version des empfangenen Signals 125 (= Korrelationsergebnisse der ersten Korrelationsstufe) in der zweiten Korrelationsstufe 128.

Bei Ausführungsbeispielen kann der mehrstufige Korrelator 122 ausgebildet sein, um die Teil-Datenpakete 142 basierend auf Präambeln derselben in dem empfangenen Signal 121 zu detektieren. Alternativ kann der mehrstufige Korrelator 122 ausgebildet sein, um die Teil-Datenpakete 142 mittels eines blinden Schätzverfahrens zu detektieren.

Fig. 5b zeigt ein schematisches Blockschaltbild eines Datenempfängers 110, gemäß einem weiteren Ausführungsbeispiel der vorliegenden Erfindung. Der Datenempfänger 110 kann ausgebildet sein, um ein Signal 120 zu empfangen, das eine Mehrzahl von Teil-Datenpaketen 142 aufweist, die z.B. entsprechend eines Sprungmusters in der Zeit- und Frequenz verteilt sind, wobei die Mehrzahl von Teil-Datenpaketen 142 jeweils einen Teil eines Datenpakets aufweisen.

Wie in Fig. 5b zu erkennen ist, kann der Datenempfänger 110 (oder ein Paket-Detektor des Datenempfängers 110) einen mehrstufigen Korrelator 122 aufweisen, der ausgebildet sein kann, um eine mehrstufige Korrelation durchzuführen, um die Teil-Datenpakete 142 in dem empfangenen Signal 121 zu detektieren. Der mehrstufige Korrelator 122 kann eine erste Korrelationsstufe 124, eine zweite Korrelationsstufe 128 und eine dritte Korrelationsstufe 129 aufweisen, wobei die zweite Korrelationsstufe 128 basierend auf Korrelationsergebnissen 125 der ersten Korrelationsstufe 124 arbeitet, wobei die dritte Korrelationsstufe 129 basierend auf Korrelationsergebnissen 126 der zweiten Korrelationsstufe 128 arbeitet.

Ausführungsbeispiele beziehen sich auf eine Präambel-Korrelation und die Detektion von Datenpaketen im Empfänger 110 eines Funkübertragungssystems. Der deutschsprachige Begriff "Präambel" für die zur Korrelation verwendeten Symbole wird hier unabhängig von der Anordnung der Präambel innerhalb der Datenpakete verwendet und umfasst deshalb die in der englischsprachigen Literatur mit *Preamble, Midamble* und *Postamble* bezeichneten Fälle. Im Folgenden wird das Verfahren am Beispiel einer exakt in der Mitte angeordneten Präambel erläutert, es gilt jedoch für andere Anordnungen in gleicher Weise.

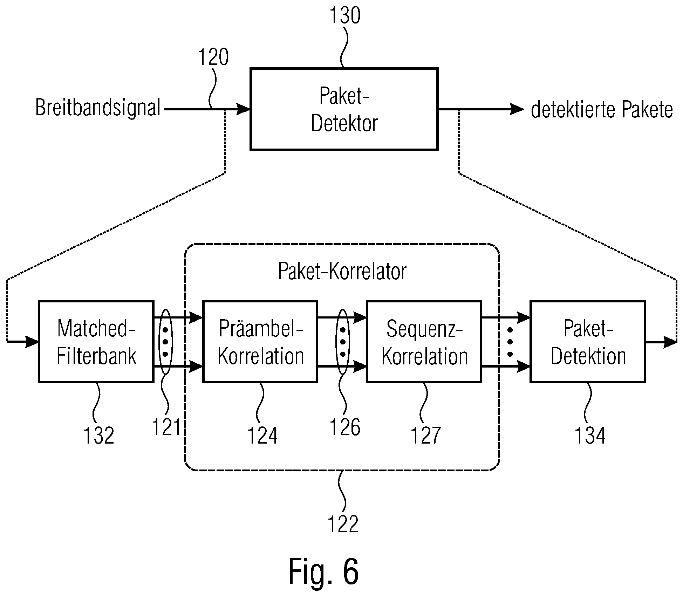

Fig. 6 zeigt ein schematisches Blockschaltbild eines Paket-Detektors 130 eines Datenempfängers 110, gemäß einem Ausführungsbeispiel. Der Paket-Detektor 130 kann eine (optionale) Filterbank (z.B. eine Matched-Filterbank) 132, den mehrstufigen Korrelator 122 mit der ersten Korrelationsstufe (z.B. Präambel-Korrelation) 124 und weiteren Korrelationsstufen (z.B. Sequenz-Korrelation) 127, sowie eine Paket-Detektion 134 aufweisen. Die weiteren Korrelationsstufen 127 setzen sich entweder aus einer zweiten Korrelationsstufe 128 gemäß Fig. 5a oder aus einer zweiten 128 und einer dritten 129 Korrelationsstufe gemäß Fig. 5b zusammen.

Mit anderen Worten, wie in Fig. 6 zu erkennen ist, ist der Paket-Korrelator (mehrstufiger Korrelator) 122 Bestandteil eines Paket-Detektors 130. Der Paket-Detektor 130 kann beispielhaft die folgenden Komponenten aufweisen:

- eine (optionale) Matched-Filterbank 132 zur Zerlegung eines Breitbandsignals 120 in parallel zu verarbeitende Kanäle;
- eine Präambel-Korrelation 124 zur kanalweisen Korrelation mit den bekannten Symbolen der Präambel;
- eine Sequenz-Korrelation 127 zur Zusammenfassung der Ergebnisse bei Paketen, die aus mehreren Teil-Paketen mit jeweils eigener Präambel bestehen;
- eine Paket-Detektion 134 zur Detektion der Pakete.

Die Präambel-Korrelation 124 und die Sequenz-Korrelation 127 bilden den Paket-Korrelator 122.

Wie in Fig. 6 zu erkennen ist, kann das empfangene Signal 121 eine Mehrzahl von Kanälen aufweisen.

Bei Ausführungsbeispielen kann der Datenempfänger 110 beispielsweise die Filterbank 132 aufweisen, um basierend auf dem Signal 120 (z.B. ein Breitbandsignal in Fig. 6) ein empfangenes Signal 121 (z.B. zu verarbeitendes Signal) mit einer Mehrzahl von Kanälen zu erhalten. Anstelle der Filterbank 132 kann der Datenempfänger 110 auch eine Gruppe von Schmalbandempfängern aufweisen, um basierend auf dem Signal 120 ein empfangenes Signal 121 mit einer Mehrzahl von Kanälen zu erhalten. Beispielsweise können die Empfangsfrequenzen der Mehrzahl von Schmalbandempfängern so eingestellt werden, dass sich dieselben Signale ergeben wie am Ausgang der in Fig. 6 gezeigten Filterbank 132.

In der nachfolgenden Beschreibung werden die Mehrzahl von Kanälen des empfangen Signals 121 (z.B. zu verarbeitendes Signal) als Teilbandsignale bezeichnet. Die Teilbandsignale können dabei unterschiedliche Bänder des Signals 120 aufweisen, wie diese gewonnen werden ist unerheblich.

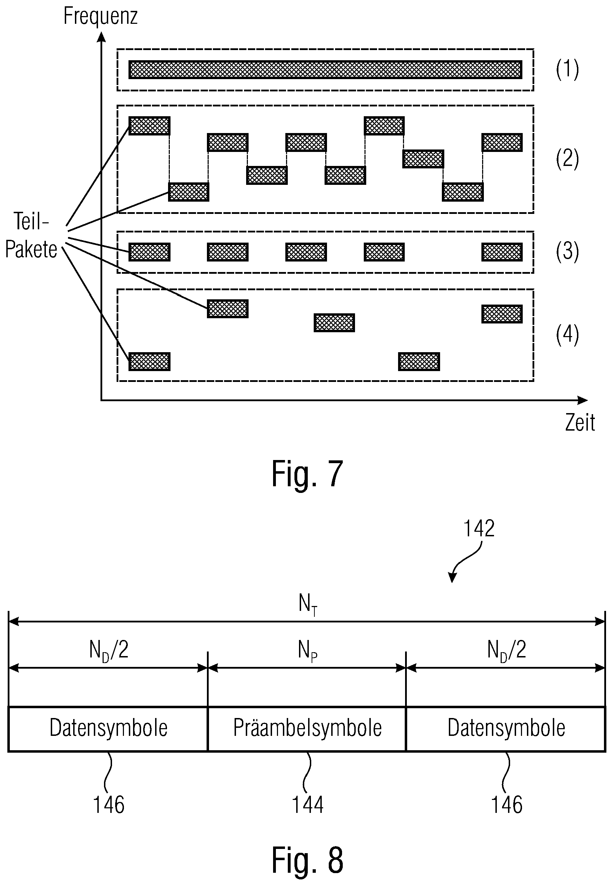

Fig. 7 zeigt in einem Diagramm eine Belegung des Übertragungskanals bei der Übertragung von Datenpaketen unter Verwendung von vier unterschiedlichen Übertragungsverfahren.

Dabei beschreibt in Fig. 7 die Ordinate die Frequenz und die Abszisse die Zeit. Mit anderen Worten, Fig. 7 zeigt vier mögliche Verfahren zur Übertragung eines einzelnen Paketes,

Ein erstes Übertragungsverfahren (Fall 1) umfasst eine kontinuierliche Übertragung eines Datenpakets bei konstanter Frequenz.

Ein zweites Übertragungsverfahren (Fall 2) umfasst eine kontinuierliche Übertragung eines Datenpakets in Verbindung mit einem Frequenzsprung-Verfahren.

Ein drittes Übertragungsverfahren (Fall 3) umfasst eine diskontinuierliche Übertragung eines Datenpakets (Telegramm-Splitting) bei konstanter Frequenz.

Ein viertes Übertragungsverfahren (Fall 4) umfasst eine diskontinuierliche Übertragung eines Datenpakets (Telegramm-Splitting) in Verbindung mit einem Frequenzsprung-Verfahren.

Ausführungsbeispiele des Datenempfängers 110 sind für alle vier Verfahren relevant, wenn eine Vielzahl von Datenpaketen empfangen werden sollen, wenn der Datenempfänger 110 eine Vielzahl von Datenpaketen empfangen muss, die von verschiedenen Datensendern 100 asynchron und auf verschiedenen Frequenzen innerhalb eines zugewiesenen Frequenzbandes ausgesendet werden. Dadurch weist das Breitbandsignal 120 am Eingang eine wesentlich höhere Bandbreite auf als die Teil-Datenpakete 142.

Besonders relevant werden Ausführungsbeispiele des Datenempfängers 110 im Fall 4, der ein besonders hohes Maß an parallelen asynchronen Paketübertragungen ermöglicht. In diesem Fall enthält jedes Teil-Datenpaket 142 eine eigene Präambel. Die zeit- und frequenzmäßige Abfolge der Teil-Datenpakete 142 wird im Folgenden als (Teil-Datenpaket-) Sequenz bezeichnet. Der Durchsatz des Übertragungssystems kann weiter erhöht werden, indem verschiedene Datensender 100 verschiedene Sequenzen verwenden; dadurch nimmt die Wahrscheinlichkeit für Kollisionen der Teil-Datenpakete 142 verschiedener Datensender 100 ab.

Hinzu kommt, dass in den Datensendern 100 aus Kostengründen Frequenzgeneratoren mit relativ hoher Toleranz verwendet werden. Dadurch tritt zwischen Datensender 100 und Datenempfänger 110 ein Frequenzversatz auf, der ein Vielfaches der Symbolrate $f_{sym}$ der Teil-Datenpakete betragen kann. Da dieser Effekt die Wahrscheinlichkeit für Paket-Kollisionen ebenfalls verringert, kann der maximale Durchsatz des Übertragungssystems weiter erhöht werden, indem den Sendefrequenzen gezielt eine stochastische Komponente hinzufügt wird. Dadurch sind die Sendefrequenzen im Datenempfänger 110 prinzipiell unbekannt.

Die Detektion der Datenpakete im Datenempfänger kann mit Hilfe der Präambeln in den Teil-Datenpaketen 142 erfolgen. Da die Sendefrequenzen im Datenempfänger 110 unbekannt sind, kann bei Ausführungsbeispielen das zugewiesene Frequenzband mit einer Filterbank (z.B. Matched-Filterbank) 132 in überlappende, parallel zu verarbeitende Kanäle zerlegt werden; dabei können die Abstände $\Delta f_{MF}$ zwischen den Mittenfrequenzen der einzelnen Kanäle nur einen Bruchteil der Symbolrate $f_{sym}$ der Teil-Datenpakete 142 betragen. Werte liegen beispielsweise (z.B. typischerweise) im Bereich $\Delta f_{MF} / f_{sym} = 1/4 \ldots 1/8$. Daraus ergibt sich in Verbindung mit der Bandbreite B des zugewiesenen Frequenzbandes und der Bandbreite $B_T$ eines Teil-Datenpaketes 142 z.B. die Anzahl $N_{CH}$ der parallel zu verarbeitenden Kanäle:

$$N_{CH} = (B - B_T) / \Delta f_{MF} = (4 \ldots 8) \cdot (B - B_T) / f_{sym}$$

### 2.1 Aufbau eines Teil-Datenpakets

Fig. 8 zeigt eine schematische Ansicht eines Aufbaus eines Teil-Datenpakets 142, gemäß einem Ausführungsbeispiel. Das Teil-Datenpaket 142 kann $N_P$ Präambelsymbole 144 und $N_D$ Datensymbole 146 umfassen, wobei die Präambel mittig angeordnet sein kann. Die Gesamtanzahl der Symbole eines Teil-Datenpaketes 142 kann $N_T = N_P + N_D$ betragen.

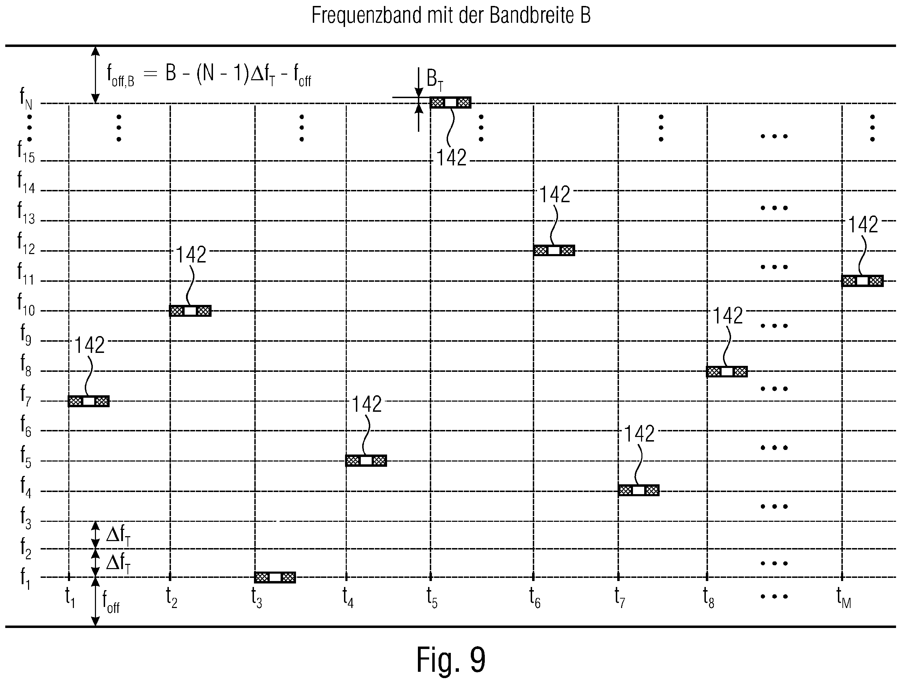

Ein Datenpaket kann aus M Teil-Datenpaketen 142 bestehen, die diskontinuierlich übertragen werden. Fig. 9 zeigt in einem Diagramm die zeit- und frequenzmäßige Anordnung der Teil-Datenpakete 142 eines Datenpakets im zugewiesenen Frequenzband mit der Bandbreite B. Dabei beschreibt die Ordinate die Frequenz und die Abszisse die Zeit.

Die M Zeitpunkte $[t_1, t_2, \ldots, t_M]$ und die N Trägerfrequenzen $[f_1, f_2, \ldots, f_N]$ können frei gewählt werden. In der Praxis kann jedoch beispielsweise für die Frequenzen ein äquidistantes Raster mit der Schrittweite $\Delta f_T$ verwendet werden, da dies die Signalerzeugung im Datensender 100 erleichtert. Im Gegensatz dazu sind die Zeitpunkte nicht äquidistant. Die Anzahl N der Trägerfrequenzen kann kleiner oder gleich der Anzahl M der Teil-Datenpakete 142 sein. Bei N < M werden einzelne Trägerfrequenzen mehrfach verwendet. Dies ist jedoch keine allgemeine Einschränkung, die Anzahl N der Trägerfrequenzen kann auch größer als die Anzahl M der Teil-Datenpakete 142 sein. In diesem Fall sind nicht alle Träger während einer Übertragung besetzt.

Der Abstand $f_{off}$ zwischen dem unteren Ende des Frequenzbandes und der Frequenz $f_1$ ist aufgrund der ungenauen Frequenzerzeugung in den Datensendern und der bereits genannten stochastischen Komponente in den Sendefrequenzen variabel und kann z.B. mindestens der halben Bandbreite $B_T$ eines Teil-Datenpaketes 142 entsprechen, damit das Teil-Datenpaket mit der Trägerfrequenz $f_1$ noch vollständig innerhalb des Frequenzbandes liegt. Der resultierende Abstand $f_{off,B}$ zwischen der Frequenz $f_N$ und dem oberen Ende des Frequenzbandes kann ebenfalls z.B. mindestens der halben Bandbreite $B_T$ entsprechen, damit das Teil-Datenpaket 142 mit der Trägerfrequenz $f_N$ noch vollständig innerhalb des Frequenzbandes liegt. Daraus folgt z.B.:

$$\min(f_{off}) = B_T / 2$$

$$\max(f_{off}) = B - B_T / 2 - (N - 1) \cdot \Delta f_T$$

Der Variationsbereich von $f_{off}$ hat z.B. eine Breite von:

$$\Delta f_{off} = \max(f_{off}) - \min(f_{off}) = B - B_T - (N - 1) \cdot \Delta f_T$$

Die Sequenz $S_P$ eines Datenpaketes kann z.B. durch die Folge der Indices der Frequenzen bezüglich der Zeitpunkte $[t_1, t_2, \ldots, t_M]$ definiert werden. In Fig. 9 gilt beispielhaft:

$$S_P = [\, 7, 10, 1, 5, (N), 12, 4, 8, \ldots, 11 \,]$$

Für N < M treten einzelne Indices mehrfach auf.

Bei vollkommen freier Wahl der Folge der Indices in der Sequenz $S_P$ ergibt sich ein hoher Rechenaufwand im Paket-Korrelator (mehrstufigen Korrelator) 122. Bei Ausführungsbeispielen können Sequenzen verwendet werden, die aus gleichartigen, frequenzmäßig gegeneinander verschobenen Gruppen aufgebaut sind. Dazu kann die Anzahl M der Teil-Datenpakete 142 als Produkt der Anzahl $M_G$ der Teil-Datenpakete 142 einer Gruppe und der Anzahl $N_G$ der Gruppen dargestellt werden:

$$M = N_G \cdot M_G$$

Dadurch kann die in Fig. 6 dargestellte Sequenz-Korrelation 127 in eine Gruppen-Korrelation (zweite Korrelationsstufe 128) und eine nachfolgende Gruppensequenz-Korrelation (dritte Korrelationsstufe 129) aufgespaltet werden. Die $M_G$ Indices der Gruppe $S_G$ können dabei Werte im Bereich $[1, ... , N - X]$ annehmen. Die $N_G$ Werte der Gruppensequenz $S_{PG}$ können dann Werte im Bereich $[0, ... , X]$ annehmen, so dass die Addition eines beliebigen Wertes aus der Gruppe $S_G$ und eines beliebigen Wertes aus der Gruppensequenz $S_{PG}$ immer einen Wert im Bereich $[1, ... , N]$ ergibt. Durch geeignete Wahl der Parameter $M_G$, $N_G$ und X kann der Rechenaufwand im Paket-Korrelator (mehrstufigen Korrelator) 122 angepasst werden. Nach Möglichkeit kann

$$X = N_G - 1$$

gewählt werden; dadurch kann die Gruppensequenz $S_{PG}$ so gewählt werden, dass sie alle möglichen Werte genau einmal enthält. Für

$$X < N_G - 1$$

treten in der Gruppensequenz einzelne Werte mehrfach auf.

Beispiel:

$$N = 20, M = 24, M_G = 3, N_G = 8, X = 7$$

$$S_G = [\, 1, 13, 7\, ]$$

$$S_{PG} = [\, 0, 5, 3, 6, 1, 7, 4, 2\, ]$$

$$\min(S_G) + \min(S_{PG}) = 1$$

$$\max(S_G) + \max(S_{PG}) = N = 20$$

Für die normierten Bandbreiten der Gruppe und der Gruppensequenz gilt z.B.:

$$B_{G,norm} = \max(S_G) - \min(S_G) = N - X - 1$$

$$B_{PG,norm} = \max(S_{PG}) - \min(S_{PG}) = X$$

Es kann $M_G < N_G$ gelten, d.h. die Länge einer Gruppe kann geringer sein als die Anzahl der Gruppen. In diesem Fall nimmt der Rechenaufwand mit abnehmendem Wert für X ab.

Der Abstand $\Delta f_T$ zwischen benachbarten Frequenzen kann auf die Symbolrate $f_{sym}$ bezogen werden:

$$\Delta f_T = M_\Delta \cdot f_{sym}$$

Für $M_\Delta$ kann beispielsweise ein ganzzahliger Wert gewählt werden, damit die Frequenzerzeugung in den Sendern und Empfängern möglichst einfach gestaltet werden kann.

Die Zeitpunkte $[t_1, t_2, ... , t_M]$ können auf den Zeitpunkt $t_1$ bezogen werden:

$$t_P = [\Delta t_1, \Delta t_2, \ldots, \Delta t_M] = [t_1, t_2, \ldots, t_M] - t_1 = [0, t_2 - t_1, \ldots, t_M - t_1]$$

Die Werte können so gewählt werden, dass sich für die Abstände Vielfache der Symboldauer $T_{sym} = 1/f_{sym}$ ergeben. Damit erhält man für die normierten Abstände

$$T_P = t_P / T_{sym} = f_{sym} \cdot t_P = [0, n_2, n_3, \ldots, n_M]$$

ganzzahlige Werte. Dies trägt ebenfalls wieder zur Vereinfachung der Frequenzerzeugung in den Sendern und Empfängern bei (Hinweise: Die Frequenzerzeugung umfasst die Trägerfrequenzerzeugung und die Taktfrequenzerzeugung, wobei hier die Taktfrequenzerzeugung gemeint ist und weiter oben die Trägerfrequenzerzeugung, wobei für beides wird der Begriff "Frequenzerzeugung" als Oberbegriff verwendet wird). Durch die Bildung gleichartiger Gruppen tritt auch hier wieder eine Aufspaltung in eine Gruppe $T_G$ mit der Länge $M_G$ und eine Gruppensequenz $T_{PG}$ mit der Länge $N_G$ auf.

Beispiel:

$$M = 12, M_G = 3, N_G = 4$$

$$T_P = [\ \underline{0}, 33, 60, \underline{95}, 128, 155, \underline{188}, 221, 248, \underline{290}, 323, 350\ ]$$

$$T_G = [\ 0, 33, 60\ ]$$

$$T_{PG} = [\ 0, 95, 188, 290\ ]$$

Zur Verringerung der Wahrscheinlichkeit für Kollisionen von Teil-Datenpaketen 142 verschiedener Datensender 100 können die Sender in $N_S$ Sendergruppen eingeteilt werden, die verschiedene Gruppensequenzen $S_{PG,i}$ und $T_{PG,i}$ mit i = 1 ... $N_S$ verwenden. Dadurch erfolgt die Gruppensequenz-Korrelation $N_S$-fach parallel. In diesem Fall führt ein geringerer Wert für den Parameter X zu einer besonders ausgeprägten Reduktion des Rechenaufwands.

## 2.2 Aufbau des Korrelators

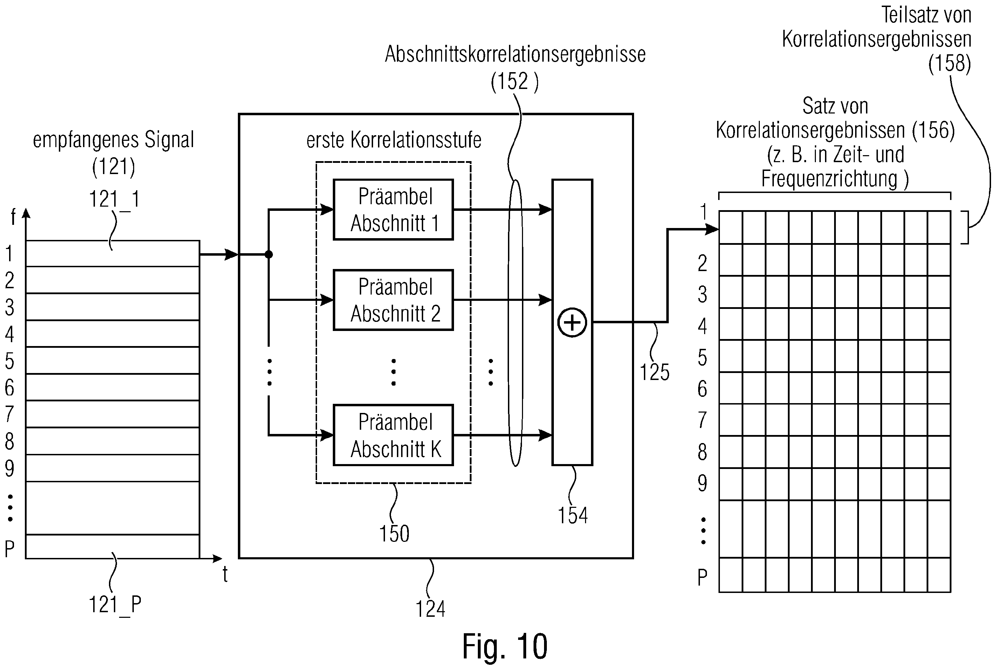

Fig. 10 zeigt ein schematisches Blockschaltbild einer ersten Korrelationsstufe 124 des mehrstufigen Korrelators 122 des Datenempfängers 110, gemäß einem Ausführungsbeispiel.

Die erste Korrelationsstufe 124 kann ausgebildet sein, um das empfangene Signal 121 oder eine davon abgeleitete Version in der Präambelabschnittskorrelation 150 mit K Präambelabschnitten zu korrelieren, die mit unterschiedlichen (z.B. sich überlappenden oder aneinander angrenzenden) Abschnitten der Präambeln (= Präambelabschnitten) der Teil-Datenpakete 142 korrespondieren (z.B. übereinstimmen), um K Abschnittskorrelationsergebnisse 152 (z.B. Abschnittskorrelationsamplituden) zu erhalten, beispielsweise ein Abschnittskorrelationsergebnis (z.B. eine Korrelationsamplitude) pro Präambelabschnitt. Ferner kann die erste Korrelationsstufe 124 ausgebildet sein, um die Mehrzahl von Abschnittskorrelationsergebnissen 152 (z.B. pro Sample) zu kombinieren 154 (z.B. zu addieren oder inkohärent zu addieren (z.B. durch Betragsbildung)), um für das empfangene Signal 121 einen ersten Satz von Korrelationsergebnissen 156 (= Korrelationsergebnisse 125) der ersten Korrelationsstufe 124 zu erhalten.

Wie in Fig. 10 angedeutet ist, können am Eingang der ersten Korrelationsstufe P Teilbandsignale anliegen, wobei die erste Korrelationsstufe 124 ausgebildet sein kann, um ein Teilbandsignal (z.B. das Teilbandsignal 121_1) von P Teilbandsignalen, in der Präambelabschnittskorrelation 150 mit den K Präambelabschnitten zu korrelieren, um K Abschnittskorrelationsergebnisse 152 (z.B. Abschnittskorrelationsamplituden) für das Teilbandsignal (z.B. das Teilbandsignal 121_1) zu erhalten, und um die K Abschnittskorrelationsergebnisse 152 zu kombinieren 154, um für das Teilbandsignal (z.B. das Teilbandsignal 121_1) einen Satz von Korrelationsergebnissen 156 zu erhalten.

Bei Ausführungsbeispielen kann die erste Korrelationsstufe 124 ausgebildet sein, um zumindest zwei Teilbandsignale der P Teilbandsignale (z.B. mehrere Teilbandsignale der P Teilbandsignale oder alle Teilbandsignale der P Teilbandsignalen) jeweils mit den K Teil-Präambeln zu korrelieren, um für jedes Teilbandsignal der zumindest zwei Teilbandsignale einen Teilsatz von Korrelationsergebnissen 158 (z.B. ein eindimensionales Array von (normierten) Korrelationsamplituden) zu erhalten, wobei die erste Korrelationsstufe 124 ausgebildet sein kann, um als Korrelationsergebnisse 125 der ersten Korrelationsstufe einen ersten Satz von Korrelationsergebnissen 156 bereitzustellen, der die Teilsätze von Korrelationsergebnissen 158 aufweist, beispielsweise kann der erste Satz von Korrelationsergebnissen 156 die eindimensionalen Teilsätze von Korrelationsergebnissen 158 aufweisen.

Der erste Satz von Korrelationsergebnissen 156 der ersten Korrelationsstufe 124 kann somit ein zweidimensionales Array von Korrelationsergebnissen sein, wobei eine erste Dimension des zweidimensionalen Arrays von Korrelationsergebnissen (z.B. eine Abfolge von) Abtastzeitpunkte der Teilbandsignale beschreibt, wobei eine zweite Dimension des zweidimensionalen Arrays von Korrelationsergebnissen die Mehrzahl von Teilbändern beschreibt.

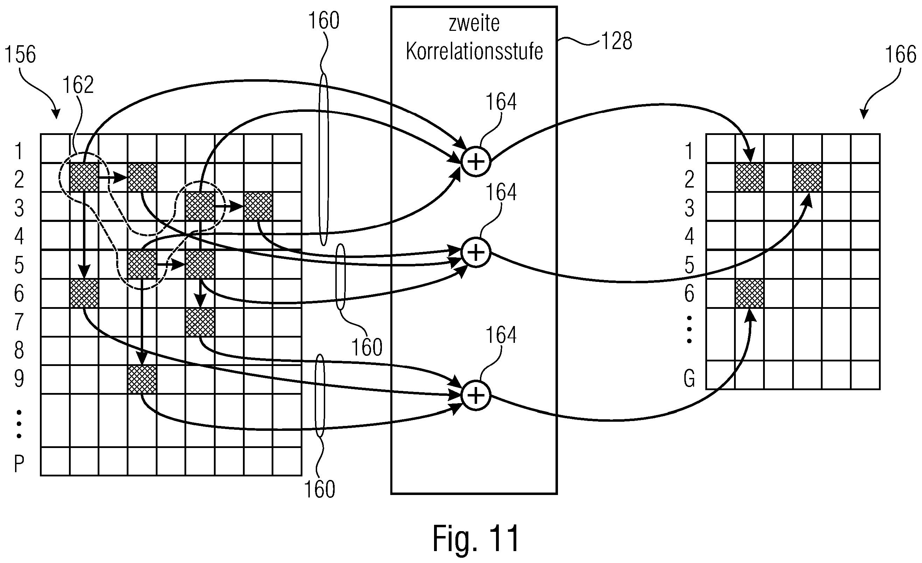

Fig. 11 zeigt ein schematisches Blockschaltbild der zweiten Korrelationsstufe 128 des mehrstufigen Korrelators des Datenempfängers 110, gemäß einem Ausführungsbeispiel.

Wie bereits oben erwähnt, können zumindest zwei Gruppen von Teil-Datenpaketen 148_1 und 148_2 gruppenweise das gleiche relative Gruppensprungmuster 140_1, 140_2 aufweisen, beispielsweise so dass Teil-Datenpakete 142 einer ersten Gruppe von Teil-Datenpakten das gleiche relative Gruppensprungmuster aufweisen, wie Teil-Datenpakete 142 einer zweiten Gruppe von Teil-Datenpaketen 148_2 (vgl. Fig. 3).

Die zweite Korrelationsstufe 128 kann ausgebildet sein, um aus dem ersten Satz von Korrelationsergebnissen 156 (z.B. dem zwei dimensionalen Array von Korrelationsergebnissen) der ersten Korrelationsstufe 124 Gruppen von Korrelationsergebnissen 160 basierend auf einem Gruppenkorrelationsmuster 162, das von dem Gruppen-Sprungmuster 140_1, 140_2 abgeleitet ist, auszuwählen und gruppenweise zu kombinieren 164 (z.B. zu addieren), um einen zweiten Satz von Korrelationsergebnissen 166 der zweiten Korrelationsstufe 128 zu erhalten.

Hierbei kann das Gruppenkorrelationsmuster 162 Zeit- und Frequenzabstände der Korrelationsergebnisse des zwei dimensionalen Arrays von Korrelationsergebnissen 156 der ersten Korrelationsstufe 124 angeben, die den relativen Zeit- und Frequenzabständen des Gruppen-Sprungmusters 140_1, 140_2 der Gruppen von Teil-Datenpaketen 142 entsprechen.

Wie in Fig. 11 zu erkennen ist, kann die zweite Korrelationsstufe 128 ausgebildet sein, um die Gruppen von Korrelationsergebnissen 160 aus dem ersten Satz von Korrelationsergebnissen 156 der ersten Korrelationsstufe 124 in Zeit- und oder Frequenzrichtung basierend auf dem Gruppenkorrelationsmuster 162 auszuwählen.

Der zweite Satz von Korrelationsergebnissen 166 der zweiten Korrelationsstufe 128 kann ein zwei dimensionales Array von Korrelationsergebnissen sein, wobei eine erste Dimension des zweidimensionalen Arrays von Korrelationsergebnissen 166 eine zeitliche Lage der Gruppe von Teil-Datenpaketen 142 beschreibt, wobei eine zweite Dimension des zweidimensionalen Arrays von Korrelationsergebnissen 166 eine Frequenzlage der Gruppe von Teil-Datenpaketen 142 beschreibt.

Im Folgenden werden Ausführungsbeispiele des mehrstufigen Korrelators 122 beschrieben, der drei Korrelationsstufen aufweist. Hierbei kann die dritte Korrelationsstufe im Wesentlichen der zweiten Korrelationsstufe 128 entsprechen, mit dem Unterschied, dass die dritte Korrelationsstufe Korrelationsergebnisse der zweiten Korrelationsstufe basierend auf einem Gruppensequenzkorrelationsmuster anstatt eines Gruppenkorrelationsmusters gruppiert, wobei das Gruppensequenzsprungmuster relative Zeit- und Frequenzabstände zwischen den Gruppen von Teil-Datenpaketen 148_1 und 148_2 (vgl. Fig. 3) angibt.

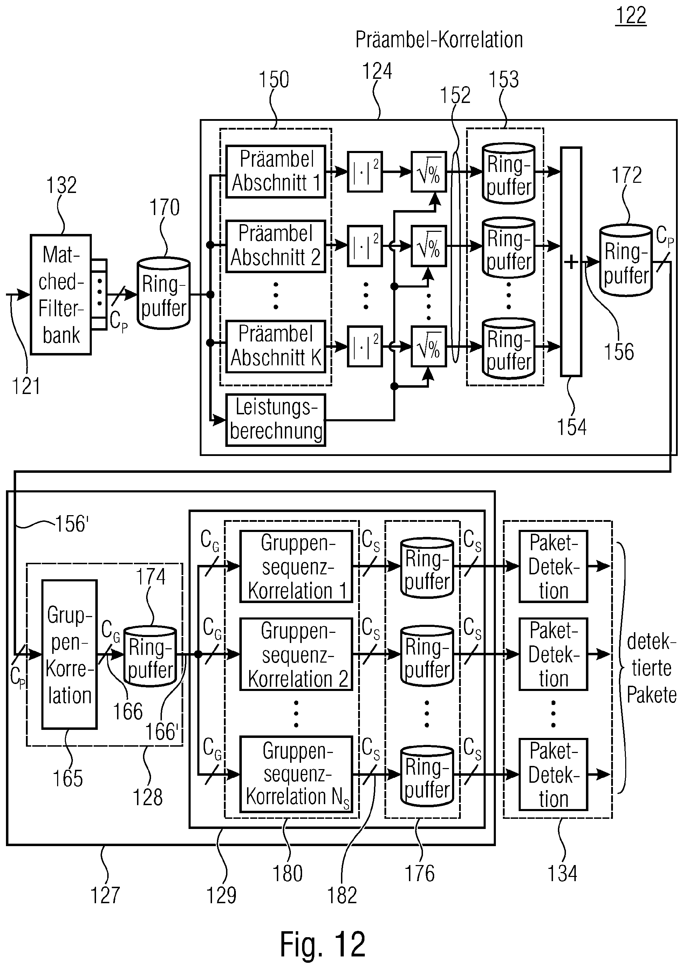

Fig. 12 zeigt ein schematisches Blockschaltbild eines mehrstufigen Korrelators 122 eines Datenempfängers 110, gemäß einem Ausführungsbeispiel. Der mehrstufige Korrelator 122 umfasst drei Korrelationsstufen, im Detail, eine erste Korrelationsstufe 124 (vgl. Fig. 10), eine zweite Korrelationsstufe 128 (vgl. Fig. 11) und eine dritte Korrelationsstufe 129. Dabei kann die erste Korrelationsstufe 124 eine Präambel-Korrelation übernehmen, während die zweite (128) und die dritte (129) Korrelationsstufe eine Sequenz-Korrelation (127) übernehmen können.

Das Eingangssignal 121 des mehrstufigen Korrelators 122 kann P Teilbandsignale aufweisen. Die P Teilbandsignale können beispielsweise durch die Filterbank (z.B. Matched-Filter) 132 gewonnen werden.

Es sei darauf hingewiesen, dass die am Eingang des mehrstufigen Korrelators 122 anliegenden P Teilbandsignale zwar auf dem Breitbandsignal 120 (siehe Fig. 6) basieren, es jedoch unerheblich ist, wie das Breitbandbandsignal 120, das an der Antenne des Datenempfängers 110 (z.B. "in der Luft") anliegt, in die P Teilbandsignale zerlegt wird. Dies kann beispielsweise mit der in Fig. 12 gezeigten Filterbank 132 geschehen, jedoch genauso mit P Schmalbandempfängern oder einem Breitbandempfänger und einer anderen Art der Zerlegung.

Der mehrstufige Korrelator 122 kann einen ersten Zwischenspeicher (z.B. Ring-Puffer) 170 aufweisen, der ausgebildet sein kann, um die (z.B. von der Filterbank 132 bereitgestellten) P Teilbandsignale zwischen zu speichern.

Die erste Korrelationsstufe 124 kann ausgebildet sein, um die P Teilbandsignale, in die das Breitbandsignal 120 zerlegt ist, jeweils mit den K Präambelabschnitten in der Präambelabschnittskorrelation 150 zu korrelieren, um K Abschnittskorrelationsergebnisse 152 (z.B. Abschnittskorrelationsamplituden) für das jeweilige Teilbandsignal zu erhalten. Ferner kann die erste Korrelationsstufe 124 ausgebildet sein, um die K Abschnittskorrelationsergebnisse 152 in Abhängigkeit von einer ermittelten (z.B. über mehrere Teilbänder hinweg berechneten) Leistung $p[n]$ zu normieren. Beispielsweise kann die erste Korrelationsstufe 124 ausgebildet sein, um die Abschnittskorrelationsergebnisse 152 durch eine Bildung von Betragsquadraten, eine Division durch die ermittelte Leistung $p[n]$ und eine Berechnung der Wurzeln der Quotienten zu normieren. Ferner kann die erste Korrelationsstufe 124 K Warteschlangenzwischenspeicher (z.B. Ringpuffer) 153 aufweisen, die ausgebildet sein können, um die jeweiligen Abschnittskorrelationsergebnisse 152 zwischen zu speichern, wobei die Mehrzahl von Warteschlangenzwischenspeichern 153 unterschiedliche Speicherlängen aufweisen können, wobei die Speicherlängen der K Warteschlangenzwischenspeicher 153 von den jeweiligen Präambelabschnitten der Präambeln der Teil-Datenpakete 142 abhängig sein können. Ferner kann die erste Korrelationsstufe 124 ausgebildet sein, um die in den K Warteschlangenzwischenspeichern 153 zwischengespeicherten K Abschnittskorrelationsergebnisse 152 zu kombinieren (z.B. zu addieren), um für jedes der Teilbandsignale einen Teilsatz von Korrelationsergebnissen 158 zu erhalten, und um einen ersten Satz von Korrelationsergebnissen 156, der die Teilsätze von Korrelationsergebnissen 158 für die P Teilbänder aufweist, bereitzustellen. Die erste Korrelationsstufe 124 kann ferner einen (z.B. zwei dimensionalen) Ausgangs-Warteschlangenzwischenspeicher (z.B. Ringpuffer) 172 aufweisen, der ausgebildet sein kann, um den ersten Satz von Korrelationsergebnissen 156 der ersten Korrelationsstufe 124 zwischen zu speichern.

Die zweite Korrelationsstufe 128 kann eine Gruppen-Korrelation 165 aufweisen, die ausgebildet sein kann, um aus dem in dem Ausgangs-Warteschlangenzwischenspeicher (z.B. Ringpuffer) 172 zwischengespeicherten ersten Satz von Korrelationsergebnissen 156' der ersten Korrelationsstufe 124 Gruppen von Korrelationsergebnissen basierend auf einem Gruppenkorrelationsmuster auszuwählen und gruppenweise zu kombinieren (z.B. zu addieren), um einen zweiten Satz von Korrelationsergebnissen 166 zu erhalten. Die zweite Korrelationsstufe 128 kann einen (z.B. zwei dimensionalen) Ausgangs-Warteschlangenzwischenspeicher (z.B. Ringpuffer) 174 aufweisen, der ausgebildet sein kann, um den zweiten Satz von Korrelationsergebnissen 166 der zweiten Korrelationsstufe 128 zwischen zu speichern.

Die dritte Korrelationsstufe 129 kann eine Gruppensequenzkorrelation 180 aufweisen, die ausgebildet sein kann, um aus dem in dem Ausgangs-Warteschlangenzwischenspeicher (z.B. Ringpuffer) 174 zwischengespeicherten zweiten Satz von Korrelationsergebnissen 166' der zweiten Korrelationsstufe 128 Gruppen von Korrelationsergebnissen basierend auf einem Gruppensequenzkorrelationsmuster auszuwählen und gruppenweise zu kombinieren (z.B. zu addieren), um einen dritten Satz von Korrelationsergebnissen 182 zu erhalten. Ferner kann die dritte Korrelationsstufe 129 einen (z.B. zwei dimensionalen) Ausgangs-Warteschlangenzwischenspeicher (z.B. Ringpuffer) 176 aufweisen, der ausgebildet sein kann, um den dritten Satz von Korrelationsergebnissen 182 der dritten Korrelationsstufe 129 zwischen zu speichern.

Bei Ausführungsbeispielen kann die dritte Korrelationsstufe 129 ausgebildet sein, um die Korrelationsergebnisse in einer für eine nachfolgende Paket-Detektion 134 geeigneten Form bereitzustellen.

Wie in Fig. 12 angedeutet ist, kann die dritte Korrelationsstufe ausgebildet sein, um $N_S$ Sequenzen von Teil-Datenpaketen zu detektieren. Hierzu kann die Gruppensequenzkorrelation 180, der Ausgangs-Warteschlangenzwischenspeicher 176 und die Paket-Detektion $N_s$-Fach ausgeführt sein.

Mit anderen Worten, Fig. 12 zeigt eine schematische Ansicht des Aufbaus des Paket-Korrelators 122 inklusive der Einbettung in die vorausgehende Matched-Filterbank 132 und die nachfolgende Paket-Detektion. Der Paket-Korrelator 122 umfasst die folgenden drei Teile:

1. Präambel-Korrelation (erste Korrelationsstufe 124)
2. Gruppen-Korrelation (zweite Korrelationsstufe 128)
3. Gruppensequenz-Korrelation (dritte Korrelationsstufe 129)

Zwischen den einzelnen Verarbeitungsblöcken sind Ringpuffer zur Speicherung der Zwischenergebnisse angeordnet. Die Tiefe dieser Ringpuffer ist durch die Verarbeitungslänge des nachfolgenden Verarbeitungsblockes gegeben. In den Verarbeitungsblöcken selbst sind deshalb keine weiteren Puffer für die Zwischenergebnisse enthalten.

Zur Präambel-Korrelation kann die Präambel in K Abschnitte der Länge $L_K$ aufgeteilt werden, die jeweils einzeln normiert und anschließend addiert werden. Die Abschnitte können überlappend oder nicht-überlappend gewählt werden. Dazu kann für die Verschiebung $D_K$ zwischen den einzelnen Abschnitten ein Wert im Bereich 1... $L_K$ gewählt werden. Für $D_K = L_K$ erhält man nicht-überlappende Abschnitte. Bei $N_P$ Präambelsymbolen erhält man den Zusammenhang:

$$L_K + (K - 1) \cdot D_K = N_P$$

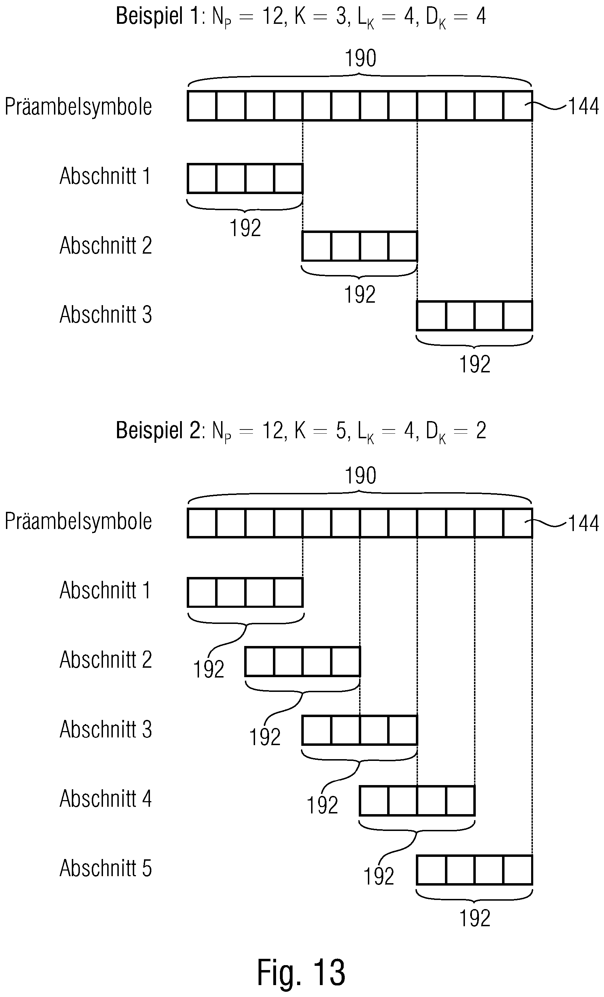

Fig. 13 zeigt eine schematische Ansicht einer beispielhaften Aufteilung einer Präambel 190, gemäß einem Ausführungsbeispiel. Die Präambel 190 umfasst 12 Präambelsymbole 144, wobei die Präambel 190 gemäß einem ersten Beispiel in drei nicht überlappende Abschnitte 192 von je vier Präambelsymbolen 144 aufgeteilt wird, und wobei die Präambel 190 gemäß einem zweiten Beispiel in fünf überlappende Abschnitte 192 von je vier Präambelsymbolen 144 aufgeteilt wird.

Durch die Aufteilung in Abschnitte 192 und deren separate Normierung kann die Störfestigkeit gegen impulsartige Störungen erheblich verbessert werden. Zusätzlich erlaubt die Aufteilung eine Reduktion der Anzahl $C_P$ der parallel zu verarbeitenden Kanäle (z.B. durch eine Reduktion der Überlappung der Teilbandsignale, d.h. durch eine Reduktion der Überabtastung $M_F$ in Frequenzrichtung).

Bei Ausführungsbeispiel resultieren als Ergebnis der Präambel-Korrelation 124 normierte, reell-wertige Korrelationsamplituden, die sich aus der Addition der entsprechenden Werte der einzelnen Abschnitte ergeben. Die zeitliche Verschiebung der Ergebnisse der einzelnen Abschnitte kann durch entsprechende Wahl der Tiefen der auf die Normierung folgenden Ringpuffer erfolgen. Da die Korrelation ausschließlich in Zeit-Richtung erfolgt, bleibt die Anzahl $C_P$ der Kanäle unverändert.

Bei Ausführungsbeispielen können in der Gruppen-Korrelation 128 die normierten Korrelationsamplituden der $M_G$ Präambeln der Teil-Datenpakete 142 einer Gruppe addiert werden. Dies kann mittels der durch $T_G$ beschriebenen zeitlichen und der durch $S_G$ beschriebenen frequenzmäßigen Struktur einer Gruppe erfolgen. Da die Korrelation hier auch in Frequenz-Richtung erfolgt, reduziert sich die Anzahl der Kanäle von $C_P$ auf $C_G$.

Bei Ausführungsbeispielen können in der Gruppensequenz-Korrelation die normierten Korrelationsamplituden der $N_G$ Gruppen einer Sequenz addiert werden. Dies kann mittels der durch $T_{PG,i}$ beschriebenen zeitlichen und der durch $S_{PG,i}$ beschriebenen frequenzmäßigen Struktur der jeweiligen Gruppensequenz erfolgen. Da auch hier eine Korrelation in Frequenz-Richtung erfolgt, reduziert sich die Anzahl der Kanäle von $C_G$ auf $C_S$.

### 2.3 Anzahl der Kanäle

Die Anzahl der Kanäle in der Präambel-Korrelation kann der Anzahl an relevanten Kanälen (Teilbandsignalen), z.B. den relevanten Kanälen einer Matched-Filterbank, entsprechen:

$$C_P = N_{CH} = M_F \cdot (B - B_T) / f_{sym}$$

Dabei ist B die Bandbreite des Bandes, $f_{sym}$ die Symbolrate und $M_F$ der Überabtastfaktor in Frequenz-Richtung. Der Faktor $M_F$ kann an die Länge $L_K$ der Abschnitte der Präambel-Korrelation angepasst werden. Um auch für Pakete, die bezüglich des Frequenzrasters der Teilbandsignale, die z.B. von einer Matched-Filterbank 132 bereitgestellt werden können, ungünstig liegen, eine ausreichende Empfindlichkeit zu erzielen, kann bei einer herkömmlichen Implementierung

$$M_F \geq 2 \cdot L_K$$

gelten. Ein Verfahren zur Reduktion des Faktors $M_F$ auf geringere Werte wird im Folgenden noch beschrieben.

In der Gruppen-Korrelation kann sich die Anzahl der Kanäle reduzieren auf:

$$C_G = M_F \cdot (B - B_T - B_G) / f_{sym}$$

Dabei kann

$$B_G = B_{G,norm} \cdot \Delta f_T = B_{G,norm} \cdot M_\Delta \cdot f_{sym}$$

die Bandbreite der Gruppe sein. Daraus folgt z.B.:

$$C_G = C_P - M_F \cdot M_\Delta \cdot B_{G,norm}$$

In der Gruppensequenz-Korrelation reduziert sich die Anzahl der Kanäle auf z.B.:

$$C_S = M_F \cdot (B - B_T - B_G - B_{PG}) / f_{sym}$$

Dabei kann $B_G$ die bereits genannte Bandbreite der Gruppe und

$$B_{PG} = B_{PG,norm} \cdot \Delta f_T = B_{PG,norm} \cdot M_\Delta \cdot f_{sym}$$

die Bandbreite der Gruppensequenz sein. Daraus folgt z.B.:

$$C_S = C_P - M_F \cdot M_\Delta \cdot (B_{G,norm} + B_{PG,norm})$$

Zwischen den normierten Bandbreiten und der Anzahl N der Trägerfrequenzen besteht der Zusammenhang:

$$B_{G,norm} + B_{PG,norm} = N - 1$$

Damit ergibt sich z.B.:

$$C_S = C_P - M_F \cdot M_\Delta \cdot (N - 1)$$

Die Kanalanzahl $C_S$ kann mit dem Wert $\Delta f_{off}$ korrespondieren, um den die Trägerfrequenzen der Teil-Datenpakete 142 variieren können, ohne dass eine Überschreitung des zugewiesenen Frequenzbandes auftritt:

$$\Delta f_{off} = (B - B_T) - (N - 1) \cdot M_\Delta \cdot f_{sym} = C_S \cdot f_{sym} / M_F$$

Die folgende Tabelle (Tabelle 1) enthält die Parameterwerte für zwei Beispiele. Bezüglich des Aufbaus eines Datenpaketes unterscheiden sich die beiden Beispiele nur durch den Trägerabstand $\Delta f_T$. In beiden Beispielen wurde die relative Bandbreite einer Gruppe so gewählt, dass die Kanalanzahl durch die Gruppen-Korrelation wesentlich reduziert wird. Besonders wichtig ist dies im Beispiel 2.

| Parameter | Formelzeichen | Beispiel 1 | Beispiel 2 |
|---|---|---|---|
| Bandbreite des Bandes | $B$ | 100 kHz | 725 kHz |
| Bandbreite eines Teil-Paketes | $B_T$ | 5 kHz | 5 kHz |
| Symbolrate | $f_{sym}$ | 2.5 kBd | 2.5 kBd |
| Relativer Abstand der Trägerfrequenzen | $M_\Delta$ | 1 | 12 |
| Abstand der Trägerfrequenzen | $\Delta f_T$ | 2.5 kHz | 30 kHz |
| Überabtastung in Frequenzrichtung | $M_F$ | 8 | 8 |
| Anzahl der Trägerfrequenzen | $N$ | 24 | 24 |
| Normierte Bandbreite einer Gruppe | $B_{G,norm}$ | 16 | 16 |
| Norm. Bandbreite einer Gruppensequenz | $B_{PG,norm}$ | 7 | 7 |
| Kanalanzahl in der Präambel-Korrelation | $C_P$ | 304 | 2304 |
| Kanalanzahl nach Gruppen-Korrelation | $C_G$ | 176 | 768 |
| Kanalanzahl nach Gruppensequenz-Korr. | $C_S$ | 120 | 96 |
| Variationsbereich der Trägerfrequenzen | $\Delta f_{off}$ | 37.5 kHz | 30 kHz |

## 2.4 Ablauf der Korrelation

Die Korrelation kann mit einem zeitlichen Überabtastfaktor $M_T$ erfolgen, d.h. die Abtastrate sämtlicher Signale beträgt z.B.:

$$f_S = M_T \cdot f_{sym}$$

Beispielsweise kann $M_T = 2$ verwendet werden.

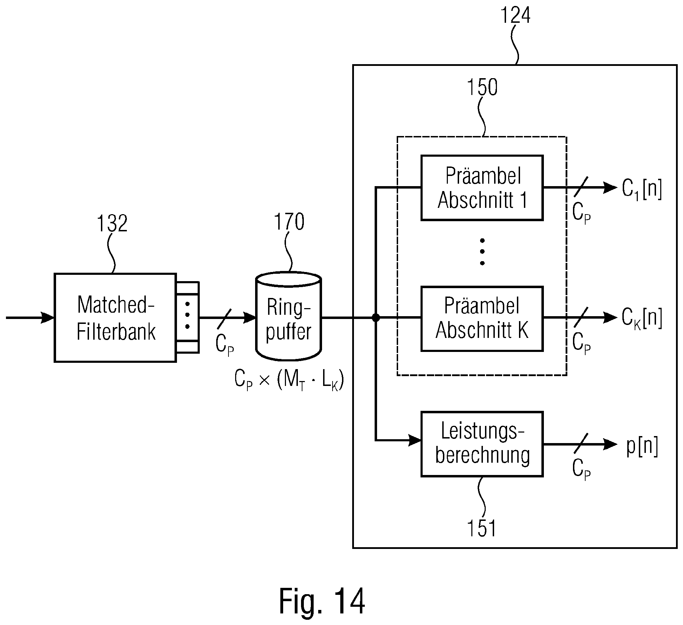

Fig. 14 zeigt ein schematisches Blockschalbild eines Ausschnitts der in Fig. 12 gezeigten ersten Korrelationsstufe 124 sowie die der ersten Korrelationsstufe 124 vorgeschalteten Bereitstellung der Teilbandsignale, die hier beispielhaft mit einer Filterbank (z.B. Matched-Filterbank) 132 erfolgt, und den Zwischenspeicher (z.B. Ring-Puffer) 170, gemäß einem Ausführungsbeispiel. Mit anderen Worten, Fig. 14 zeigt die Signale und den Ringpuffer 170 der Präambel-Abschnittskorrelation 150. Der Ringpuffer 170 kann die Größe $C_P \times (M_T \cdot L_K)$ aufweisen.

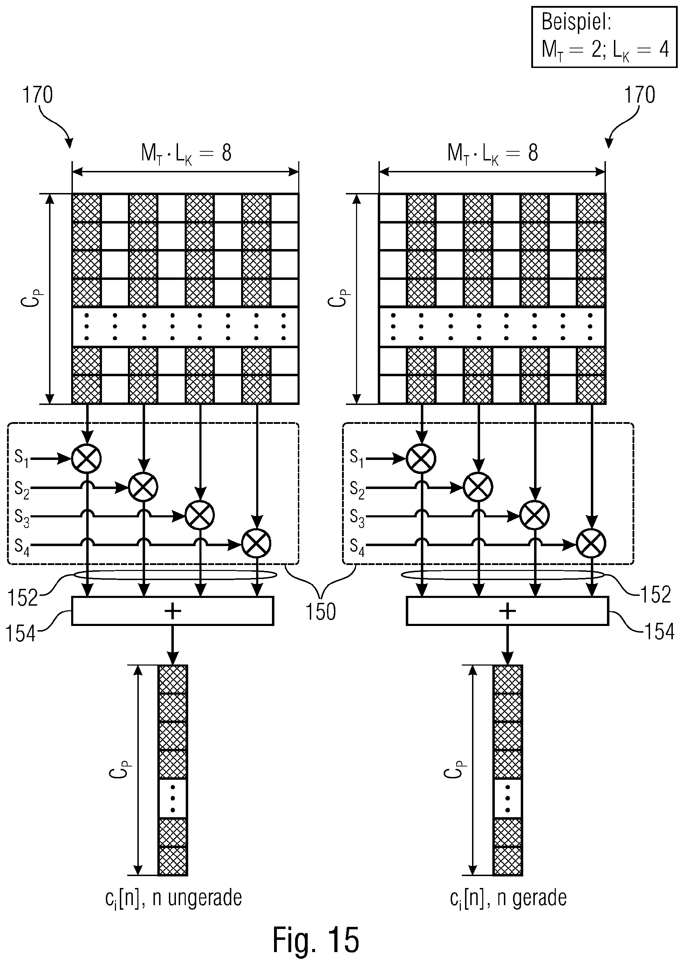

Fig. 15 zeigt eine schematische Ansicht der durch die erste Korrelationsstufe durchgeführten Präambelabschnittskorrelation der in dem Ringpuffer zwischengespeicherten Teilbandsignale einschließlich der Kombination der Abschnittskorrelationsergebnisse, gemäß einem Ausführungsbeispiel.

Wie in Fig. 15 zu erkennen ist, kann die Korrelation parallel über alle $C_P$ Kanäle erfolgen; dabei können für den Fall $M_T = 2$ im Wechsel jeweils die ungeraden oder die geraden Spalten ausgewertet werden. Als Referenzsymbole $s_1,...,s_4$ (entsprechend einem Ausführungsbeispiel mit $L_K = 4$) können die zum jeweiligen Abschnitt gehörigen Präambelsymbole in $L_K$-zyklischer Weise verwendet werden, so dass sich in Verbindung mit der zyklischen Datenübernahme der Abtastwerte der Teilbandsignale, die z.B. den Ausgangswerten einer Matched-Filterbank 132 entsprechen können, in den Ringpuffer 170 die gewünschte Korrelation ergibt.

Alternativ können jeweils $M_T$ aufeinander folgende Spalten des Ringpuffers zu einer Spalte mit $M_T \cdot C_P$

Elementen zusammengefasst werden. Der Ringpuffer 170 hat dann die Größe $(M_T \cdot C_P) \times L_K$. Die Korrelation kann nun parallel über $M_T \cdot C_P$ Kanäle erfolgen und für jeden Kanal $M_T$ Ausgangswerte liefern. Entsprechend können auf der Eingangsseite jeweils $M_T$ Abtastwerte der Teilbandsignale, die z.B. $M_T$ Ausgabevektoren einer Matched-Filterbank entsprechen können, zu einer Spalte im Ringpuffer zusammengefasst werden.

Die Werte des Ringpuffers können im Speicher spaltenweise abgelegt werden, d.h. beginnend mit den Werten der ersten Spalte und endend mit den Werten der letzten Spalte. Dadurch sind die Varianten $C_P \times (M_T \cdot L_K)$ und $(M_T \cdot C_P) \times L_K$ im Speicher äquivalent.

Die in Fig. 14 dargestellte Leistungsberechnung 151 folgt demselben Ablauf, jedoch erfolgt hier anstelle der Multiplikation mit den Referenzsymbolen eine Berechnung des Betragsquadrats der Werte.

Anschließend können die Korrelationssignale $c_1[n],...,c_K[n]$ normiert, indem:

- die Betragsquadrate gebildet werden;
- eine Division durch die Leistungen $p[n]$ erfolgt;
- die Wurzeln der Quotienten berechnet werden.

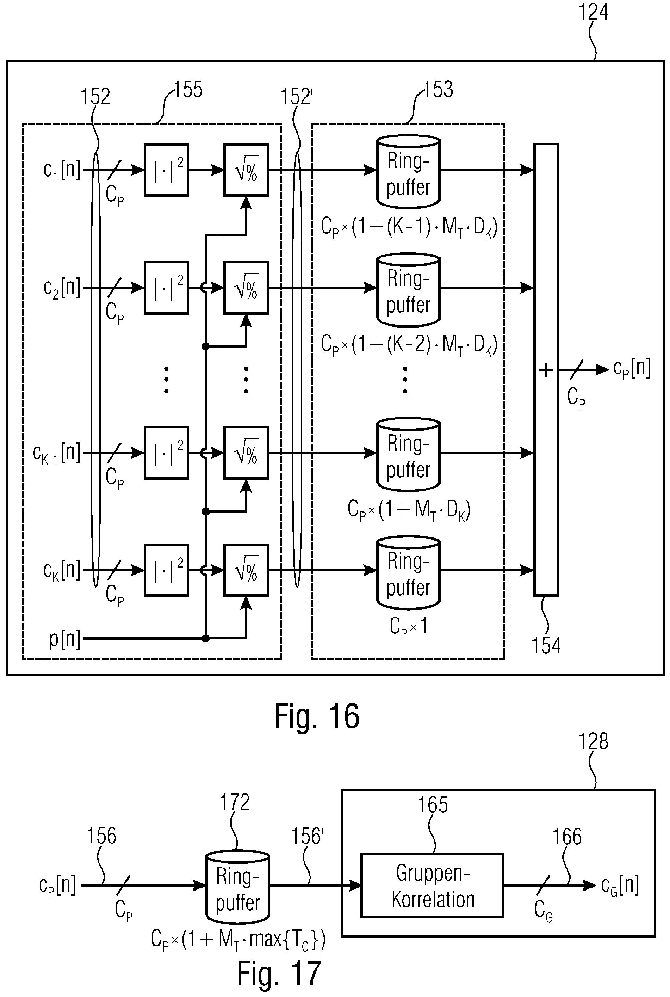

Fig. 16 zeigt ein schematisches Blockschaltbild eines Ausschnitts der in Fig. 12 gezeigten ersten Korrelationsstufe 124, gemäß einem Ausführungsbeispiel. Wie in Fig. 12 zu erkennen ist, kann die erste Korrelationsstufe 124 ausgebildet sein, um eine Normierung 155 der Abschnittskorrelationsergebnisse 152 durchzuführen, um normierte Abschnittskorrelationsergebnisse 152' zu erhalten. Ferner kann die erste Korrelationsstufe 124 ausgebildet sein, um die normierten Abschnittskorrelationsergebnisse 152' in den Warteschlangenzwischenspeichern 153 zwischen zu speichern, und um die in den Warteschlangenzwischenspeichern 153 zwischengespeicherten normierten Abschnittskorrelationsergebnisse 152' zu kombinieren 154 (z.B. zu addieren).

Mit anderen Worten, Fig. 16 zeigt die Normierung 155 und die anschließende Addition der Ergebnisse der Abschnitte. Dabei können Ringpuffer 153 als Verzögerungsglieder eingesetzt werden, um die Ergebnisse entsprechend der zeitlichen Struktur der Abschnitte zu verzögern. Der Ringpuffer des ersten Abschnitts besitzt mit

$$D_1 = (K-1) \cdot M_T \cdot D_K$$

die größte Verzögerung, während der Ringpuffer des letzten Abschnitts nur als Zwischenpuffer ohne Verzögerung dient.

Fig. 17 zeigt ein schematisches Blockschaltbild der zweiten Korrelationsstufe 128 des mehrstufigen Korrelators 122 des Datenempfängers, gemäß einem Ausführungsbeispiel. Die zweite Korrelationsstufe 128 kann ausgebildet sein, um eine Gruppenkorrelation 165 des in dem Ausgangs-Warteschlangenzwischenspeicher (z.B. Ringpuffer) 172 der ersten Korrelationsstufe 124 zwischengespeicherten ersten Satzes von Korrelationsergebnissen 156' durchzuführen, um einen zweiten Satz von Korrelationsergebnissen 166 zu erhalten. Mit anderen Worten, Fig. 17 zeigt die Signale und den Ringpuffer der Gruppen-Korrelation.

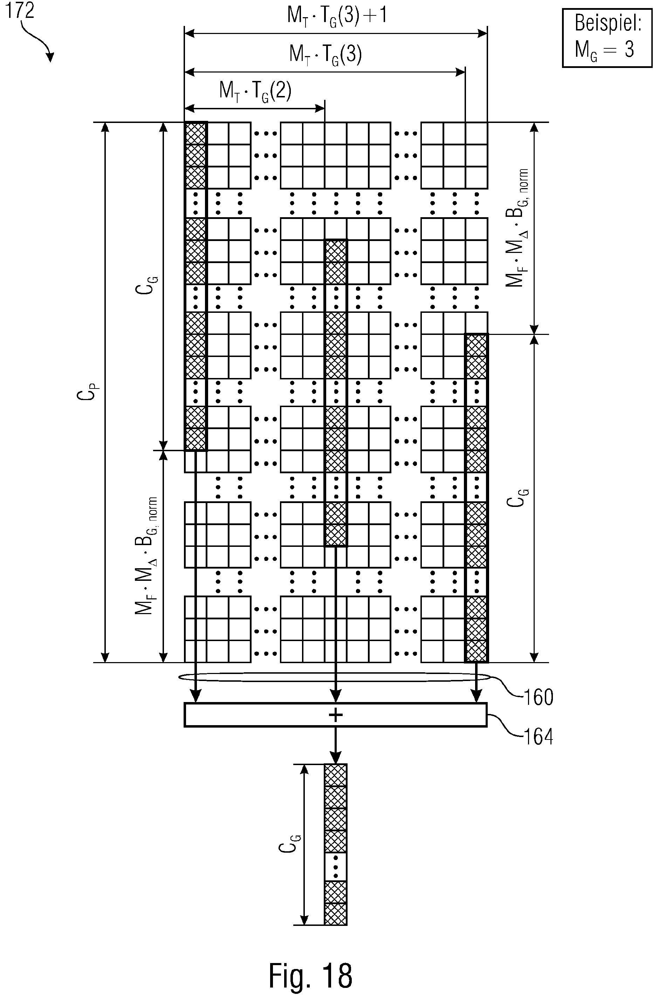

Fig. 18 zeigt eine schematische Ansicht eines zweidimensionalen Speicheraufbaus des Ausgangs-Warteschlangenzwischenspeichers (z.B. Ringpuffer) 172 der ersten Korrelationsstufe 124 und der von der zweiten Korrelationsstufe 128 durchgeführten Gruppenkorrelation 165, bei der aus dem ersten Satz von Korrelationsergebnissen, der in dem Ausgangs-Warteschlangenzwischenspeicher (z.B. Ringpuffer) 172 der ersten Korrelationsstufe 124 zwischengespeichert ist, basierend auf einem Gruppenkorrelationsmuster Gruppen von Korrelationsergebnissen 160 ausgewählt und gruppenweise kombiniert 164 werden.

Mit anderen Worten, Fig. 18 zeigt den Ablauf der Gruppen-Korrelation 165. Entsprechend der Ringpuffer-Operation wandern die $M_G$ zu addierenden Teilspalten mit jeweils $C_G$ Werten horizontal-zyklisch durch den Ringpuffer. Wie bereits beschrieben, reduziert sich die Anzahl der Kanäle im Rahmen der Gruppen-Korrelation von $C_P$ auf $C_G$. Diese Reduktion ist umso größer, je größer die normierte Bandbreite $B_{G,norm}$ der Gruppe ist.

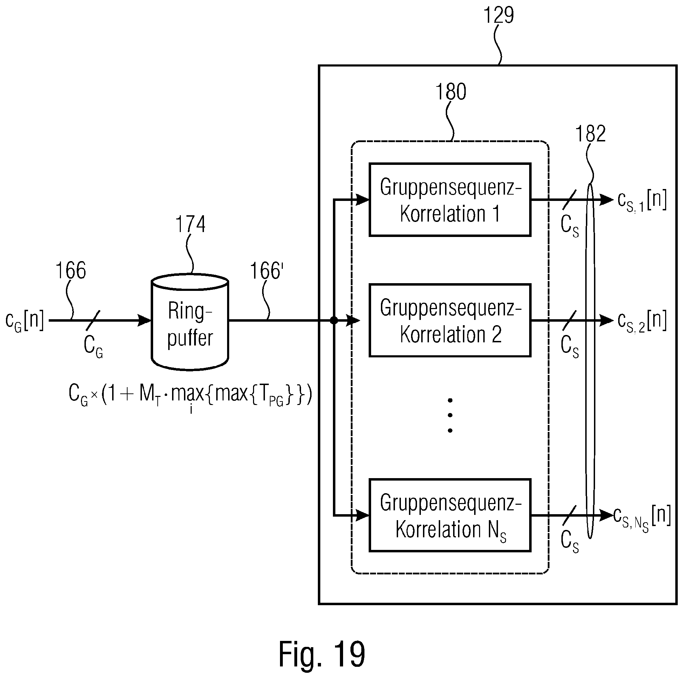

Fig. 19 zeigt ein schematisches Blockschaltbild eines Ausschnitts der in Fig. 12 gezeigten dritten Korrelationsstufe 129, gemäß einem Ausführungsbeispiel. Die dritte Korrelationsstufe 129 kann ausgebildet sein, um eine Gruppensequenzkorrelation 180 des in dem Ausgangs-Warteschlangenzwischenspeicher (z.B. Ringpuffer) 174 der zweiten Korrelationsstufe 128 zwischengespeicherten zweiten Satzes von Korrelationsergebnissen 166' durchzuführen, um einen dritten Satz von Korrelationsergebnissen 182 zu erhalten. Wie in Fig. 19 angedeutet ist, kann die dritte Korrelationsstufe 129 ausgebildet sein, um $N_S$ Sequenzen von Teil-Datenpaketen 142 zu detektieren. Hierzu kann die Gruppensequenzkorrelation 180 $N_S$-Fach ausgeführt sein.

Mit anderen Worten, Fig. 19 zeigt die Signale und den Ringpuffer der Gruppensequenz-Korrelation. Der Ablauf erfolgt prinzipiell in gleicher Weise wie bei der Gruppen-Korrelation, bezieht sich hier aber auf die $N_G$ Gruppen der jeweiligen Gruppensequenz mit den Parametern $S_{PG,i}$ und $T_{PG,i}$ mit $i = 1 ... N_S$. Wie bereits beschrieben, kann sich die Anzahl der Kanäle im Rahmen der Gruppensequenz-Korrelation von $C_G$ auf $C_S$ reduzieren. Diese Reduktion ist umso größer, je größer die normierte Bandbreite $B_{PG,norm}$ der Gruppensequenz ist. Die $N_S$ Ausgangssignale $c_{S,1}[n],...c_{S,Ns}[n]$

bilden die Ausgangssignale des Paket-Korrelators.

## 2.5 Verwendung mehrerer Gruppen

Zur weiteren Reduktion der Wahrscheinlichkeit von Kollisionen der Teil-Datenpakete 142 verschiedener Datensender können alternativ auch mehrere Gruppen verwendet werden. Der im unteren Teil von Fig. 12 gezeigte Teil mit der Gruppen-Korrelation 165 und den nachfolgenden Gruppensequenz-Korrelationen 180 ist in diesem Fall mehrfach vorhanden.

## 2.6 Verfahren zur Reduktion der Kanalanzahl

Die Abstände zwischen den Mittenfrequenzen der $C_P$ Kanäle (Teilbandsignale), die z.B. den Kanälen einer Matched-Filterbank entsprechen können, betragen z.B.:

$$\Delta f_{MF} = f_{sym} / M_F$$

Dadurch kann der Frequenzoffset $\Delta f$ zwischen der tatsächlichen Empfangsfrequenz eines Teil-Datenpakets und der Mittenfrequenz des nächstgelegenen Teilbandsignals, das z.B. dem nächstgelegenen Kanal einer Matched-Filterbank entsprechen kann, auf den Bereich

$$\Delta f = \pm \Delta f_{MF} / 2 = \pm f_{sym} / (2 \cdot M_F)$$

begrenzt werden. Damit der durch diesen Frequenzoffset verursachte Fehler bei der Korrelation der Abschnitte der Präambel nicht zu groß wird, kann

$$M_F \geq 2 \cdot L_K$$

gelten. Dabei ist $L_K$ die Länge eines Abschnitts der Präambel. Für die in Fig. 13 gezeigten Beispiele mit $L_K = 4$ ergibt sich damit eine untere Grenze von $M_F = 8$. Der Frequenzoffset liegt in diesem Fall im Bereich:

$$\Delta f = \pm f_{sym} / 16$$

Als begrenzender Faktor wirkt hier der Fehler in der Präambel-Korrelation. Bezüglich der Matched-Filterung, die z.B. mit einer Matched-Filterbank erfolgen kann, kann dagegen in der Regel auch ein größerer Frequenzoffset im Bereich

$$\Delta f = \pm f_{sym} / 8$$

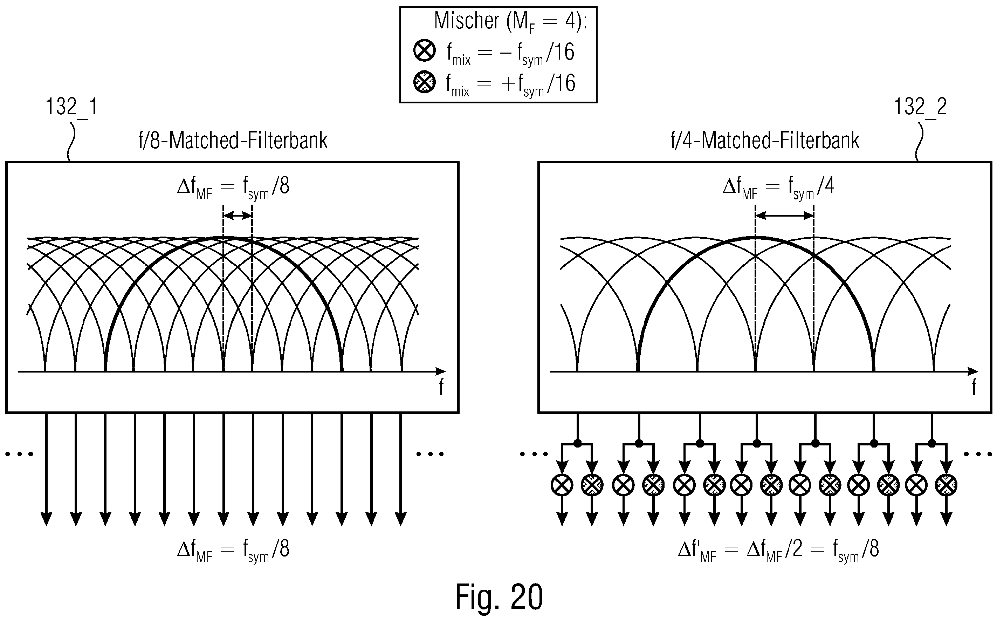

oder - bei reduzierter Leistungsfähigkeit - darüber hinaus toleriert werden. Fig. 20 zeigt, wie dieser Sachverhalt zur Reduktion der Kanalanzahl, d.h. der Anzahl der Teilbandsignale, die z.B. durch die Reduktion der Kanalanzahl einer Matched-Filterbank 132 erfolgen kann, genutzt werden kann.

Im Folgenden wird davon ausgegangen, dass die Teilbandsignale von einer Matched-Filterbank bereitgestellt werden, da es sich dabei um die in der Praxis bevorzugte Ausführung handelt. Prinzipiell kann die Bereitstellung jedoch mit jedem Verfahren erfolgen, das einen Satz von für die weitere Verarbeitung gleichwertigen Teilbandsignalen bereitstellen kann. Mit anderen Worten: Die Art der Bereitstellung der Teilbandsignale ist für die Verarbeitung nicht relevant.

Im Detail zeigt Fig. 20 eine schematische Ansicht einer Reduktion der Kanalanzahl einer Matched-Filterbank 132 von einer f/8-Matched-Filterbank 132_1 auf eine f/4-Matched-Filterbank 132_2. Wie in Fig. 20 zu erkennen ist, kann jedes zweite Filter der f/8-Matched-Filterbank entfallen und die Ausgänge der resultierenden f/4-Matched-Filterbank können mit jeweils zwei Mischern um $\pm f_{sym} / 16$ verschoben werden, so dass sich ein Frequenzraster wie bei einer f/8-Matched-Filterbank ergibt. Mit dieser Maßnahme kann der Rechenaufwand in der Matched-Filterbank 132 etwa auf die Hälfte reduziert werden.

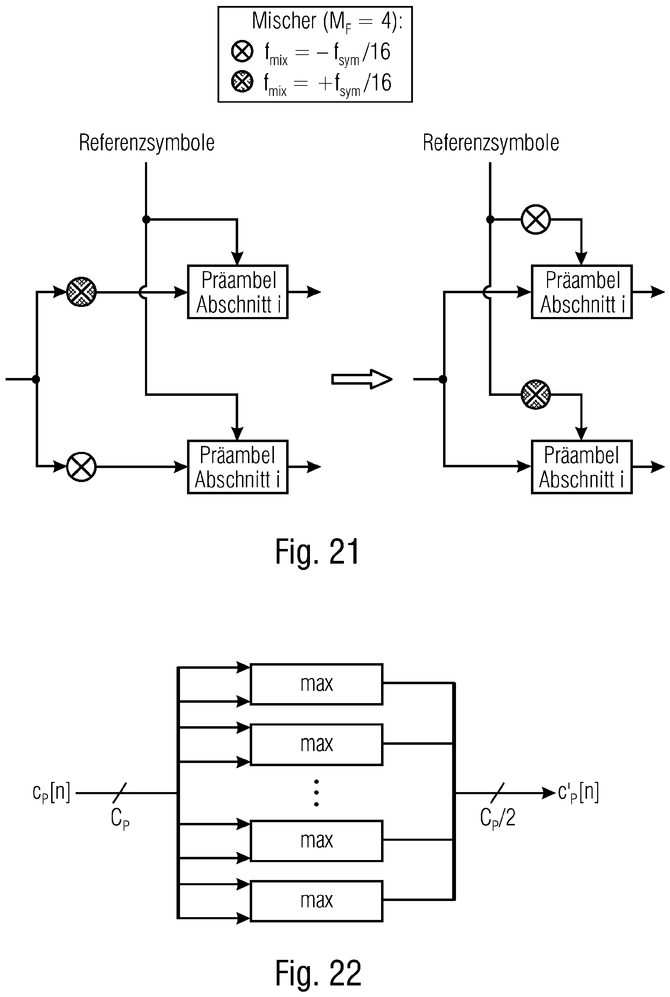

Im Zusammenspiel mit der nachfolgenden Präambel-Abschnittskorrelation können die Mischer nach der f/4-Matched-Filterbank 132_2 eingespart werden, indem in der Korrelation zwei verschiedene, mit den entsprechenden Mischfrequenzen rotierte Präambeln bzw. deren Abschnitte als Referenzsymbole verwendet werden. Dies ist in Fig. 21 für einen einzelnen Kanal dargestellt. Diese Vorgehensweise ist zwar bezüglich des komplex-wertigen Ergebnisses der Korrelation nicht äquivalent, in der weiteren Verarbeitung wird jedoch nur das Betragsquadrat des Ergebnisses benötigt, so dass sich die Abweichung nicht auswirkt. Die Rotation der Referenzsymbole erfolgt einmalig im Rahmen der Initialisierung der Komponenten.

Eine weitere Möglichkeit zur Reduktion ergibt sich aus der Feststellung, dass die hohe Frequenzauflösung der Präambel-Korrelation für die nachfolgende Gruppen- und Gruppensequenz-Korrelation nicht zwingend benötigt wird. Deshalb kann zwischen der Präambel-Korrelation und der Gruppen-Korrelation eine Maximum-Bildung über benachbarte Kanäle durchgeführt und die Kanalanzahl entsprechend reduziert werden. Diese Maßnahme führt jedoch zu einer Erhöhung der Fehldetektionswahrscheinlichkeit in der auf den Paket-Korrelator folgenden Paket-Detektion, so dass in der Regel nur zwei benachbarte Kanäle zusammengefasst werden können. Dieser Fall ist in Fig. 22 dargestellt.

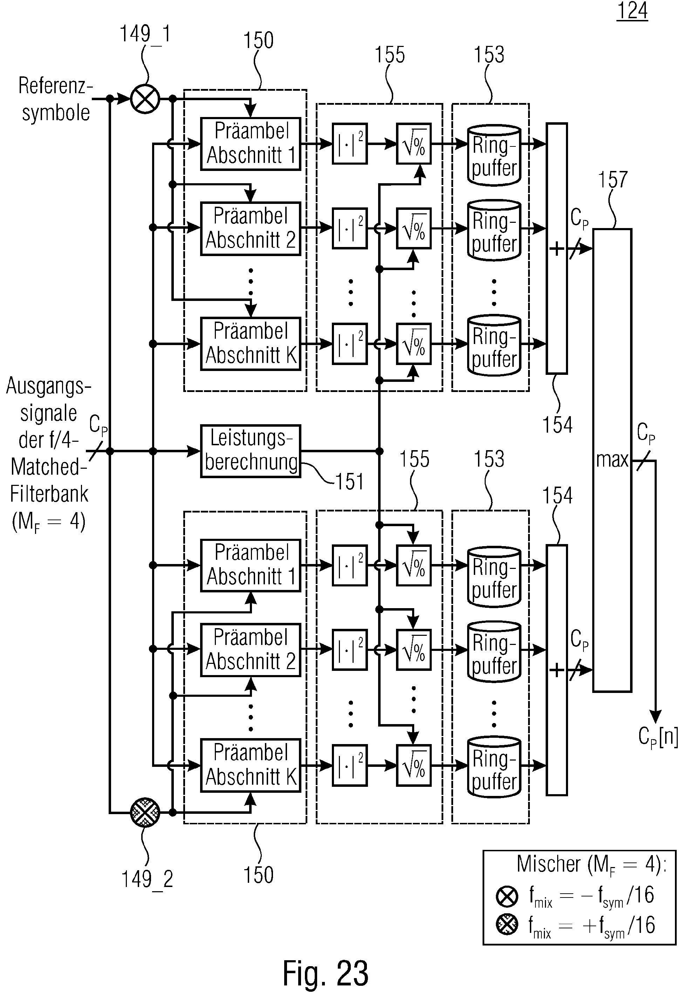

Werden beide Maßnahmen kombiniert - eine Halbierung der Kanalanzahl am Eingang bzw. in der Matched-Filterbank 132 und eine Halbierung der Kanalanzahl nach der Präambel-Korrelation durch Maximum-Bildung über jeweils zwei benachbarte Kanäle -, resultiert die in Fig. 23 dargestellte Präambel-Korrelation mit reduzierter Kanalanzahl.

Fig. 23 zeigt ein schematisches Blockschaltbild der ersten Korrelationsstufe 124, gemäß einem weiteren Ausführungsbeispiel. Die erste Korrelationsstufe 124 ist ausgebildet, um ein von der f/4-Matched-Filterbank bereitgestelltes Teilbandsignal mittels zwei Mischern um $\pm f_{sym} / 16$ zu verschieben, und um für die $\pm f_{sym} / 16$ verschobenen Versionen des Teilbandsignals jeweils eine Präambelabschnittskorrelation 150 durchzuführen, um Präambelabschnittsergebnisse zu erhalten, und um eine Normierung 155 der Präambelabschnittsergebnisse durchzuführen, um normierte Präambelabschnittsergebnisse zu erhalten, und um die normierten Präambelabschnittsergebnisse in den Warteschlangenzwischenspeichern 153 zwischen zu speichern, und um die zwischengespeicherten normierten Präambelabschnittsergebnisse zu kombinieren 154, um für die um $\pm f_{sym} / 16$ verschobenen Versionen jedes Teilbandsignals ein Korrelationszwischenergebnis zu erhalten, und um eine Maximumbildung 157 der Korrelationszwischenergebnisse durchzuführen, um für jedes Teilbandsignal ein Korrelationsergebnis zu erhalten.

Im Vergleich zu dem in Fig. 12 gezeigten Ausführungsbeispiel können nun alle Kanalanzahlen ($C_P$, $C_G$ und $C_S$) durch die Verwendung von $M_F = 4$ anstelle von $M_F = 8$ um den Faktor 2 reduziert werden, ohne dass die Frequenzauflösung der Präambel-Korrelation abnimmt. Aufgrund der Parallelverarbeitung mit rotierten Referenzsymbolen beträgt die effektive Kanalanzahl in der Präambel-Korrelation nun $C'_P = 2 \cdot C_P$.

Eine weitere Reduktion der Kanalanzahl vor der Präambel-Korrelation durch eine Wahl von $M_F < 4$ ist in der Regel nicht möglich, da der Frequenzoffset $\Delta f$ in der Matched-Filterbank in diesem Fall Werte annehmen kann, die eine sehr ausgeprägte Symbolverzerrung zur Folge haben; dadurch werden die Ergebnisse so stark verfälscht, dass die Leistungsfähigkeit signifikant abnimmt. In Sonderfällen, in denen mit Blick auf den Rechenaufwand Kompromisse unvermeidbar sind, muss dies ggf. in Kauf genommen werden.

Im Gegensatz dazu ist eine weitere Reduktion der Kanalanzahl nach der Präambel-Korrelation durch Maximum-Bildung über mehr als zwei benachbarte Kanäle durchaus möglich, wenn die damit verbundene höhere Fehldetektionswahrscheinlichkeit toleriert werden kann. Ausschlaggebend ist dabei der relative Rechenaufwand in den einzelnen Komponenten des Präambel-Korrelators. In der Praxis ist der Rechenaufwand in der Präambel-Korrelation häufig deutlich höher als in der Gruppen- und der Gruppensequenz-Korrelation. In diesem Fall würde eine Reduktion der Kanalanzahl nach der Präambel-Korrelation den Rechenaufwand nur unwesentlich reduzieren.

### 3. Weitere Ausführungsbeispiele

In Funkkommunikationssystemen ohne Koordination (wie z. B. beim ALOHA-Verfahren) sendet der Datensender sein Paket zu einem beliebigen Zeitpunkt aus. Der Empfänger hat dabei keine bzw. nur eine ungenaue Kenntnis über den Sendezeitpunkt, an dem die Übertragung beginnt. Dieser Zeitpunkt muss im Empfänger mittels einer Detektion bestimmt werden.

### 3.1 Mehrstufige Detektion bei Präambel-Splitting

Klassische Systeme verwenden für die Detektion der Datenpakete im Datenempfänger die Präambel der Übertragung. Diese wird in der Regel am Stück übertragen und kann daher verhältnismäßig einfach mit einer klassischen Korrelation detektiert werden.

Durch das Telegramm-Splitting Verfahren bzw. bei einem Zeit- oder Frequenzsprungverfahren wird die Präambel jedoch typischerweise auf mehrere Teilabschnitte aufgeteilt.

Soll diese aufgeteilte Sequenz nun detektiert werden, ist es vorteilhaft die Korrelation gemeinsam über alle Sequenzteile zu berechnen, was einen sehr hohen Rechenaufwand mit sich zieht.

Ausführungsbeispiele der vorliegenden Erfindung gehen einen anderen Weg, bei welchem die Korrelation in mehrere Teilkorrelationen unterteilt wird und anschließend die Teilergebnisse zu einem Gesamtergebnis zusammenfasst werden. Voraussetzung dieser Methodik kann beispielsweise sein, dass die Sequenz in allen Teilabschnitten gleich ist. Ist dies gegeben kann die Korrelation, wie im Abschnitt 2 beschrieben in eine Präambel-Korrelation, eine (optionale) Gruppen-Korrelation und eine Gruppensequenz-Korrelation aufgeteilt werden.

Durch die Verwendung der Gruppen- und Gruppensequenz-Korrelation besteht die Möglichkeit, dass mehrere verschiedene Sprungmuster detektiert werden, welche die Störanfälligkeit der Übertragung reduzieren. Wird im Falle mehrerer Sprungmuster die Sequenz in den Teilabschnitten für alle Muster gleich gewählt, ist nur ein einziger Präambel-Korrelator notwendig.

Durch diese Methodik verringert sich die notwendige Rechenleistung des Detektors enorm. Wodurch entweder eine kostengünstigere Hardware eingesetzt oder die Anzahl der unterstützten Sprungmuster erhöht werden kann.

Bei Ausführungsbeispielen besteht der Korrelator nicht nur aus einem einstufigen Korrelator, es sind zumindest zwei Korrelatoren vorhanden, wobei der zweite Korrelator auf Basis der Ergebnisse des ersten Korrelators arbeitet. Die Ergebnisse in den Stufen können zwischengespeichert (z. B. in einer Datenbank oder einem Ringpuffer) werden.

Bei Ausführungsbeispielen kann zunächst eine Korrelation über die Präambel-Sequenz-Abschnitte durchgeführt werden. Diese Ergebnisse können anschließend in einem zweiten Korrelator zu einem Gruppen-Ergebnis kombiniert werden. Auf Basis der Gruppen-Korrelation kann anschließend die Gruppensequenz-Korrelation durchgeführt werden, welche das Gesamtergebnis für die Detektion liefert.

Wird die oben beschriebene Voraussetzung, dass alle Teilabschnitte die gleiche Pilotsequenz besitzen, nicht erfüllt, kann das oben beschriebene Verfahren jedoch trotzdem angewendet werden, wenn es nur sehr wenige (im Verhältnis weniger Sequenzen als Teilpakete) Sequenzen gibt.

In diesem Fall gibt es v-parallele Präambel-Korrelationen, wobei v die Anzahl der verschiedenen Sequenzen ist. Es ist nicht zwingend notwendig, dass die verschiedenen Sequenzen die gleiche Länge besitzen.

Im nächsten Schritt der Teilkorrelation, können nun entsprechend des Sprungmusters die Ergebnisse aus den Speichern der verschiedenen Präambel-Korrelationen geladen und kombiniert werden. Die weitere Verarbeitung erfolgt analog zum oben beschriebenen Verfahren.

Bei Ausführungsbeispielen weist die erste Korrelationsstufe mindestens zwei parallele Korrelateren auf.

Bei Ausführungsbeispielen können im zweiten Korrelationsschritt die Ergebnisse aus den mehreren Korrelateren der ersten Stufe geladen und entsprechend des Sprungmusters kombiniert werden.

### 3.2 Optimierte Präambel-Korrelation

Die in den folgenden Unterkapiteln beschriebenen Ideen sind auf Basis der Präambel-Korrelation aus Abschnitt 3.1 beschrieben. Sie sind jedoch allgemein für alle Systeme gültig, die eine Präambel zur Detektion einsetzen, auch im Fall, dass nur eine zusammenhängende Präambel im Telegramm/Paket vorhanden ist.

### 3.2.1 Normierung der Korrelationsergebnisse zur Störunterdrückung

In Fig. 13 wird am Beispiel einer Präambel mit 12 Symbolen gezeigt, wie die Performance der Korrelation gegen Frequenzoffsets erhöht werden kann, in dem die Präambel in Teilabschnitte zerlegt wird, die einzeln korreliert und anschließend inkohärent addiert werden.

Diese Idee zur Verbesserung der Korrelationsergebnisse unter Frequenzoffsets wurde bereits in [3] und [4] ausführlich erläutert.

In einem typischen System, in dem keine Störung auftritt kann der Schwellwert nach der Korrelation auf Basis des Hintergrundrauschens gewählt werden. Durch die Länge der Korrelation wird eine zusätzliche Rauschmittelung durchgeführt, welche die Anzahl der Fehldetektionen bei passendem Schwellwert einschränkt. Alle Korrelationswerte über dem Schwellwert stellen mit sehr hoher Wahrscheinlichkeit den Beginn eines übertragenen Datenpakets dar. Je höher die Empfangsleistung des übertragenen Datenpakets am Datenempfänger, desto höher ist auch der Korrelationswert und somit die Wahrscheinlichkeit dass ein Datenpaket übertragen wurde.

Können während der Übertragung Störungen durch andere Teilnehmer (gleiches oder fremdes Netz) auftreten, ist der oben beschriebene Ansatz nur noch sehr eingeschränkt einsetzbar, da die Störung das Ergebnis der Korrelation beeinflusst und der Wert an dieser Stelle typischerweise über dem Schwellwert der folgenden Paketdetektion liegt. An diesen Stellen nimmt der Datenempfänger somit fälschlicherweise eine Detektion an. Dies stellt insbesondere dann ein Problem dar, wenn die Empfangsleistung des Störers deutlich stärker als das Rauschen ist, da dann die Korrelation auch ein verhältnismäßig hohes Ergebnis liefert.

Abhilfe schafft hier eine Normierung der Korrelationsergebnisse auf die empfangene (geschätzte) Störung. So können beispielsweise die Beträge der einzelnen Teildatenpakete nach der geschätzten Störung gewichtet werden. Dadurch haben gestörte Teildatenpakete einen geringeren Einfluss als Teildatenpakete ohne Störung.

Allgemein gesprochen ist zur Normierung nicht-lineare Funktion notwendig. Dies kann beispielsweise wie oben beschriebene die Wichtung der Beträge nach der geschätzten Störung darstellen.

Bei Ausführungsbeispielen kann eine Normierung der Teilpakete auf die geschätzte Störung vorgenommen werden. Diese Normierung kann entweder vor der Korrelation oder auch nach der Korrelation stattfinden.

Ein konkreteres Beispiel dieser Normierung ist die Normierung der Korrelationsergebnisse auf die empfangene Signalleistung. Hierfür werden für alle Symbole der Präambel die Betragsquadrate gebildet und anschließend die Summe berechnet.

Diese Summe wird durch das Betragsquadrat des Korrelationsergebnisses dividiert wobei aus dem Quotienten anschließend die Wurzel gezogen wird, was das normierte Korrelationsergebnis darstellt. Durch diese Normierung haben nun alle Pakete, die am Datenempfänger (z.B. Basisstation) eintreffen einen Korrelationswert von eins (bei einer ideal empfangenen Pilotsequenz ohne Rauschen und Störung) oder niedriger.

Anstelle der Betragsquadratbildung und der anschließenden Wurzelziehung kann auch eine Approximation durchgeführt werden, dies sind beispielsweise:

1.

$$abs(I)+abs(Q)$$

2. Newton Rapson Verfahren $1/sqrt(X)$

3. Approximation der Beträge und Quadratischem addieren

Tritt eine Störung auf, wird das Korrelationsergebnis ebenfalls auf die empfangene Signalleistung normiert. Da die empfangenen Symbole während der Störung im Allgemeinen jedoch von der erwarteten Präambel-Sequenz abweichen, ist das Korrelationsergebnis deutlich geringer als bei einem nicht gestörten Signal.

Die Normierung sorgt somit dafür, dass das Korrelationsergebnis deutlich unter eins liegt und somit die Wahrscheinlichkeit einer Fehldetektion sinkt.

Alternativ zur Berechnung des Betragsquadrats des Korrelationsergebnisses kann die Division des Korrelationsergebnisses auch direkt durch die Wurzel der ermittelten Signalleistung erfolgen.

Weiterhin kann die Normierung auch vor der Korrelation stattfinden. Hierfür wird die Signalleistung in gleicher Weise wie oben berechnet und danach die Wurzel gezogen. Dieses Ergebnis wird auf jedes Eingangssymbol mittels Division angewandt.

Bei Ausführungsbeispielen kann eine Normierung des Korrelationsergebnisses auf die empfangene Signalleistung der Präambel durchgeführt werden. Diese kann durch mehrere Möglichkeiten erfolgen.

Falls vor und/oder nach der empfangenen Präambel Datensymbole erfolgen, können diese Datensymbole auch (teilweise) in die Berechnung der Leistung mit einbezogen werden. Somit ist die Anzahl an Symbolen welche für die Ermittlung der Leistung eingesetzt werden größer als die Anzahl an Präambelsymbolen für die Korrelation.

Bei Ausführungsbeispielen kann die Bestimmung der empfangenen Signalleistung über zumindest ein Datensymbol durchgeführt werden.

Die vorherigen Verfahren haben immer eine Korrelation ohne Unterteilung in Teilabschnitte wie in Fig. 13 vorausgesetzt. Um in diesem Fall ebenfalls die Normierung durchführen zu können, kann für jeden Teilabschnitt eine eigene Normierung stattfinden. Nach der Normierung können die Teilbereiche wie gehabt addiert werden.

Um die Leistung für die Normierung der Teilbereiche zu bestimmen, gibt es nun zwei Möglichkeiten:

1. Getrennte Bestimmung der Leistung für jeden Teilbereich

2. Gemeinsame Bestimmung der Leistung für alle Teilbereiche

In beiden Varianten kann wie oben entweder die gleiche Anzahl an Symbolen wie für die Korrelation verwendet werden oder aber es werden wieder benachbarte Symbole einbezogen.

Bei Ausführungsbeispielen kann eine getrennte Normierung der Teilbereiche der Korrelation durchgeführt werden. Hierbei kann entweder für jeden Teilbereich eine eigene Bestimmung der Leistung oder eine gemeinsame Leistungsbestimmung erfolgen.

Wird wie im Falle von Abschnitt 2 ein Vielkanaldetektor eingesetzt, kann die Normierung für jeden Kanal getrennt erfolgen. Falls davon auszugehen ist, dass Störungen immer mindestens zwei der Kanäle belegen, kann die Leistungsermittlung auch gemeinsam für mindestens zwei Kanäle erfolgen.

Bei Ausführungsbeispielen kann bei einem Vielkanalempfänger die Normierung auf allen Kanälen parallel durchgeführt werden, wobei die Leistungsermittlung auch über mehrere Kanäle hinweg erfolgen kann.

### 3.2.2 Verzögerungsstruktur mit Ringpuffern

Bei Einsatz einer geteilten abschnittsweisen Korrelation können Ergebnisse aus unterschiedlichen Zeitpunkten, abhängig von der zeitlichen Lage der Sequenz, addiert werden.

Eine Möglichkeit dies zu erreichen ist es, die Korrelation für alle notwendigen Zeitpunkte vor der Addition zu berechnen. Dies hat jedoch unter gewissen Umständen den Nachteil, dass die vorhergehende Pufferstruktur (in diesem Fall der Ausgang der Filterbank) die Eingangs-Daten für den vollständigen Korrelationszeitraum vorhalten muss.

Eine Lösung um dieses Problem zu umgehen, ist es sinnvoll eine Pufferstruktur für die Teilkorrelationsergebnisse anzulegen.

Dadurch können am Eingang nur noch die Daten für die Länge der Teilkorrelation vorgehalten werden.

Am Ausgang können n-Ringpuffer für die n-Teilkorrelationen eingesetzt werden. Durch die Länge jedes Ringpuffers lässt sich die zeitliche Abhängigkeit zwischen den Teilkorrelationen herstellen. Das heißt die Länge des Puffers bestimmt die Dauer der Verzögerung.

Zur Berechnung des Gesamtkorrelationsergebnisses können die jeweils ältesten Einträge aller Ringpuffer aufaddiert werden, bevor diese im nächsten Schritt verworfen werden.

Bei Ausführungsbeispielen kann anstelle eines großen Puffers am Eingang der (Teil- )Korrelation eine Pufferstruktur am Ausgang der Teil-Korrelationen verwendet werden. Durch die Länge der jeweiligen Puffer wird die Zeitverzögerung (siehe Fig. 16) realisiert.

### 3.2.3 Reduktion der Kanalanzahl am Eingang des Paket-Korrelators

In Systemen, in denen der Frequenzoffset (zufälliger und/oder systematischer Offset) zwischen dem Datensender und Datenempfänger ein Vielfaches der Symbolrate betragen kann, ist es notwendig einen Vielkanal-Korrelator einzusetzen.

Um die parallele Korrelation auf den Kanälen durchführen zu können, kann vorweg eine Filterbank verwendet werden, welche die Symbole für jeden Kanal erzeugt.

Durch den Zusammenhang zwischen der (Teil-)Korrelationslänge und den maximalen zulässigen Frequenzoffset zwischen zwei Kanälen (siehe Abschnitt 2) ergibt sich eine große Anzahl an Kanälen die in der Filterbank berechnet und gespeichert werden muss.

Wie jedoch in Abschnitt 2 beschrieben, gilt diese Einschränkung für den Vielkanal-Korrelator und nicht auf die vorhergehende Filterbank. Dies ist grafisch in Fig. 20 anhand des Frequenzganges des Filters veranschaulicht.

Wird die Überabtastung der Filterbank in Frequenzrichtung bis zu einem gewissen Maße reduziert und anschließend vor der Korrelation die Frequenzauflösung durch eine Frequenzverschiebung der Symbole wiederhergestellt, hat dies wenig bis keinen Einfluss auf die Performance der Korrelation. Es wird jedoch die notwendige Rechenleistung und der Speicherverbrauch der Filterbank und des folgenden Speichers um den gewählten Faktor reduziert.

Bei Ausführungsbeispielen kann die Filterbank des Vielkanal-Korrelators eine andere Frequenz-Überabtastung aufweisen als der folgende Korrelator. Um die Frequenzauflösung im Korrelator wieder zu erhöhen, können die Symbole der Filterbank mit einer komplexen Exponentialschwingung (entspricht einer digitalen Frequenzverschiebung) multipliziert werden, wobei die Wahl der Exponentialschwingung vom Frequenzoffset abhängig ist.

Anstelle der Multiplikation der Eingangsdaten mit der Exponentialschwingung kann auch die Referenzsequenz mit der Exponentialschwingung multipliziert werden. Hierdurch gibt es dann für jeden Frequenzoffset eine eigene Referenzsequenz, es entfällt jedoch der Aufwand der Multiplikation in jedem Rechenschritt.

Bei Ausführungsbeispielen kann für jede zu generierende Frequenzlinie aus den Daten der Filterbank eine eigene Referenzsequenz verwendet, wobei die angepasste Referenzfrequenz aus der ursprünglichen Referenzsequenz mittels Multiplikation mit der entsprechenden Exponentialschwingung erzeugt wird.

### 3.2.4 Reduktion der Kanalanzahl am Ausgang des Paket-Korrelators

Eine weitere Möglichkeit zur Reduktion der Kanäle ergibt sich aus der Feststellung, dass die hohe Frequenzauflösung der Präambel-Korrelation für die nachfolgende Gruppen- und Gruppensequenz-Korrelation nicht benötigt wird.

Deshalb kann zwischen der Präambel-Korrelation und der Gruppen-Korrelation eine Maximum-Bildung über benachbarte Kanäle durchgeführt und die Kanalanzahl entsprechend reduziert werden. Diese Maßnahme führt jedoch zu einer Erhöhung der Fehldetektionswahrscheinlichkeit in der auf den Paket-Korrelator folgenden Paket-Detektion, so dass in der Regel nur zwei benachbarte Kanäle zusammengefasst werden können. Dieser Fall ist in Fig. 22 dargestellt.

Durch die Maximum-Bildung und verwerfen des/der kleinere(n) Wert(e) kann die Anzahl der Kanäle nach der ersten Korrelationsstufe verringert werden, was einen geringeren Rechenaufwand und kleinere Speicher mit sich zieht.

Bei Ausführungsbeispielen kann nach der Berechnung der Präambel-Korrelation eine Maximum-Bildung über benachbarte Kanäle durchgeführt werden. Für die weitere Verarbeitung wird/werden der/die kleinere(n) Wert(e) verworfen.

### 4. Paket-Korrelator für ein Funkübertragungssystem mit zeitvariantem Frequenzdrift

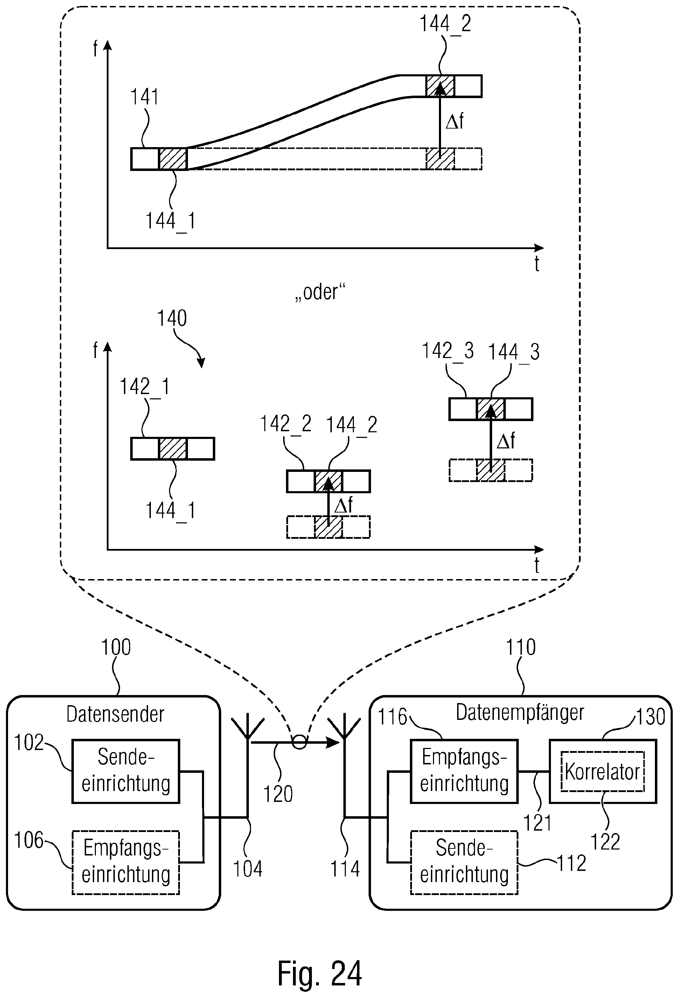

Fig. 24 zeigt ein schematisches Blockschaltbild eines Funkübertragungssystems mit einem Datensender 100 und einem Datenempfänger 110, gemäß einem Ausführungsbeispiel der vorliegenden Erfindung.

Der Datenempfänger 110 kann konfiguriert sein, um ein Signal 120 von einem Datensender 100 zu empfangen, wobei das Signal 120 zumindest zwei Pilotsequenzen 144_1, 142_2 (und 144_3) aufweist, die entsprechend eines (senderseitigen) Pilotmusters in der Zeit und optional in der Frequenz verteilt sind, wobei zumindest eine zweite Pilotsequenz 144_2 (und 144_3) der zumindest zwei Pilotsequenzen 144_1, 142_2 (und 144_3) eine zeitlich veränderliche Frequenzverschiebung $\Delta f$ (Frequenzdrift) gegenüber einer ersten Pilotsequenz 144_1 der zumindest zwei Pilotsequenzen 144_1, 142_2 (und 144_3) aufweist.

Der Datenempfänger kann einen Detektor 130 (z.B. Paket-Detektor) mit einem Korrelator 122 aufweisen, der konfiguriert ist, um die zumindest zwei Pilotsequenzen 144_1, 142_2 (und 144_3) (z.B. in dem empfangenen Signal 121) basierend auf einem Korrelationsmuster zu detektieren, wobei das Korrelationsmuster in der Frequenz an die zeitlich veränderliche Frequenzverschiebung angepasst ist, um einen Einfluss der zeitlich veränderlichen Frequenzverschiebung $\Delta f$ zu reduzieren (z.B. zu kompensieren).

In Fig. 24 weist das Signal 120 beispielhaft zwei oder drei Pilotsequenzen 144_1, 144_2 (und 144_3) auf. Bei Ausführungsbeispielen kann das Signal 120 bis zu n Pilotsequenzen 144_1 bis 144_n aufweisen, wobei n eine natürliche Zahl größer gleich zwei ist, $n \geq 2$.

Wie hierbei in Fig. 24 beispielhaft angedeutet ist, kann das Signal 120 ein Datenpaket 141 aufweisen, wobei das Datenpaket 141 die zumindest zwei Pilotsequenzen 144_1 und 144_2 aufweisen kann. Das Pilotmuster kann hierbei einen zeitlichen Abstand zwischen den zumindest zwei Pilotsequenzen 144_1 und 144_2 angeben.

Alternativ kann das Signal 120 zumindest zwei Teil-Datenpakete 142_1, 142_2 (und 142_3) aufweisen (vgl. Abschnitt 1), wobei die zumindest zwei Teil-Datenpakete 142_1, 142_2 (und 142_3) jeweils eine Pilotsequenz 144_1, 142_2 (und 144_3) aufweisen, und wobei die zumindest zwei Teil-Datenpakete 142_1, 142_2 (und 142_3) in der Zeit und optional in der Frequenz entsprechend eines Sprungmusters 140 verteilt sind. Das Pilotmuster kann hierbei eine Verteilung der zumindest zwei Pilotsequenzen 142_1, 142_2 (und 142_3) in der Zeit und optional in der Frequenz angeben. Beispielsweise kann das Pilotmuster gleich dem Sprungmuster 140 sein. Alternativ kann das Pilotmuster von dem Sprungmuster 140 abgeleitet sein, z.B. wenn das Sprungmuster 140 anstelle von relativen Zeitpunkten absolute Zeitpunkte der Teil-Datenpakete 142_1, 142_2 (und 142_3) definiert oder sich die Pilotsequenzen 142_1, 142_2 (und 142_3) an anderen Positionen innerhalb der Teil-Datenpakete 142_1, 142_2 (und 142_3) befinden als diejenigen, die durch das Sprungmuster 140 definiert werden.

Bei Ausführungsbeispielen kann das von dem Korrelator 122 verwendete Korrelationsmuster gleich einem (senderseitigen) Pilotmuster sein. Alternativ kann das von dem Korrelator 122 verwendete Korrelationsmuster von dem (senderseitigen) Pilotmuster abgeleitet sein, z.B. wenn das Korrelationsmuster bereits Übertragungseigenschaften des verwendeten Kommunikationskanals (mit Ausnahme der zeitlich veränderlichen Frequenzverschiebung $\Delta f$) berücksichtigt.

Bedingt durch die zeitlich veränderliche Frequenzverschiebung $\Delta f$ stimmt eine durch das Korrelationsmuster angegebene, erwartete Verteilung der zumindest zwei Pilotsequenzen 144_1, 144_2 (und 144_3) jedoch nicht mit der tatsächlichen Verteilung der zumindest zwei Pilotsequenzen 144_1, 144_2 (und 144_3) des empfangenen Signals überein.

Bei Ausführungsbeispielen kann der Datenempfänger 110 (z.B. der Detektor 130 des Datenempfänger 110 oder der Korrelator 122 selber) daher konfiguriert sein, um das Korrelationsmuster in der Frequenz anzupassen, um einen Einfluss der Frequenzverschiebung $\Delta f$ zu reduzieren (z.B. zu kompensieren).

Beispielsweise kann der Datenempfänger 110 konfiguriert sein, um die zeitlich veränderliche Frequenzverschiebung der zumindest einen zweiten Pilotsequenz 144_2 gegenüber der ersten Pilotsequenz 144_1 zu schätzen und um das Korrelationsmuster in der Frequenz basierend auf der geschätzten zeitlich veränderlichen Frequenzverschiebung anzupassen, z.B. um das Korrelationsmuster in der Frequenz um die geschätzte zeitlich veränderliche Frequenzverschiebung zu verschieben bzw. um das Korrelationsmuster mit der geschätzten zeitlichen Veränderungen zu beaufschlagen.

Zum Beispiel kann der Datenempfänger 110 bei einer geschätzten zeitlich veränderlichen Frequenzverschiebung von z.B. +100 Hz/s das Korrelationsmuster in der Frequenz um +100 Hz/s anpassen (z.B. mit einer zeitlich veränderlichen Frequenzverschiebung von +100 Hz/s beaufschlagen), um einen Einfluss der zeitlich veränderlichen Frequenzverschiebung zu reduzieren oder zu kompensieren. Dementsprechend kann der Datenempfänger 110 bei einer geschätzten zeitlich veränderlichen Frequenzverschiebung von z.B. -300 Hz/s das Korrelationsmuster in der Frequenz um -300 Hz/s anpassen (z.B. mit einer zeitlich veränderlichen Frequenzverschiebung von -300 Hz/s beaufschlagen), um einen Einfluss der zeitlich veränderlichen Frequenzverschiebung zu reduzieren oder zu kompensieren.

Alternativ kann der Datenempfänger 110 (z.B. der Detektor 130 des Datenempfänger 110 oder der Korrelator 122 selber) bei Ausführungsbeispielen auch konfiguriert sein, um die zumindest zwei Pilotsequenzen 144_1, 144_2 (und 144_3) basierend auf einem aus einem Satz von Korrelationsmustern ausgewählten Korrelationsmuster zu detektieren, wobei die Korrelationsmuster des Satzes von Korrelationsmustern unterschiedliche Einflüsse von zeitlich veränderlichen Frequenzverschiebungen reduzieren oder kompensieren.

Beispielsweise kann der Datenempfänger 110 (oder der Korrelator 122) konfiguriert sein, um die zeitlich veränderliche Frequenzverschiebung der zumindest einen zweiten Pilotsequenz 144_2 gegenüber der ersten Pilotsequenz 144_1 zu schätzen, und um ein Korrelationsmuster aus dem Satz von Korrelationsmustern in Abhängigkeit der geschätzten Frequenzverschiebung auszuwählen, um das ausgewählte Korrelationsmuster zu erhalten.

Anstelle der Anpassung des Korrelationsmusters in der Frequenz kann bei Ausführungsbeispielen also auch ein geeignetes Korrelationsmuster aus dem Satz von Korrelationsmustern ausgewählt werden, um einen Einfluss der zeitlich veränderlichen Frequenzverschiebung zu reduzieren.

Die Korrelationsmuster des Satzes von Korrelationsmustern können hierbei von dem gleichen Pilotmuster, das die Verteilung der zumindest zwei Pilotsequenzen 144_1 und 144_2 in dem Datenpaket 141 beschreibt, abgeleitet sein und mit unterschiedlichen, zeitlich veränderlichen Frequenzverschiebungen beaufschlagt sein, so dass ein jeweiliges Korrelationsmuster einen Einfluss einer jeweiligen zeitlich veränderlichen Frequenzverschiebung reduziert oder kompensiert.

Natürlich können die Korrelationsmuster des Satzes von Korrelationsmustern auch von dem gleichen Sprungmuster, das die Verteilung in der Zeit und optional in der Frequenz der zumindest zwei Teil-Datenpakete beschreibt, abgeleitet sein und mit unterschiedlichen, zeitlich veränderlichen Frequenzverschiebungen beaufschlagt sein, so dass ein jeweiliges Korrelationsmuster einen Einfluss einer jeweiligen zeitlich veränderlichen Frequenzverschiebung reduziert oder kompensiert.

Beispielsweise kann ein erstes Korrelationsmuster des Satzes von Korrelationsmustern mit einer zeitlich veränderlichen Frequenzverschiebung von z.B. +100 Hz/s beaufschlagt sein, um einen Einfluss einer zeitlich veränderlichen Frequenzverschiebung von z.B. +100 Hz/s zu reduzieren oder zu kompensieren. Ein zweites Korrelationsmuster des Satzes von Korrelationsmustern kann mit einer zeitlich veränderlichen Frequenzverschiebung von z.B. +200 Hz/s beaufschlagt sein, um einen Einfluss einer zeitlich veränderlichen Frequenzverschiebung von z.B. +200 Hz/s zu reduzieren oder zu kompensieren.

Bei Ausführungsbeispielen kann die zeitlich veränderliche Frequenzverschiebung, z.B. im Falle eines beweglichen Datensenders 100 und/oder Datenempfängers 110, durch eine relative Bewegungsänderung zwischen dem Datensender 100 und dem Datenempfänger 110 hervorgerufen werden.

Bei Ausführungsbeispielen kann die zeitlich veränderliche Frequenzverschiebung auch zusätzlich oder alternativ durch eine zeitlich veränderlichen Fehlanpassungen zwischen Oszillatoren von Datensender und Datenempfänger resultieren.

Bei Ausführungsbeispielen kann einer aus dem Datensender 100 und dem Datenempfänger 110 ein Satellit oder ein Relay sein, während der andere aus dem Datensender 100 und dem Datenempfänger 110 ein stationäre Station sein kann.

Bei Ausführungsbeispielen kann der Datensender 100 eine Sendeeinrichtung (oder Sendemodul, oder Transmitter) 102 aufweisen, die ausgebildet ist, um das Signal 120 zu senden. Die Sendeeinrichtung 102 kann mit einer Antenne 104 des Datensenders 100 verbunden sein. Optional kann der Datensender 100 eine Empfangseinrichtung (oder Empfangsmodul, oder Receiver) 106 aufweisen, die ausgebildet ist, um ein Signal zu empfangen. Die Empfangseinrichtung 106 kann mit der Antenne 104 oder einer weiteren (separaten) Antenne des Datensenders 100 verbunden sein. Der Datensender 100 kann auch eine kombinierte Sendeempfangseinrichtung (Transceiver) aufweisen.

Bei Ausführungsbeispielen kann der Datenempfänger 110 eine Empfangseinrichtung (oder Empfangsmodul, oder Receiver) 116 aufweisen, die ausgebildet ist, um das Signal 120 zu empfangen, um ein empfangenes Signal 121 bereitzustellen. Die Empfangseinrichtung 116 kann mit einer Antenne 114 des Datenempfängers 110 verbunden sein. Optional kann der Datenempfänger 110 eine Sendeeinrichtung (oder Sendemodul, oder Transmitter) 112 aufweisen, die ausgebildet ist, um ein Signal zu senden. Die Sendeeinrichtung 112 kann mit der Antenne 114 oder einer weiteren (separaten) Antenne des Datenempfängers 110 verbunden sein. Der Datenempfänger 110 kann auch eine kombinierte Sendeempfangseinrichtung (Transceiver) aufweisen.

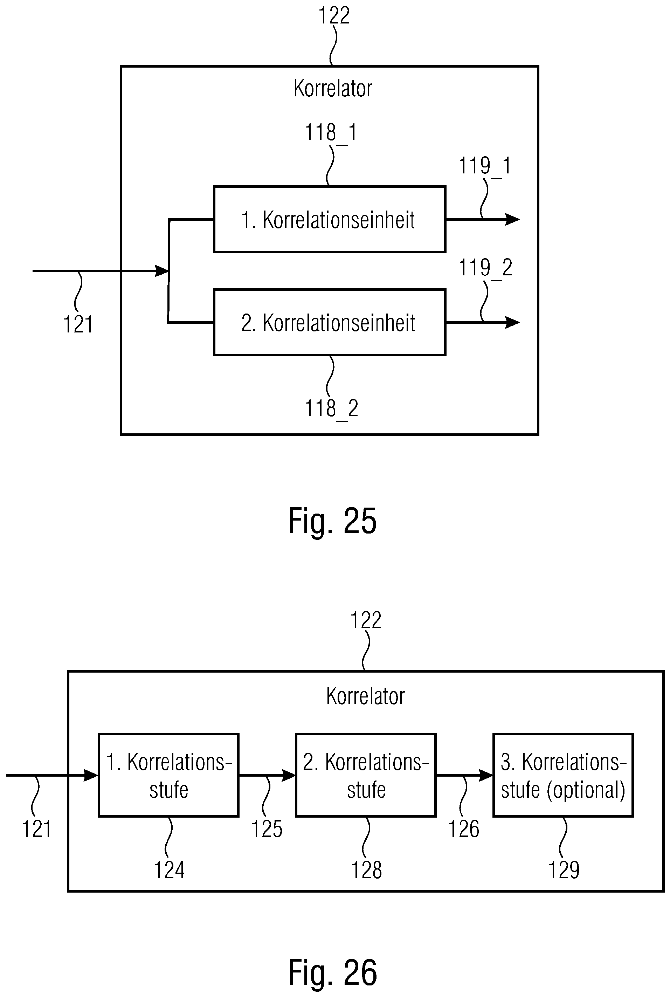

Fig. 25 zeigt ein schematisches Blockschaltbild eines Korrelators 122, gemäß einem Ausführungsbeispiel der vorliegenden Erfindung.

Wie in Fig. 25 zu erkennen ist, kann der Korrelator 122 zumindest zwei parallel arbeitende Korrelationseinheiten 118_1 und 118_2 aufweisen, wobei eine erste Korrelationseinheit 122_1 der zumindest zwei parallel arbeitenden Korrelationseinheiten 118_1 und 118_2 konfiguriert sein kann, um basierend auf dem Korrelationsmuster Korrelationen der zumindest zwei Pilotsequenzen 144_1, 144_2 (und 144_3) mit entsprechenden Referenzsequenzen durchzuführen, um einen Satz von Korrelationsergebnissen 119_1 der ersten Korrelationseinheit 118_1 zu erhalten, wobei eine zweite Korrelationseinheit 118_2 der zumindest zwei parallel arbeitenden Korrelationseinheiten 118_1 und 118_2 konfiguriert sein kann, um basierend auf dem Korrelationsmuster Korrelationen der zumindest zwei Pilotsequenzen 144_1, 144_2 (und 144_3) mit entsprechenden Referenzsequenzen durchzuführen, um einen Satz von Korrelationsergebnissen 119_2 der zweiten Korrelationseinheit 118_2 zu erhalten.

Die zumindest zwei parallel arbeitenden Korrelationseinheiten 118_1 und 118_2 können konfiguriert sein, um in der Frequenz unterschiedlich angepasste Korrelationsmuster zu verwenden, um bei der Detektion Einflüsse unterschiedlicher zeitlich veränderlicher Frequenzverschiebungen zu reduzieren oder zu kompensieren.

Beispielsweise kann der Datenempfänger 110 konfiguriert sein, um das in den zumindest zwei parallel arbeitenden Korrelationseinheiten 118_1 und 118_2 verwendete Korrelationsmuster in der Frequenz unterschiedlich anzupassen, um Einflüsse unterschiedlicher Frequenzverschiebungen zu reduzieren oder zu kompensieren.

Der Detektor 130 kann hierbei konfiguriert sein, um einen Satz von Korrelationsergebnissen aus

- dem Satz von Korrelationsergebnissen 119_1 der ersten Korrelationseinheit 118_1, und
- dem Satz von Korrelationsergebnissen 119_2 der zweiten Korrelationseinheit 118_2, basierend auf dem die Detektion der zumindest zwei Pilotsequenzen 144_1, 144_2 (und 144_3) erfolgt, in Abhängigkeit von Werten des jeweiligen Satzes von Korrelationsergebnissen 119_1 und 119_2 auszuwählen.

Beispielsweise kann der Detektor 130 konfiguriert sein, um die zumindest zwei Pilotsequenzen 144_1, 144_2 (und 144_3) basierend auf einem aus

- dem Satz von Korrelationsergebnissen 119_1 der ersten Korrelationseinheit 118_1, und
- dem Satz von Korrelationsergebnissen 119_2 der zweiten Korrelationseinheit 118_2, die die höchsten Werte aufweisen, zu detektieren.

Fig. 26 zeigt ein schematisches Blockschaltbild eines Korrelators 122, gemäß einem weiteren Ausführungsbeispiel der vorliegenden Erfindung.

Wie in Fig. 26 zu erkennen ist, kann der mehrstufige Korrelator 122 eine erste Korrelationsstufe 124 und zumindest eine auf die erste Korrelationsstufe 124 folgende zweite Korrelationsstufe 128 (und 129) aufweisen, die basierend auf Korrelationsergebnissen 125 der ersten Korrelationsstufe 124 arbeitet, wobei zumindest ein Korrelationsmuster, das in zumindest einer Korrelationsstufe aus der zumindest einen zweiten Korrelationsstufe 128 (und 129) verwendet wird, in der Frequenz angepasst ist, um den Einfluss der zeitlich veränderlichen Frequenzverschiebung zu reduzieren oder zu kompensieren.

Bei Ausführungsbeispielen kann der mehrstufige Korrelator 122 eine erste Korrelationsstufe 124 und eine zweite Korrelationsstufe 128, die basierend auf Korrelationsergebnissen 125 der ersten Korrelationsstufe 124 arbeitet, aufweisen, wobei ein Korrelationsmuster, das in der zweiten Korrelationsstufe 128 verwendet wird, in der Frequenz angepasst ist, um den Einfluss der zeitlich veränderlichen Frequenzverschiebung zu reduzieren oder zu kompensieren.

Bei Ausführungsbeispielen kann der mehrstufige Korrelator 122 eine erste Korrelationsstufe 124, eine zweite Korrelationsstufe 128, die basierend auf Korrelationsergebnissen 125 der ersten Korrelationsstufe 124 arbeitet, und eine dritte Korrelationsstufe 129, die basierend auf Korrelationsergebnissen 126 der zweiten Korrelationsstufe 128 arbeitet, aufweisen, wobei ein Korrelationsmuster, das in der zweiten Korrelationsstufe 128 verwendet wird und/oder ein Korrelationsmuster, das in der dritten Korrelationsstufe 129 verwendet wird, in der Frequenz angepasst ist, um den Einfluss der zeitlich veränderlichen Frequenzverschiebung zu reduzieren oder zu kompensieren.

Bei Ausführungsbeispielen kann die erste Korrelationsstufe 124 konfiguriert sein, um eine Präambel-Korrelation durchzuführen, wie dies in den Abschnitten 2 und 3 ausführlich beschrieben wurde.

Im Detail kann die erste Korrelationsstufe 124 konfiguriert sein, wie dies z.B. in Bezug auf Fig. 10 erläutert wurde, um das empfangene Signal 121 oder eine davon abgeleitete Version mit einer Mehrzahl von Pilotsequenzabschnitten zu korrelieren 150, die mit unterschiedlichen Abschnitten der Pilotsequenzen der zumindest zwei Teil-Datenpaketen 142_1, 142_2 (und 142_3) korrespondieren, um eine Mehrzahl von Abschnittskorrelationsergebnissen 152 zu erhalten, wobei die erste Korrelationsstufe 124 konfiguriert sein kann, um die Mehrzahl von Abschnittskorrelationsergebnissen 152 zu kombinieren 154, um einen Satz von Korrelationsergebnissen 156 oder einen Teilsatz von Korrelationsergebnissen 158 als Korrelationsergebnisse 125 der ersten Korrelationsstufe 124 zu erhalten.

Bei Ausführungsbeispielen kann die erste Korrelationsstufe 124 natürlich auch konfiguriert sein, um zumindest zwei Pilotsequenzen zu detektieren, die nicht in zumindest zwei Teil-Datenpaketen 142_1, 142_2 (und 142_3) enthalten sind, sondern in einem einzelnen Datenpaket 141 (vgl. Fig. 24). In diesem Fall kann die erste Korrelationsstufe 124 konfiguriert sein, um das empfangene Signal 121 oder eine davon abgeleitete Version mit einer Mehrzahl von Pilotsequenzabschnitten zu korrelieren 150, die mit unterschiedlichen Abschnitten der zumindest zwei Pilotsequenzen 144_1 und 144_2 korrespondieren, um eine Mehrzahl von Abschnittskorrelationsergebnissen 152 zu erhalten, wobei die erste Korrelationsstufe 124 konfiguriert sein kann, um die Mehrzahl von Abschnittskorrelationsergebnissen 152 zu kombinieren 154, um einen Satz von Korrelationsergebnissen 156 oder einen Teilsatz von Korrelationsergebnissen 158 als Korrelationsergebnisse 125 der ersten Korrelationsstufe 124 zu erhalten.

Bei Ausführungsbeispielen kann die zweite Korrelationsstufe 128 konfiguriert sein, um eine Gruppen-Korrelation durchzuführen, sofern das Signal 120 eine Vielzahl von Teil-Datenpaketen 142_1 bis 142_n aufweist, die gruppenweise das gleiche relative Gruppensprungmuster 140_1 und 140_2 aufweisen, wie dies in den Abschnitten 2 und 3 ausführlich beschrieben wurde.

Im Detail kann die zweite Korrelationsstufe 128 konfiguriert sein, wie dies z.B. in Bezug auf Fig. 11 erläutert wurde, um aus dem Satz von Korrelationsergebnissen 156 der ersten Korrelationsstufe 124 Gruppen von Korrelationsergebnissen 160 basierend auf einem Gruppenkorrelationsmuster 162, das von einem Gruppensprungmuster abgeleitet ist, auszuwählen und gruppenweise zu kombinieren 164, um einen Satz von Korrelationsergebnissen 166 der zweiten Korrelationsstufe 128 zu erhalten.

Bei Ausführungsbeispielen kann die zweite Korrelationsstufe 128 natürlich auch konfiguriert sein, um eine Vielzahl von Pilotsequenzen zu detektieren, die nicht in einer Vielzahl von Teil-Datenpaketen 142_1 bis 142_n enthalten sind, sondern in einem einzelnen Datenpaket 141 und innerhalb des Datenpakets 141 gruppenweise das gleiche relative Gruppenpilotmuster aufweisen. In diesem Fall kann die zweite Korrelationsstufe 128 konfiguriert sein, um aus dem Satz von Korrelationsergebnissen 156 der ersten Korrelationsstufe 124 Gruppen von Korrelationsergebnissen 160 basierend auf einem Gruppenkorrelationsmuster 162, das von dem Gruppenpilotmuster abgeleitet ist, auszuwählen und gruppenweise zu kombinieren 164, um einen Satz von Korrelationsergebnissen 166 der zweiten Korrelationsstufe 128 zu erhalten.

Bei Ausführungsbeispielen kann die dritte Korrelationsstufe 129 konfiguriert sein, um eine Gruppensequenz-Korrelation durchzuführen, sofern die zumindest zwei Gruppen von Teil-Datenpaketen eine Sequenz bilden und ein relatives Gruppensequenzsprungmuster zueinander aufweisen, wie dies in den Abschnitten 2 und 3 ausführlich beschrieben wurde.

Im Detail kann die dritte Korrelationsstufe 129 konfiguriert sein, wie dies z.B. in Bezug auf Fig. 12 erläutert wurde, um aus dem Satz von Korrelationsergebnissen 166 der zweiten Korrelationsstufe 128 Gruppen von Korrelationsergebnissen basierend auf einem Gruppensequenzkorrelationsmuster, das von dem Gruppensequenzsprungmuster abgeleitet ist, auszuwählen und gruppenweise zu kombinieren, um einen Satz von Korrelationsergebnissen 182 der dritten Korrelationsstufe 129 zu erhalten.

Bei Ausführungsbeispielen kann die dritte Korrelationsstufe 129 natürlich auch konfiguriert sein, um eine Vielzahl von Pilotsequenzen zu detektieren, die nicht in einer Vielzahl von Teil-Datenpaketen 142_1 bis 142_n enthalten sind, sondern in einem einzelnen Datenpaket 141 und innerhalb des Datenpakets 141 ein relatives Gruppensequenzpilotmuster aufweisen. In diesem Fall kann die dritte Korrelationsstufe 129 konfiguriert sein, um aus dem Satz von Korrelationsergebnissen 166 der zweiten Korrelationsstufe 128 Gruppen von Korrelationsergebnissen basierend auf einem Gruppensequenzkorrelationsmuster, das von dem Gruppensequenzpilotmuster abgeleitet ist, auszuwählen und gruppenweise zu kombinieren, um einen Satz von Korrelationsergebnissen 182 der dritten Korrelationsstufe 129 zu erhalten.

Wie bereits erwähnt kann hierbei ein Korrelationsmuster das in der zweiten Korrelationsstufe 128 und/oder in der dritten Korrelationsstufe 129 verwendet wird, in der Frequenz angepasst sein, um den Einfluss der Frequenzverschiebung zu reduzieren oder zu kompensieren.

Beispielsweise kann der Datenempfänger 110 (z.B. oder der Detektor 130 des Datenempfängers 110 oder der mehrstufige Korrelator 122 selber) konfiguriert sein, um ein Korrelationsmuster, das in der zweiten Korrelationsstufe 128 und/oder in der dritten Korrelationsstufe 129 verwendet wird, in der Frequenz anzupassen, um den Einfluss der Frequenzverschiebung zu reduzieren oder zu kompensieren.

Zum Beispiel kann der Datenempfänger 110 konfiguriert sein, um das in der zweiten Korrelationsstufe 128 verwendete Gruppenkorrelationsmuster in der Frequenz anzupassen, um den Einfluss der zeitlich veränderlichen Frequenzverschiebung zu reduzieren oder zu kompensieren. Ferner oder alternativ kann der Datenempfänger 110 konfiguriert sein, um das in der dritten Korrelationsstufe 129 verwendete Gruppensequenzkorrelationsmuster in der Frequenz anzupassen, um den Einfluss der zeitlich veränderlichen Frequenzverschiebung zu reduzieren oder zu kompensieren.

Im Folgenden werden detaillierte Ausführungsbeispiele der vorliegenden Erfindung näher beschrieben, die insbesondere auf dem in Fig. 26 gezeigten mehrstufigen Korrelator 122 aufbauen.

**4.1 Systembeschreibung**

Die im Folgenden beschriebenen Ausführungsbeispiele beziehen sich auf eine Korrelation und Detektion von Pilotsequenzen (z.B. von einem Datenpaket mit mehreren Pilotsequenzen oder von mehreren Datenpaketen mit jeweils zumindest einer Pilotsequenz) im Datenempfänger 110, nachfolgend auch Empfänger genannt, eines Funkübertragungssystems. Im Folgenden wird zur Bezeichnung der Pilotsequenz, d.h. für die zur Korrelation zu verwendenden Symbole, der deutschsprachige Begriff "Präambel" verwendet, unabhängig von der Anordnung der Präambel innerhalb der Datenpakete. Der nachfolgend verwendete Begriff Präambel umfasst deshalb die in der englischsprachigen Literatur mit Preamble, Midamble und Postamble bezeichneten Fälle. Im Folgenden wird das Verfahren am Beispiel einer exakt in der Mitte angeordneten Präambel erläutert, es gilt jedoch für andere Anordnungen in gleicher Weise.

Wie bereits in Abschnitt 2 in Bezug auf Fig. 6 erläutert wurde, kann Detektor 130 (z.B. Paket-Detektor) eine (optionale) Filterbank (z.B. eine Matched-Filterbank) 132, den mehrstufigen Korrelator 122 mit der ersten Korrelationsstufe (z.B. Präambel-Korrelation) 124 und weiteren Korrelationsstufen (z.B. Sequenz-Korrelation) 127, sowie eine Paket-Detektion 134 aufweisen. Die weiteren Korrelationsstufen 127 setzen sich entweder aus einer zweiten Korrelationsstufe 128 (vgl. Fig. 5a) oder aus einer zweiten 128 und einer dritten 129 Korrelationsstufe (vgl. Fig. 5b) zusammen.

Der mehrstufige Korrelator 122 kann somit Bestandteil eines Paket-Detektors 130 sein, der folgende Komponenten aufweisen kann:

- eine (optionale) Matched-Filterbank 132 zur Zerlegung eines Breitbandsignals 120 in parallel zu verarbeitende Kanäle;
- eine Präambel-Korrelation 124 zur kanalweisen Korrelation mit den bekannten Symbolen der Präambel;
- eine Sequenz-Korrelation 127 zur Zusammenfassung der Ergebnisse bei Paketen, die aus mehreren Teil-Paketen mit jeweils eigener Präambel bestehen;
- eine Paket-Detektion 134 zur Detektion der Pakete.

Die Präambel-Korrelation 124 und die Sequenz-Korrelation 127 bilden den Paket-Korrelator 122.

Wie bereits in Abschnitt 2 erwähnt wurde, können Ausführungsbeispiele des Datenempfänger 110 auf alle vier in Fig. 7 gezeigte Fälle angewendet werden, z.B. wenn der Datenempfänger 110 eine Vielzahl von Datenpaketen empfangen soll, die von verschiedenen Datensendern 100 asynchron und auf verschiedenen Frequenzen innerhalb eines zugewiesenen Frequenzbandes ausgesendet werden. Dadurch weist das Breitbandsignal 120 am Eingang eine wesentlich höhere Bandbreite auf als die Teil-Datenpakete 142_1-142_n.

Besonders relevant werden Ausführungsbeispiele des Datenempfängers 110 im Fall 4, der ein besonders hohes Maß an parallelen asynchronen Paketübertragungen ermöglicht. In diesem Fall enthält jedes Teil-Datenpaket 142_1-142_n eine eigene Präambel 144_1-144_n (vgl. Fig. 24). Die zeit- und frequenzmäßige Abfolge der Teil-Datenpakete 142_1-142_n wird im Folgenden als (Teil-Datenpaket-) Sequenz bezeichnet. Der Durchsatz des Übertragungssystems kann weiter erhöht werden, indem verschiedene Datensender 100 verschiedene Sequenzen verwenden; dadurch nimmt die Wahrscheinlichkeit für Kollisionen der Teil-Datenpakete 142_1-142_n verschiedener Datensender 100 ab.

Die Detektion der Teil-Datenpakete 142_1 bis 142_n im Empfänger erfolgt mit Hilfe der Präambeln in den Teil-Paketen 142_1 bis 142_n. Da die Sendefrequenzen im Empfänger 110 unbekannt sind, wird das zugewiesene Frequenzband mit einer Matched-Filterbank 132 in überlappende, parallel zu verarbeitende Kanäle zerlegt werden; dabei betragen die Abstände $\Delta f_{MF}$ zwischen den Mittenfrequenzen der einzelnen Kanäle nur einen Bruchteil der Symbolrate $f_{sym}$ der Teil-Datenpakete 142_1-142_n. Typische Werte liegen im Bereich $\Delta f_{MF}/f_{sym}$ = 1/4...1/8. Daraus ergibt sich in Verbindung mit der Bandbreite B des zugewiesenen Frequenzbandes und der Bandbreite $B_T$ eines Teil-Datenpaketes 142_1-142_n die Anzahl $N_{CH}$ der parallel zu verarbeitenden Kanäle:

$$N_{CH} = (B - B_T) / \Delta f_{MF} = (4 \dots 8) \cdot (B - B_T) / f_{sym}$$

Ausführungsbeispiele der vorliegenden Erfindung finden beispielsweise Anwendung in Satellitenkommunikationssystemen, im Allgemeinen jedoch immer dann, wenn Frequenzdrifts zu erwarten sind. Durch die Bewegung von LEO Satelliten (LEO = low earth orbit, dt. niedrige Erdumlaufbahn) ändert sich die Empfangsfrequenz des empfangen Signals während der Übertragung im Empfänger durch den sog. Doppler-Effekt.

Die maximale Dopplerfrequenz ist abhängig von der Geschwindigkeit des Satelliten und der Trägerfrequenz des Kommunikationssystems, sie berechnet sich zu:

$$f_{D,max} = \frac{v}{c} f_c$$

Wobei $f_c$ = 868 MHz, c = 3 * 10^8 $m/sec$ und $v$ die Geschwindigkeit des bewegten Empfängers ist. Im Allgemeinen ist eine hohe Doppler Frequenz ein Problem für die kohärente Detektion von Telegrammen, wenn die Übertragungszeit (z. B. wie in [4]) lange ist.

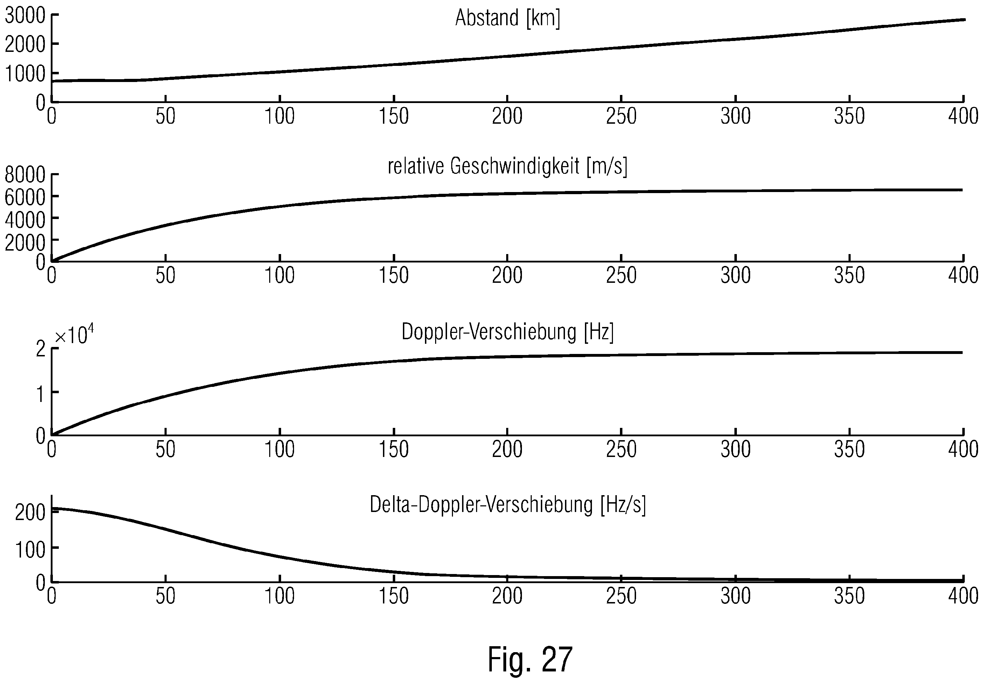

Fig. 27 zeigt in Diagrammen, ausgehend vom Zenit zum Zeitpunkt T = 0, einen Abstand eines LEO Satelliten in km aufgetragen über die Zeit in s, eine relative Geschwindigkeit des LEO Satelliten in m/s aufgetragen über die Zeit, eine Doppler-Verschiebung eines Signals des LEO Satelliten in Hz aufgetragen über die Zeit, und eine Delta-Doppler-Verschiebung eines Signals des LEO Satelliten in Hz/s aufgetragen über die Zeit, jeweils für eine Trägerfrequenz $f_c$ von 1 GHz.

Für ein beispielhaftes System mit LEO Satelliten ergeben sich nach Fig. 27 Frequenzdrifts (Delta Doppler Shifts) von bis zu 200 Hz/s.

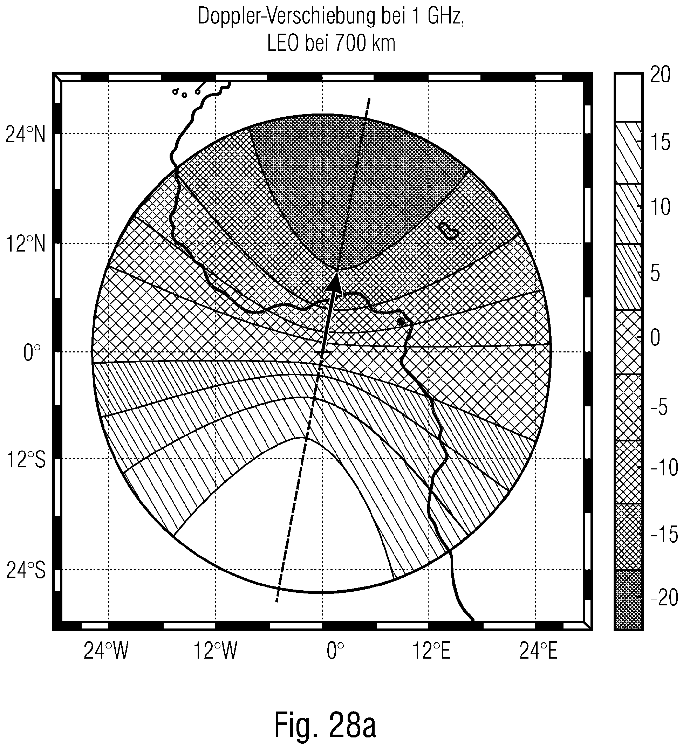

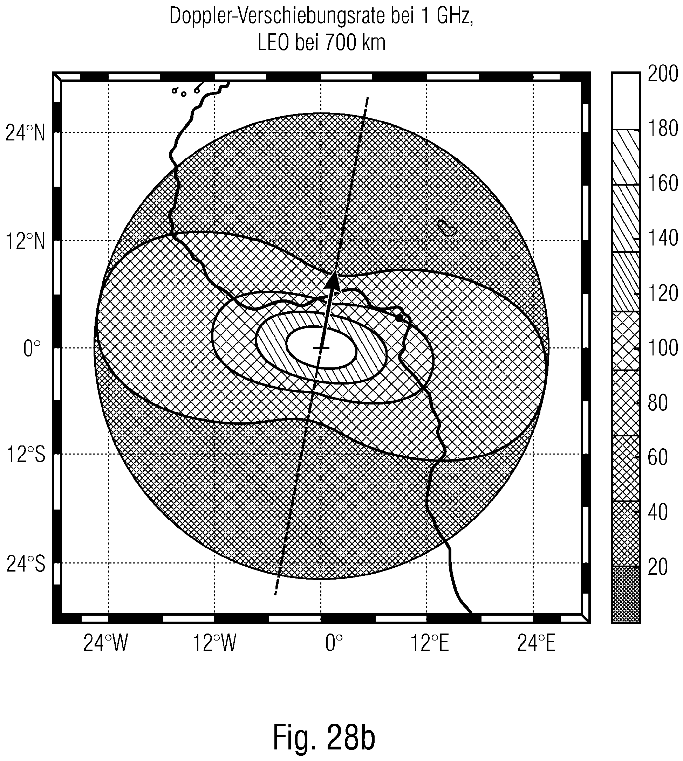

Daraus resultieren Frequenzoffsets (Doppler Shift) und Frequenzdrifts (Delta Doppler) wie sie beispielhaft in Fig. 28a und 28b gezeigt sind.

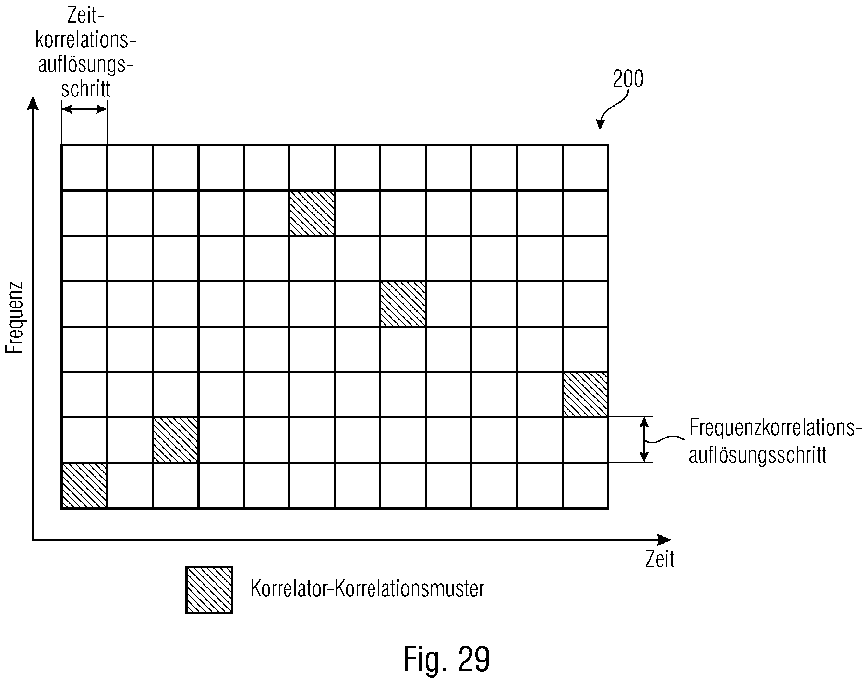

Im Detail zeigt Fig. 28a eine Doppler-Verschiebung in kHz aufgetragen über einen Elevationswinkel des LEO Satelliten, während Fig. 29b eine Delta-Doppler-Verschiebung in Hz/s aufgetragen über einen Elevationswinkel des LEO Satelliten zeigt, jeweils für eine Trägerfrequenz $f_c$ von 1 GHz und einer Erdumlaufbahn in 700 Km Höhe.

Ausgangspunkt der im Folgenden beschriebenen Ausführungsbeispiele ist der in den Abschnitten 2 und 3 beschriebene mehrstufige Korrelator 122, der mit Hilfe einer mehrstufigen Korrelation die Paketdetektion vornimmt. Dieser wird gem. den im Folgenden beschriebenen Ausführungsbeispiele dahingehend modifiziert, dass ein Empfang von Paketen (z.B. Datenpaketen 141 oder Teil-Datenpakete 142_1-142_n, vgl. Fig. 24) mit den oben genannten Frequenzdrifts möglich ist.

**4.2 Verbesserte Detektion eines Telegramms mit zeitvariantem Frequenzdrift**

Durch den oben beschriebenen zeitvarianten Doppler Shift entstehen Frequenzverschiebungen von bis zu 200 Hz/s. Diese Frequenzverschiebungen führen bei einem Übertragungssystem nach [5], bei dem ein zu übertragendes Telegramm (oder Datenpaket) auf mindestens 24 sog. Radio Bursts (=Teil-Datenpakete 142_1-142_24) aufgeteilt wird, die einen sog. Core Frame bilden, mit einer Übertragungsdauer von ca. vier Sekunden für den sog. Core Frame, zu einer Frequenzänderung von etwa 800 Hz zwischen dem Beginn und dem Ende des Core Frame. Im Core Frame sind nach [5] die Pilotsequenzen in jedem der 24 Radio Bursts (Teil-Datenpakete 142_1-142_24) eingebracht. Der Abstand zwischen der ersten und der letzten Pilotsequenz beträgt somit ebenfalls ca. 4 Sekunden.

Nach [5] beträgt die Datenrate des Funkübertragungssystems etwa 2400 Sym/s. Die Frequenzauflösung des mehrstufigen Detektors nach den Abschnitten 2 und 3 beträgt typischerweise 1/8 der Symbolrate in Hz. In anderen Worten, die Frequenzüberabtastung bei der Korrelation ist typischerweise um den Faktor 8 höher als die Symbolrate in Hz.

Unter dieser Annahme ergibt sich eine Frequenzsprungweite bei der Korrelation von ca. 2400 Hz / 8 = 300 Hz. Das bedeutet, eine Detektion von Telegrammen ist nur möglich, wenn der Frequenzdrift geringer als 300 Hz über das gesamte Telegramm (in [5] der Core Frame) geringer als 75 Hz pro Sekunde ist.

Es sei jedoch darauf hingewiesen, dass Ausführungsbeispiele der vorliegenden Erfindung nicht auf das sog. Telegram-Splitting-Verfahren (dt. Telegrammaufteilungsverfahren) [5] begrenzt sind. Vielmehr können Ausführungsbeispiele der vorliegenden Erfindung allgemein für eine Detektion von Paketübertragungen mit geteilten bzw. verteilten Pilotsequenzen angewendet werden. Beispielspeise gibt es Systeme mit einer Prä- und Postambel. Dann gilt die Dauer zwischen der Prä- und Postambel als Referenz für den zeitvarianten Frequenzdrift.

Um und auch bei zeitvarianten Frequenzdrifts Telegramme bzw. Datenpakete detektieren zu können, kann der Korrelator 122 modifiziert werden. Im Detail kann bei Verwendung des mehrstufigen Korrelators 122 nur ein Teil des Korrelators modifiziert werden (siehe Abschnitt 4.3).

Fig. 29 zeigt in einem Diagramm ein Korrelationsmuster 200, wie es oben in den Abschnitten 2 und 3 verwendet wird. Dabei beschreibt die Abszisse die Zeit, aufgeteilt in Zeitkorrelationsschritten, welche nach den Abschnitten 2 und 3 beispielsweise die Hälfte der Symboldauer betragen können, während die Ordinate die Frequenz, aufgeteilt in Frequenzschritten der Korrelation, beschreibt, welche wie oben erwähnt z.B. 1/8 der Symbolrate betragen können.

Unter einer beispielhaften ersten Annahme eines linearen Frequenzdrifts von 150 Hz/s, einer Frequenzauflösung des Korrelators von 300 Hz, einer Übertragungsdauer von vier Sekunden und fünf geteilten Pilotsequenzen (oder Teil-Datenpaketen), ergibt sich ein mittlerer Abstand von einer Sekunde zwischen den Pilotsequenzen (oder Teil-Datenpaketen). Das bedeutet, dass sich die Frequenz einer jeweiligen empfangenen Pilotsequenz (oder Teil-Datenpakets) im Mittel zur vorherigen Pilotsequenz (oder Teil-Datenpaket) um 150 Hz geändert hat. Zwischen der ersten und letzten Pilotsequenzen (oder Teil-Datenpakets) liegt die Frequenzdifferenz bei 600 Hz.

Mit der Auflösung der Korrelation vom 300 Hz pro Schritt ist ab der dritten Pilotsequenz (oder Teil-Datenpaket) der Frequenzoffset größer als die Schrittweite. Ab der fünften Pilotsequenz (oder Teil-Datenpaket) bereits zwei Schrittweiten.

Eine Detektion des Telegramms nach Fig. 29 ist somit nicht möglich.

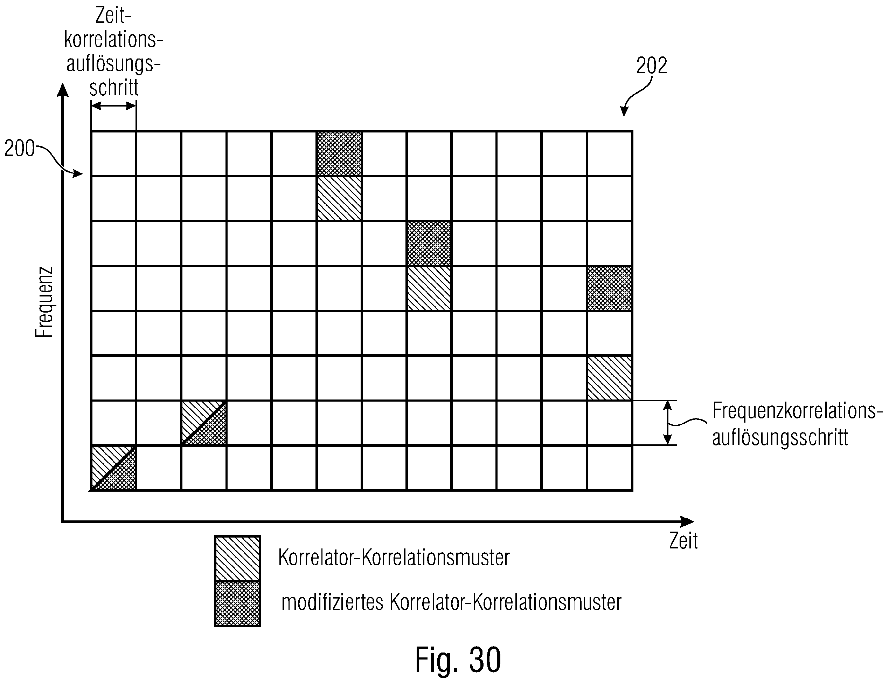

Wird das Korrelationsmuster (oder Korrelationspattern) des Korrelators 122 jedoch dahingehend modifiziert, dass beispielsweise ab der dritten Pilotsequenz (oder Teil-Datenpaket) jeweils das nächsthöhere Frequenzelement gewählt wird, ist eine Detektion des Telegramms wieder möglich. Ab der fünften Pilotsequenz (oder Teilpaket) kann dann jeweils des übernächste Frequenzelement gewählt werden, wie dies in Fig. 30 gezeigt ist.

Im Detail zeigt Fig. 30 in einem Diagramm, ausgehend von dem in Fig. 29 gezeigten Korrelationsmuster 200, ein modifiziertes Korrelationsmuster 202, gemäß einem Ausführungsbeispiel der vorliegenden Erfindung.

Hierbei werden die jeweiligen Frequenzlinien entsprechend des zu erwartenden Frequenzdrifts modifiziert. Ist der Frequendrift beispielsweise größer muss das modifizierte Korrelationspattern entsprechend angepasst werden.

Ist anstelle des obigen Ausführungsbeispiels genannten positiven Frequenzdrifts ein negativer Frequenzdrift zu erwarten, kann das Korrelationsmuster (oder Korrelationspattern) entsprechend angepasst werden, dass Werte unterhalb des Korrelationsmuster nach Fig. 30 gewählt werden müssen.

Bei Ausführungsbeispielen kann bei einer Übertragung von Telegrammen oder Datenpaketen mit verteilten/-geteilten Pilotsequenzen und/oder Telegram-Splitting das Korrelationsmuster (oder Korrelationspattern) entsprechend eines zu erwartenden Frequenzdrifts modifiziert, damit eine Detektion des Telegramms oder Datenpakets möglich ist.

Unter einer beispielhaften zweiten Annahme eines linearen Frequenzdrifts von 50 Hz/s, einer Frequenzauflösung des Korrelators von 300 Hz, einer Übertragungsdauer von vier Sekunden und fünf geteilten Pilotsequenzen (oder Teil-Datenpaketen), ergibt sich ebenfalls ein mittlerer Abstand von einer Sekunde zwischen den Pilotsequenzen (oder Teil-Datenpaketen).

Durch die geringere Änderung von 50 Hz/s ergibt sich eine maximale Änderung von 200 Hz über die vier Sekunden Telegrammdauer (zwischen der ersten und letzten Pilotsequenz (oder Teil-Datenpaket)). Daraus ergibt sich, dass die Korrelation für eine erfolgreiche Detektion nicht modifiziert werden muss, da die maximale Differenz kleiner als die Schrittweite der Korrelation ist.

In diesem Fall ist es jedoch trotzdem sinnvoll das Korrelationsmuster (oder Korrelationspattern) anzupassen, um die Leistungsfähigkeit der Detektion zu verbessern. Die letzte Pilotsequenz (oder Teil-Datenpaket) weist eine Frequenzdifferenz von etwa 200 Hz im Vergleich zur ersten Pilotsequenz (oder Teil-Datenpaket) auf. Dieser Wert ist größer als die Hälfte der Schrittweite des Korrelators 122. Da die letzte Pilotsequenz (oder Teil-Datenpaket) nicht genau auf einer Korrelationslinie liegt, teilt sich die "Energie" der Korrelation auf die benachbarten Linien auf. Dies ist der nach dem in Fig. 29 gezeigt Index, sowie der nächstfolgende Index.

Da der Frequenzoffset größer als die Hälfte der Schrittweite der Korrelation ist, liegt mehr "Energie" im nächsthöheren Index. Dadurch ist es auch bei Frequenzdrifts, die die Hälfte der Schrittweite der Korrelation übersteigen, sinnvoll das Korrelationsmuster (oder Korrelationspattern) anzupassen.

Bei Ausführungsbeispielen kann bei einer Übertragung von Telegrammen oder Datenpaketen mit verteilten/-geteilten Pilotsequenzen und/oder Telegram-Splitting das Korrelationspattern entsprechend eines zu erwartenden Frequenzdrifts modifiziert werden, damit eine Detektion des Telegramms verbessert ist.

### 4.3 Anwendung bei mehrstufiger Korrelation nach den Abschnitten 2 und 3

Ausgangbasis sein nun wieder das System nach [5] mit einer Symbolrate von ca. 2400 Sym/s, 24 Teil-Datenpaketen 142_1-142_24 und einer Übertragungsdauer von ca. vier Sekunden.

Für dieses System wurde in den Abschnitten 2 und 3 eine effiziente mehrstufige Korrelation 122 zur Detektion beschrieben. Diese Art der Detektion von Telegrammen funktioniert allerdings jedoch nur wenn der maximale Frequenzversatz zwischen dem ersten und letzten Teil-Datenpaket 124_1 und 124_24 kleiner als die Frequenzschrittweite der Korrelation ist (mit den Werten von oben kleiner als 300 Hz). Wie oben bereits berechnet, gilt dies nur für Frequenzdrifts von weniger als 75 Hz/s.

Im Folgenden wird die Funktionsweise des mehrstufigen Korrelators 122 kurz erläutert (vgl. Abschnitte 2 und 3. Die mehrstufige Korrelation erfolgt in mehreren, getrennten Stufen, die jeweils auf die Ergebnisse der vorherigen Stufe aufbauen.

Die erste Stufe ist die sog. Präambel-korrelation 124, diese baut auf dem Ausgangsignal der optionalen Matched-Filterbank 132 auf, die das Eingangssignal 120 des Empfängers 110 in überlappende Teilbandsignale aufteilt. Wie der Name schon sagt, korreliert die Präambel-Korrelation 124 die Symbole innerhalb einer Pilotsequenz bzw. eines Teil-Datenpakets in den notwendigen Teilbändern. Somit arbeitet die Präambel-Korrelation nur innerhalb eines Teil-Datenpakets, somit ist die Dauer auf ca. 15 ms begrenzt.

Die zweite Stufe ist die sog. Gruppen-Korrelation 128. Diese Korrelationsstufe nutzt die speziellen Eigenschaften der in [5] beschriebenen Sprungmuster aus, indem sie die Sprungmuster in Sub-Muster (=Gruppensprungmuster) untergliedert, die in der Frequenz und Zeit verschobene Muster eines Basismusters sind. Das Basismuster umfasst in [5] drei Teil-Datenpakete (bzw. Radio bursts). Die Dauer eines Basismusters beträgt nach [5] ca. 316 ms.

Die dritte und letzte Korrelationsstufe umfasst die sog. Gruppensequenz-Korrelation 129, bei welcher die Ergebnisse der Gruppen-Korrelation 128 über den gesamten Core Frame zu einem Gesamtergebnis korreliert werden. Die Dauer umfasst somit die gesamten vier Sekunden, wie eingangs erwähnt.

Werden nun wieder die in der Systembeschreibung (Abschnitt 4.1) beispielhaft erwähnten maximalen 200 Hz/s betrachtet, dann ergibt dies auf die Dauer der Präambel-Korrelation 124 eine maximale Frequenzabweichung von 3,0 Hz über die Dauer eines Teil-Datenpakets. Für die Gruppen-Korrelation 128 ergibt sich eine maximale Frequenzabweichung von 63,2 Hz innerhalb der Gruppe. Für die Gruppensequenz-Korrelation 129 gilt wie oben bereits berechnet die maximale Frequenzabweichung von 800 Hz über den gesamten Core Frame (d.h. die 24 Teil-Datenpakete).

Da die maximalen Frequenzabweichungen in der Präambel-Korrelation 124 und der Gruppen-Korrelation 128 deutlich kleiner als die Schrittweite (bzw. die halbe Schrittweite) sind, ist es nicht zwingend erforderlich, den Frequenzdrift in den ersten beiden Korrelationsstufen 124 und 128 zu berücksichtigen. Bei manchen Ausführungsbeispielen genügt es die Gruppensequenz-Korrelation 129 zu modifizieren. Natürlich kann bei Ausführungsbeispielen auch die Gruppen-Korrelation 128 und die Gruppensequenz-Korrelation 129 modifiziert werden.

Die Gruppensequenz-Korrelation kann wie nach Kapitel 4.1 modifiziert werden, wobei die Abstände in Zeit und Frequenz den Abständen zwischen den Gruppen (von Teil-Datenpaketen, die gruppenweise das gleiche Gruppensprungmuster aufweisen) entspricht, wobei die Dauer der Gruppe ebenfalls berücksichtigt wird.

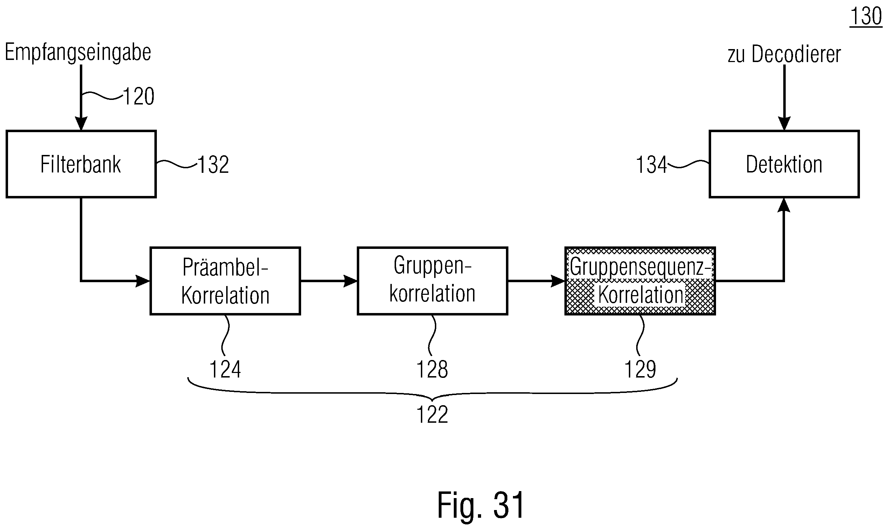

Fig. 31 zeigt ein schematisches Blockschaltbild eines Detektors 130 mit einem mehrstufigen Korrelator 122, gemäß einem Ausführungsbeispiel der vorliegenden Erfindung. Mit anderen Worten, Fig. 31 zeigt einen Ablauf der Korrelation im Detektor 130 bei mehrstufiger Korrelation mit Modifikation für Frequenzdrifts, wobei bei dem in Fig. 31 gezeigten Ausführungsbeispiel nur die dreistufige Korrelation näher betrachtet wird.

Bei dem in Fig. 31 gezeigten Ausführungsbeispiel wird davon ausgegangen, dass (nur) die dritte Korrelationsstufe 129 (Gruppensequenz-Korrelation) modifiziert wird, wohingegen die die ersten beiden Korrelationsstufen 124 und 128 nicht modifiziert und demnach direkt wie in den Abschnitten 2 und 3 verwendet werden.

Es sei jedoch darauf hingewiesen, dass das hierin vorgestellte Prinzip der Anpassung des Korrelationsmusters auch Anwendung in der zweiten Korrelationsstufe 128 (Gruppen-Korrelation) finden kann, sofern der Frequenzdrift auch relevante Auswirkungen auf die Teilsequenzen einer Gruppe hat.

Bei Ausführungsbeispielen werden bei einer mehrstufigen Korrelation nur diejenigen Korrelationsstufen modifiziert, in denen der Frequenzdrift einen Einfluss auf die Performance hat. Dies gilt in der Regel, wenn die Frequenzabweichung größer als die Hälfte der Schrittweite der Korrelation ist.

### 4.4 Verwendung mehrerer Korrelationsmuster parallel

Bei den in den Abschnitten 4.1 bis 4.3 beschriebenen Ausführungsbeispielen wurde vorausgesetzt, dass der Frequenzdrift vorab beim Empfänger 110 bekannt ist und sich nicht ändert bzw. durch den Empfänger 110 geschätzt werden kann. Dies ist jedoch unter Berücksichtigung von Fig. 27 nicht gegeben.

Da vorab nicht bekannt ist, wann welcher Frequenzdrift vorliegt, ist es nicht möglich den Detektor entsprechend des aktuellen Frequenzdrifts umzuschalten.

Um trotzdem zu jedem Zeitpunkt mit und ohne Frequenzdrift empfangen zu können, ist es möglich mehrere Korrelationen mit verschiedenen Annahmen zu den Frequenzdrifts laufen zu lassen.

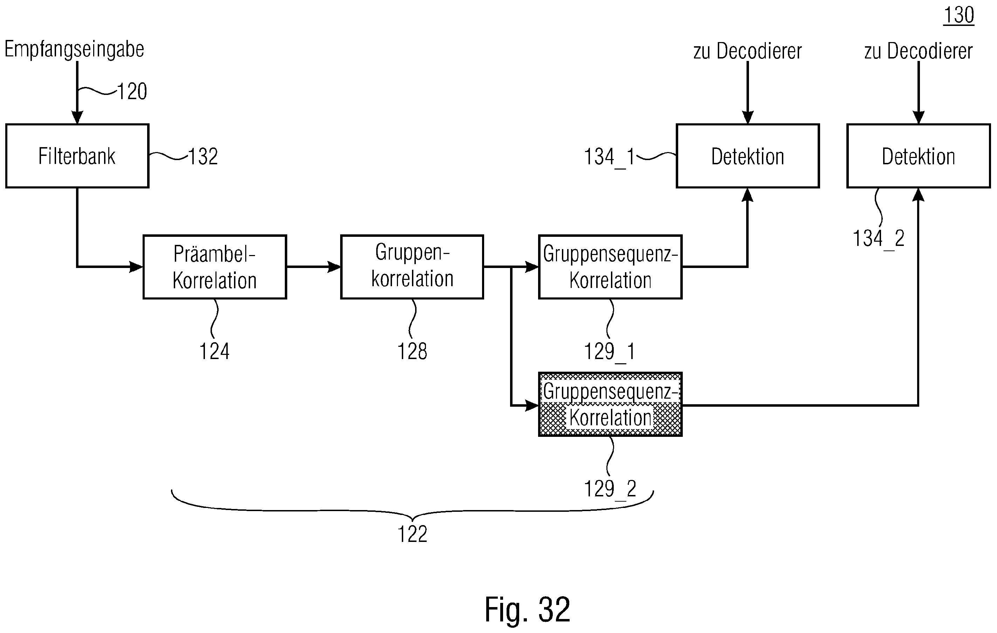

Dies wird beispielhaft am System aus Abschnitt 4.3 in Fig. 32 für eine zweifach parallele Gruppensequenz-Korrelation 129_1 und 129_2 gezeigt. Da dort der mehrstufige Korrelator 122 verwendet wird, genügt es, wie oben bereits dargelegt wurde, die dritte Korrelationsstufe zu duplizieren.

Im Detail zeigt Fig. 32 ein schematisches Blockschaltbild eines Detektors 130 mit einem mehrstufigen Korrelator 122, der zumindest zwei dritte Korrelationsstufen (Gruppensequenz-Korrelationen) 129_1 und 129_2 aufweist, die in der Frequenz unterschiedlich angepasste Korrelationsmuster verwenden, gemäß einem Ausführungsbeispiel der vorliegenden Erfindung. In Fig. 32 wird dabei beispielhaft angenommen, dass entweder kein Frequenzdrift oder nur ein spezifischer Frequenzdrift vorliegen kann. Durch die Duplizierung der dritten Korrelationsstufe (Gruppensequenz-Korrelation) stehen mehr Korrelationsergebnisse zur Verfügung, die ebenfalls in der Detektion 134_1 und 134_2 extra abgearbeitet werden müssen.

Bei Ausführungsbeispielen kann, wenn der Frequenzdrift nicht konstant und/oder nicht vorher bekannt ist, eine parallele Korrelation 129_1 und 129_2 und Detektion 134_1 und 124_2 mit unterschiedlichen Annahmen für die Frequenzdrifts durchgeführt werden.

Auswähler (engl. selector) zum Management von Mehrfachdetektion

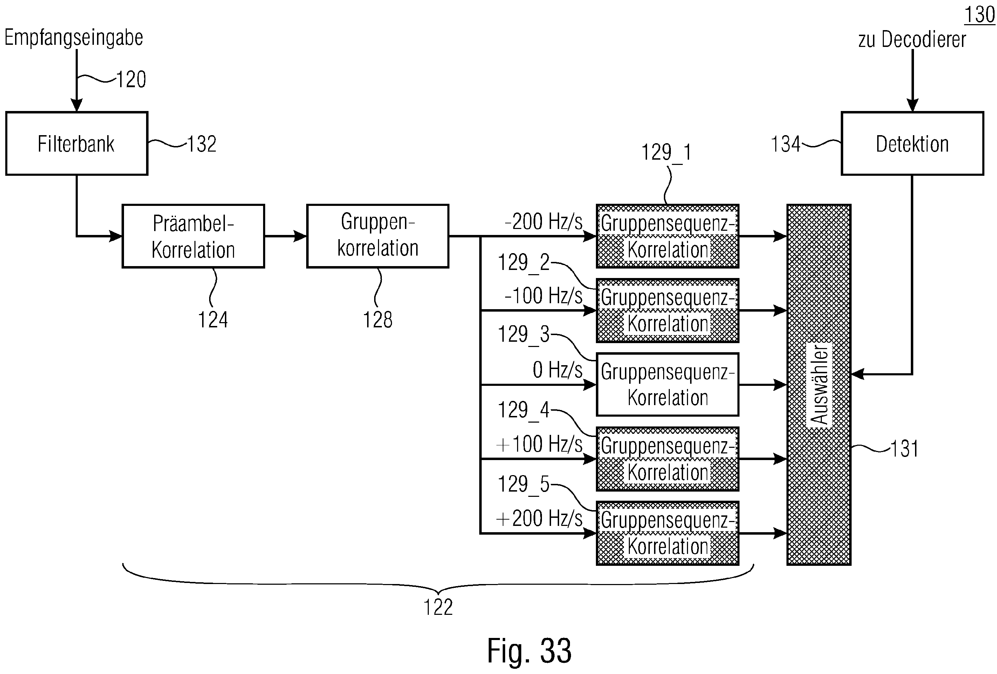

Fig. 33 zeigt ein schematisches Blockschaltbild eines Detektors 130 mit einem mehrstufigen Korrelator 122, der fünf dritte Korrelationsstufen (Gruppensequenz-Korrelationen) 129_1-129_5 aufweist, die in der Frequenz unterschiedlich angepasste Korrelationsmuster verwenden, um unterschiedliche zeitlich veränderliche Frequenzverschiebungen (-200 Hz/s, - 100 Hz/s, 0 Hz/s, 100 Hz/s, 200 Hz/s) zu kompensieren, gemäß einem Ausführungsbeispiel der vorliegenden Erfindung. Der Detektor 130 kann ferner einen Auswähler 131 aufweisen, der konfiguriert ist, um die Korrelationsergebnisse einer der fünf dritten Korrelationsstufen 129_1-129_5, basierend auf dem die Detektion erfolgen soll, auszuwählen und einer Paket-Detektion 134 bereitzustellen.

Mit anderen Worten, zeigt eine fünffach parallele Korrelationen 129_1-129_5 mit fünf verschiedenen Annahmen, wobei die Frequenzdrifts in diesem Fall von -200 Hz/s bis + 200 Hz/s liegen können. Da in diesem Fall die Detektion ebenfalls fünfmal laufen müsste, wurde bei dem in Fig. 33 gezeigten Ausführungsbeispiel ein Auswähler 131 (engl. selector) nach der Gruppensequenz-Korrelation 129_1-129_5 eingefügt. Es kommt häufig vor, dass der tatsächliche Frequenzdrift nicht exakt den Annahmen entspricht. Nach der Beschreibung in Kapitel 4.2 für das System aus [5] können bis zu 75 Hz/s ohne Korrektur toleriert werden. Die verschiedenen Annahmen haben einen Abstand von 100 Hz/s. Liegt beispielsweise der Frequenzdrift bei 60 Hz/s wird das Telegramm sowohl von der 0 Hz/s und der +100 Hz/s Korrelation korrekt detektiert. Der Decoder würde somit ein Paket doppelt verarbeiten müssen.

Auswähler-Szenario 1: Vermeidung von Mehrfachdetektion

Mehrfachdetektion soll mit Hilfe des Auswählers 131 umgangen werden indem dieser für jeden Zeitpunkt und das gleiche Sprungmuster die Korrelationsergebnisse der einzelnen Annahmen vergleicht und nur den höchsten Wert an die Detektion weitergibt. Somit kann die Detektion weiter nach den Abschnitten 2 und 3 erfolgen.

Bei Ausführungsbeispielen kann zur Vermeidung von Mehrfachdetektionen ein Auswähler 131 jeweils nur den höchsten Wert pro Zeitschritt und Sprungmuster (z.B. an eine Paket-Detektion 134) weitergeben.

Auswähler-Szenario 2: Kontrollierte Weiterleitung von (Mehrfach-)Detektionen

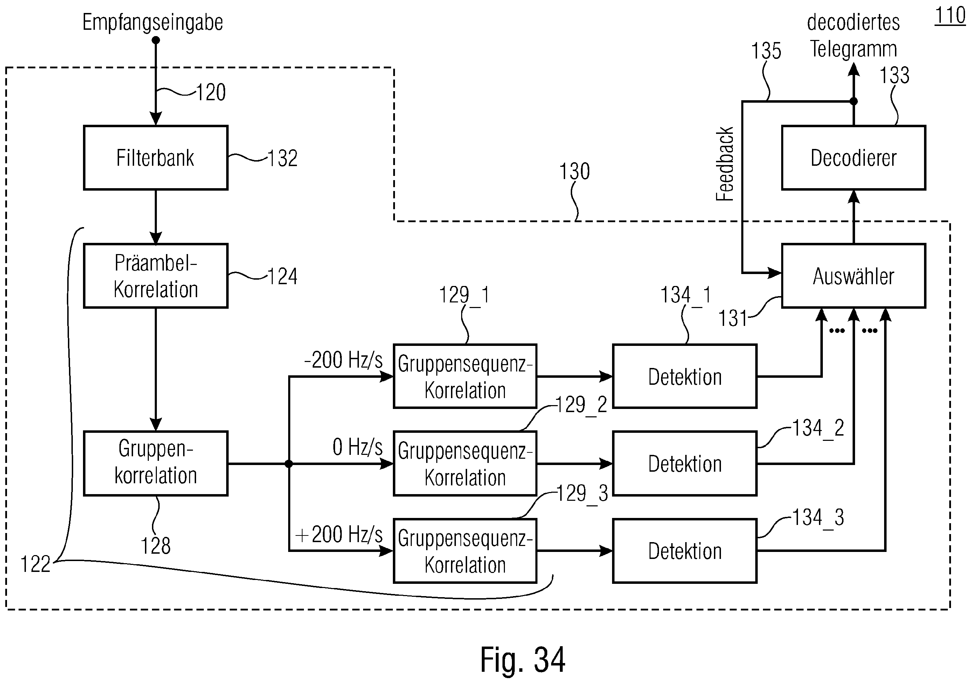

Fig. 34 zeigt ein schematisches Blockschaltbild eines Datenempfängers 110 mit einem Detektor 130 mit einem mehrstufigen Korrelator 122, der drei dritte Korrelationsstufen (Gruppensequenz-Korrelationen) 129_1-129_3 aufweist, dessen Korrelationsergebnisse in drei Paket-Detektionen 134_1-134_3 zur Detektion der Pilotsequenzen verwendet werden, wobei mittels eines Auswählers nur die Detektionsergebnisse einer der Paket-Detektionen 134_1-134_3 für einen Decoder bereitgestellt werden, gemäß einem Ausführungsbeispiel der vorliegenden Erfindung.

Mit anderen Worten, Fig. 34 zeigt mehrfache parallele Gruppensequenz-Korrelationen 129_1-129_3 und Detektionen 134_1-134_3 für verschiedene Frequenzdrifts mit anschließendem Auswähler 131. Bei dem in Fig. 34 gezeigten In diesem Scenario wird ein Auswähler 131 nach den Detektionen 134_1-134_3 eingefügt. Die Aufgabe des Auswählers 131 ist es Mehrfachdetektionen zu erkennen und a) keine oder b) nur eine begrenzte Anzahl an Mehrfachdetektionen für die anschließende Decodierung 133 weiterzuleiten.

Fall a) Hierfür wird das Feedback 135 des Decoders 133 benötigt. Nach erfolgreicher Decodierung eines Telegramms oder Datenpakets übermittelt der Decoder 133 dem Auswähler 131 Informationen (z.B. Anfangszeitpunkt, Endzeitpunkt), die es dem Auswähler 131 ermöglichen eindeutig Mehrfachdetektionen eines Telegramms oder Datenpakets als solche zu erkennen und zu ignorieren.

Fall b) Die Erkennung von Mehrfachdetektionen wie in a) beschrieben kann dazu genutzt werden um die Decoderleistung zu verbessern. Die gemeinsame Betrachtung von Mehrfachdetektionen kann zusätzliche Information liefern, die den Decodierprozess positiv unterstützen. Hierzu werden geeignete Mehrfachdetektionen ausgewählt und weitergeleitet. Kriterien zur Auswahl geeigneter der Mehrfachdetektion können sowohl dynamisch, z.B. durch entsprechendes Feedback 135 des Decoders 133, als auch fest durch Vorkonfiguration erfolgen.

Bei Ausführungsbeispielen kann der Auswähler 131 eindeutig Mehrfachdetektionen durch einen Feedback 135 des Decoders 133 erkennen. Der Auswähler 131 leitet kontrolliert Mehrfachdetektionen weiter für die anschließende Decodierung.

Die beschriebene Erweiterung der Korrelationen mit verschiedenen Annahmen zum Frequenzdrift haben den Nachteil, dass die Empfängerimplementierung dahingehend angepasst wird, dass neue Korrelatoren (zumindest für die letzte Korrelationsstufe) eingefügt werden. Soll wie in Fig. 33 ein Auswähler 131 verwendet werden, ist dieser ebenfalls in die Empfängerimplementierung aufzunehmen. Soll eine Modifikation an der Empfängerimplementierung durchgeführt werden, muss diese in der Regel später mittels teilweise aufwändiger Tests wieder getestet und verifiziert werden.

Wie in Fig. 30 gezeigt, ändern sich durch den Frequenzdrift die Frequenzindizes der einzelnen Pilotsequenzen bzw. der Teilpakete. Die Indizes hängen ohne Frequenzdrift direkt mit den Sprungmustern zusammen, bzw. können aus diesen abgeleitet werden. Somit können alternativ zur Modifikation der Empfängersoftware auch die Sprungmuster (oder Korrelationsmuster) angepasst werden. Dies hat den Vorteil, dass nur die Konfigurationsparameter angepasst werden müssen, was teilweise sogar dynamisch möglich ist.

Sollen wie zuvor beschrieben mehrere mögliche Frequenzdrifts untersucht werden, kann dies dadurch erreicht werden, dass die Anzahl der Sprungmuster (oder Korrelationsmuster) entsprechend erhöht wird.

Bei Ausführungsbeispielen können, anstelle der Modifikation der Empfängersoftware, die Sprungmuster entsprechend des/der zu analysierenden Frequenzdrifts angepasst werden.

## 4.5 Weitergabe des ermittelten Frequenzdrifts an den Decoder

In den bisherigen Ideen ist immer die Detektion betrachtet worden. Oftmals ist die Decodierung jedoch kritischer, da hier deutlich weniger Fehler toleriert werden kann. Deshalb wird in Systemen nach dem Stand der Technik typischerweise nach der Detektion und vor der Decodierung eine Synchronisation (Zeit, Frequenz und ggf. Phase) durchgeführt.

Der Frequenzdrift kann nun ebenfalls in die Synchronisation mit aufgenommen werden, was jedoch die Freiheitsgrade und somit die Komplexität und Rechenleistung erhöht.

Da die Detektion bereits mehrere Annahmen zum Frequenzdrift untersucht hat, ist es jedoch sinnvoller diese Annahme auch für die Korrektur zu verwenden. Dadurch ist keine zusätzliche Rechenleistung notwendig und bei entsprechend genauer Auflösung der Annahmen ist diese Schätzung für den Frequenzdrift ausreichend.

Bei Ausführungsbeispielen kann die Schätzung des Frequenzdrifts durch die verschiedenen Annahmen im Detektor direkt für die Korrektur im bzw. vor dem Decoder verwendet werden.

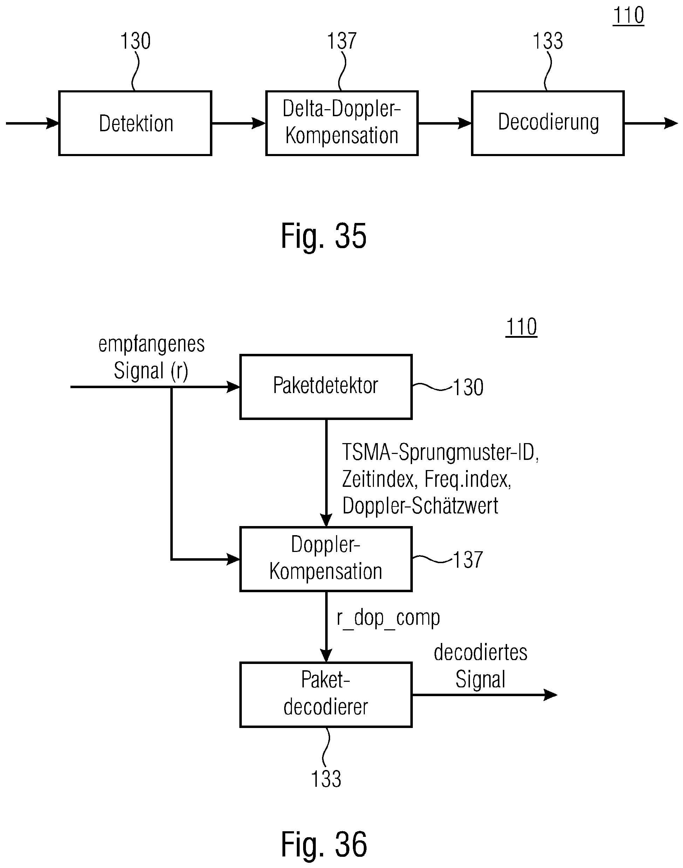

Fig. 35 zeigt ein schematisches Blockschaltbild eines Datenempfängers 110 mit einem Detektor 130, einem Delta-Doppler-Kompensator 137 und einem Decoder 133, gemäß einem Ausführungsbeispiel der vorliegenden Erfindung. Mit anderen Worten, Fig. 35 zeigt ein Zusammenspiel aus Detektion und Decodierung mit Kompensation des ermittelten Frequenzdrifts.

Fig. 36 zeigt ein schematisches Blockschaltbild eines Datenempfängers 110 mit einem Detektor 130, einem Doppler-Kompensator 137 und einem Decoder 133, gemäß einem Ausführungsbeispiel der vorliegenden Erfindung. Mit anderen Worten, Fig. 36 zeigt ein Zusammenspiel aus Detektion und Decodierung mit Kompensation des ermittelten Frequenzdrifts.

Fig. 35 und 36 zeigen Möglichkeiten auf, wie der ermittelte Frequenzdrift vor der Decodierung 133 kompensiert bzw. korrigiert werden kann.

Wird wie in Abschnitt 4.4 die Schätzung des Frequenzdrifts durch die Modifikation der Sprungmuster vorgenommen, kann die Korrektur des Frequenzdrifts direkt im Decoder 133 vorgenommen werden. Der Detektor 130 teilt dem Decoder 133 in der Regel die Nummer des detektierten Sprungmuster mit, da dadurch die Symbole aus dem Eingangssignal entnommen werden. Durch die Modifikation und ggf. Erweiterung der Sprungmuster ist ebenfalls bekannt welcher Frequenzdrift in der Detektion 130 erfolgreich war. Daraus kann der Frequenzdrift wieder ausgerechnet und korrigiert werden.

Bei Ausführungsbeispielen kann durch die detektierte Sprungmusternummer auf den Frequenzdrift zurückgerechnet und korrigiert werden.

## 5. Weitere Ausführungsbeispiele

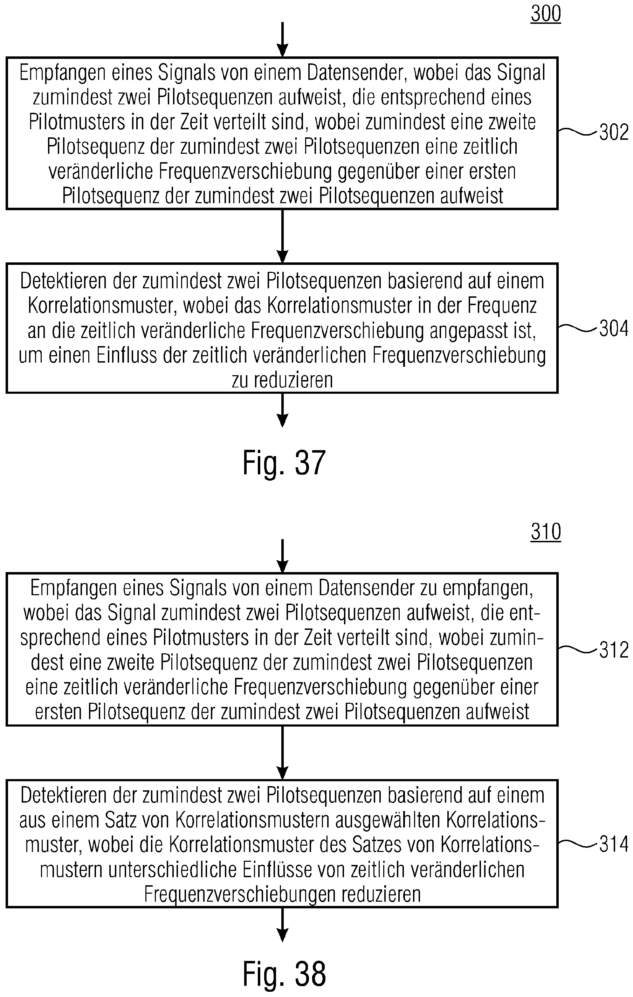

Fig. 37 zeigt ein Flussdiagramm eines Verfahrens 300 zum Empfangen eines Signals, gemäß einem Ausführungsbeispiel der vorliegenden Erfindung. Das Verfahren 300 umfasst einen Schritt des Empfangens eines Signals von einem Datensender, wobei das Signal zumindest zwei Pilotsequenzen aufweist, die entsprechend eines Pilotmusters in der Zeit verteilt sind, wobei zumindest eine zweite Pilotsequenz der zumindest zwei Pilotsequenzen eine zeitlich veränderliche Frequenzverschiebung gegenüber einer ersten Pilotsequenz der zumindest zwei Pilotsequenzen aufweist. Ferner umfasst das Verfahren einen Schritt des Detektierens der zumindest zwei Pilotsequenzen basierend auf einem Korrelationsmuster, wobei das Korrelationsmuster in der Frequenz an die zeitlich veränderliche Frequenzverschiebung angepasst ist, um einen Einfluss der zeitlich veränderlichen Frequenzverschiebung zu reduzieren.

Fig. 38 zeigt ein Flussdiagramm eines Verfahrens 310 zum Empfangen eines Signals, gemäß einem weiteren Ausführungsbeispiel der vorliegenden Erfindung. Das Verfahren 310 umfasst einen Schritt 312 des Empfangens eines Signals von einem Datensender zu empfangen, wobei das Signal zumindest zwei Pilotsequenzen aufweist, die entsprechend eines Pilotmusters in der Zeit verteilt sind, wobei zumindest eine zweite Pilotsequenz der zumindest zwei Pilotsequenzen eine zeitlich veränderliche Frequenzverschiebung gegenüber einer ersten Pilotsequenz der zumindest zwei Pilotsequenzen aufweist. Ferner umfasst das Verfahren einen Schritt 314 des Detektierens der zumindest zwei Pilotsequenzen basierend auf einem aus einem Satz von Korrelationsmustern ausgewählten Korrelationsmuster, wobei die Korrelationsmuster des Satzes von Korrelationsmustern unterschiedliche Einflüsse von zeitlich veränderlichen Frequenzverschiebungen reduzieren.

Im Folgenden werden weitere Ausführungsbeispiele der vorliegenden Erfindung beschrieben, die für sich genommen als auch in Kombination mit den oben beschriebenen Ausführungsbeispielen Anwendung finden können.

Ausführungsbeispiele schaffen einen Datenempfänger, wobei der Datenempfänger ausgebildet ist, um ein Signal zu empfangen, das eine Mehrzahl von Teil-Datenpaketen aufweist [z.B. die entsprechend eines Sprungmusters in der Zeit- und Frequenz verteilt sind], wobei die Mehrzahl von Teil-Datenpaketen jeweils einen Teil eines Datenpakets aufweisen, wobei der Datenempfänger einen mehrstufigen Korrelator aufweist, der ausgebildet ist, um eine mehrstufige Korrelation [z.B. des empfangenen Signals (z.B. in einer ersten Korrelationsstufe) und einer (z.B. durch die erste Korrelationsstufe) aufbereiteten Version des empfangenen Signals (z.B. in einer zweiten Korrelationsstufe)] durchzuführen, um die Teil-Datenpakete [z.B. basierend auf Präambeln derselben oder mittels eines blinden Schätzverfahrens] in dem empfangenen Signal zu detektieren, wobei eine zweite Korrelationsstufe des mehrstufigen Korrelators basierend auf Korrelationsergebnissen [z.B. basierend auf der aufbereiteten Version des empfangenen Signals] einer ersten Korrelationsstufe des mehrstufigen Korrelators arbeitet.

Bei Ausführungsbeispielen kann der mehrstufige Korrelator ausgebildet sein, um die Mehrzahl von Teil-Datenpaketen basierend auf Präambeln derselben in dem empfangenen Signal zu detektieren.

Bei Ausführungsbeispielen können die Mehrzahl von Teil-Datenpaketen entsprechend eines Sprungmusters in der Zeit- und Frequenz verteilt sein, wobei der mehrstufige Korrelator ausgebildet ist, um die Mehrzahl von Teil-Datenpaketen [z.B. basierend auf Präambeln derselben] in dem empfangenen Signal oder einer davon abgeleiteten Version [z.B. einer Mehrzahl von Teilbandsignalen] zu detektieren.

Bei Ausführungsbeispielen kann das empfangene Signal eine Mehrzahl von Teilbandsignalen aufweisen, wobei die Mehrzahl von Teilbandsignalen unterschiedliche [z.B. sich teilweise überlappende] Teilbänder des Signals [z.B. Breitbandsignals] aufweisen [Beispielsweise kann der Datenempfänger ausgebildet sein, um basierend auf dem Signal (z.B. Breitbandsignale) ein empfangenes Signal zu erhalten, das die Mehrzahl von Teilbandsignalen aufweist].

Bei Ausführungsbeispielen können die Mehrzahl von Teilbandsignalen direkt für die durch den mehrstufigen Korrelator durchgeführte Korrelation eingesetzt werden.

Bei Ausführungsbeispielen kann der mehrstufige Korrelator ausgebildet sein, um eine mehrstufige Korrelation von zumindest einer Teilmenge der Mehrzahl von Teilbandsignalen durchzuführen, um die Mehrzahl von Teildatenpaketen in der Teilmenge der Mehrzahl von Teilbandsignalen zu detektieren [Beispielsweise kann eine Anzahl der bereitgestellten Teilbandsignale und/oder deren Abtastrate nicht mit den entsprechenden Werten des mehrstufigen Korrelators übereinstimmen, so dass der mehrstufige Korrelator nur einen Teil der Mehrzahl von Teilbandsignale und/oder nur einen Teil der Abtastwerte verarbeitet].

Bei Ausführungsbeispielen kann der Datenempfänger ausgebildet sein, um die Mehrzahl von Teilbandsignalen mit einer komplexen Exponentialschwingung zu multiplizieren, um die Frequenzauflösung im mehrstufigen Korrelator zu erhöhen.

Bei Ausführungsbeispielen kann der mehrstufige Korrelator eine erste Korrelationsstufe aufweisen, die ausgebildet sein kann, um das empfangene Signal oder eine davon abgeleitete Version [z.B. eine gefilterte und/oder gespeicherte Version des zu empfangenen Signals (z.B. ein Teilbandsignal der Mehrzahl von Teilbandsignalen)] mit einer Mehrzahl von Präambelabschnitten zu korrelieren, die mit unterschiedlichen [z.B. sich überlappenden oder aneinander angrenzenden] Abschnitten der Präambeln der Mehrzahl von Teil-Datenpaketen korrespondieren [z.B. übereinstimmen (z.B. bei einem ungestörten Übertragungskanal)], um eine Mehrzahl von Abschnittskorrelationsergebnissen [z.B. Abschnittskorrelationsamplituden; z.B. ein Abschnittskorrelationsergebnis (z.B. eine Korrelationsamplitude) pro Präambelabschnitt pro Abtastwert] zu erhalten, wobei die erste Korrelationsstufe ausgebildet ist, um die Mehrzahl von Abschnittskorrelationsergebnissen [z.B. pro Abtastwert] zu kombinieren [z.B. zu addieren oder inkohärent zu addieren (z.B. durch Betragsbildung)], um einen Satz von Korrelationsergebnissen [z.B. (normierte) Korrelationsamplituden; z.B. für das zu empfangene Signal] oder einen Teilsatz von Korrelationsergebnissen [z.B. (normierte) Korrelationsamplituden oder ein eindimensionales Array von (normierten) Korrelationsamplituden; z.B. für das Teilbandsignal der Mehrzahl von Teilbandsignalen des empfangenen Signals] der ersten Korrelationsstufe als Korrelationsergebnisse der ersten Korrelationsstufe zu erhalten.

Bei Ausführungsbeispielen kann die erste Korrelationsstufe ausgebildet sein, um die Mehrzahl von Abschnittskorrelationsergebnissen zu normieren [z.B. durch Bildung von Betragsquadraten].

Bei Ausführungsbeispielen kann die erste Korrelationsstufe ausgebildet sein, um die Mehrzahl von Abschnittskorrelationsergebnissen in Abhängigkeit von einer ermittelten (z.B. berechneten) Leistung (p[n]) des empfangenen Signals oder der davon abgeleiteten Version [z.B. die gefilterte und/oder gespeicherte Version des zu empfangenen Signals (z.B. das Teilbandsignal der Mehrzahl von Teilbandsignalen)] zu normieren [Beispielsweise kann die erste Korrelationsstufe ausgebildet sein, um die Abschnittskorrelationsergebnissen durch Bildung von Betragsquadraten, Division durch die ermittelte Leistung und Berechnung der Wurzeln der Quotienten zu normieren].

Bei Ausführungsbeispielen kann die Leistung für die Normierung über mehrere Teilbänder ermittelt werden.

Bei Ausführungsbeispielen kann die Leistung für die Normierung basierend auf Synchronisationssymbolen und zumindest einem Datensymbol der jeweiligen Teil-Datenpakete ermittelt werden.

Bei Ausführungsbeispielen kann die erste Korrelationsstufe ausgebildet sein, um die Mehrzahl von Abschnittskorrelationsergebnissen separat zu normieren, wobei die Leistung getrennt für jeden Präambelabschnitt oder gemeinsam für alle Präambelabschnitte ermittelt wird.

Bei Ausführungsbeispielen kann die erste Korrelationsstufe eine Mehrzahl von Warteschlangenzwischenspeichern (z.B. Ringpuffern) aufweisen, die ausgebildet sind, um die jeweiligen Abschnittskorrelationsergebnisse zwischen zu speichern, wobei die Mehrzahl von Warteschlangenzwischenspeichern unterschiedliche Speicherlängen aufweisen, wobei die Speicherlängen der Mehrzahl von Warteschlangenzwischenspeichern von den jeweiligen Präambelabschnitten der Präambeln der Mehrzahl von Teil-Datenpaketen abhängig sind.

Bei Ausführungsbeispielen kann die erste Korrelationsstufe ausgebildet sein, um zumindest zwei Teilbandsignale der Mehrzahl von Teilbandsignalen [z.B. mehrere Teilbandsignale der Mehrzahl von Teilbandsignalen oder alle Teilbandsignale der Mehrzahl von Teilbandsignalen] jeweils mit der Mehrzahl von Präambelabschnitten zu korrelieren, um für jedes Teilbandsignal der zumindest zwei Teilbandsignale einen Teilsatz von Korrelationsergebnissen [z.B. (normierte) Korrelationsamplituden oder ein eindimensionales Array von (normierten) Korrelationsamplituden] zu erhalten, wobei die erste Korrelationsstufe ausgebildet ist, um als Korrelationsergebnisse der ersten Korrelationsstufe einen Satz von Korrelationsergebnissen bereitzustellen, der die Teilsätze von Korrelationsergebnissen aufweist [Beispielsweise kann der Satz von Korrelationsergebnissen die eindimensionalen Teilsätze von Korrelationsergebnissen aufweisen].

Bei Ausführungsbeispielen kann der Satz von Korrelationsergebnissen der ersten Korrelationsstufe ein zweidimensionales Array von Korrelationsergebnissen sein, wobei eine erste Dimension des zweidimensionalen Arrays von Korrelationsergebnissen [z.B. eine Abfolge von] Abtastzeitpunkte des empfangenen Signals beschreibt [z.B. Zeitrichtung], wobei eine zweite Dimension des zweidimensionalen Arrays von Korrelationsergebnissen Teilbänder des empfangenen Signals beschreibt [z.B. Frequenzrichtung].

Bei Ausführungsbeispielen kann die erste Korrelationsstufe einen [z.B. mehrkanaligen] Ausgangs-Warteschlangenzwischenspeicher [z.B. Ringpuffer] aufweisen, der ausgebildet ist, um den Satz von Korrelationsergebnissen der ersten Korrelationsstufe zwischen zu speichern.

Bei Ausführungsbeispielen kann die erste Korrelationsstufe ausgebildet sein, um eine Maximumbildung über Korrelationsergebnisse von benachbarten Teilbandsignalen durchzuführen, und um die kleineren Werte zu verwerfen.

Bei Ausführungsbeispielen können die Mehrzahl von Teil-Datenpaketen zumindest zwei unterschiedliche Präambeln aufweisen, wobei die erste Korrelationsstufe ausgebildet ist, um das empfangene Signal mit einer zweiten Mehrzahl von Präambelabschnitten zu korrelieren, die mit unterschiedlichen [z.B. sich überlappenden oder aneinander angrenzenden] Abschnitten einer zweiten Präambel der Mehrzahl von Teil-Datenpaketen korrespondieren [z.B. übereinstimmen (z.B. bei einem ungestörten Übertragungskanal)], um zumindest eine zweite Mehrzahl von Abschnittskorrelationsergebnissen [z.B. Abschnittskorrelationsamplituden; z.B. ein Abschnittskorrelationsergebnis (z.B. eine Korrelationsamplitude) pro Präambelabschnitt pro Abtastwert] zu erhalten, wobei die erste Korrelationsstufe ausgebildet ist, um die zweite Mehrzahl von Abschnittskorrelationsergebnissen [z.B. pro Abtastwert] zu kombinieren [z.B. zu addieren oder inkohärent zu addieren (z.B. durch Betragsbildung)], um einen zweiten Satz von Korrelationsergebnissen [z.B. (normierte) Korrelationsamplituden; z.B. für das zu empfangene Signal] oder einen zweiten Teilsatz von Korrelationsergebnissen [z.B. (normierte) Korrelationsamplituden oder ein eindimensionales Array von (normierten) Korrelationsamplituden; z.B. für das Teilbandsignal der Mehrzahl von Teilbandsignalen des zu verarbeitenden empfangenen Signals] zu erhalten.

Bei Ausführungsbeispielen können die zumindest zwei Präambeln unterschiedliche Längen aufweisen.

Bei Ausführungsbeispielen können die Mehrzahl von Teil-Datenpaketen die gleiche Präambel aufweisen.

Bei Ausführungsbeispielen können die zumindest zwei Teil-Datenpakete eine Vielzahl von Teil-Datenpaketen sein, wobei zumindest zwei Gruppen von Teil-Datenpaketen der Vielzahl von Teil-Datenpaketen [z.B. die zumindest zwei Gruppen von Teil-Datenpaketen echte [z.B. disjunkte] Teilmengen der Vielzahl von Teil-Datenpaketen sind], gruppenweise das gleiche relative Gruppensprungmuster aufweisen [z.B. so dass Teil-Datenpakete der zumindest zwei Gruppen von Teil-Datenpaketen den gleichen relativen Zeit- und Frequenzabstand zueinander aufweisen, oder mit anderen Worten, so dass Teil-Datenpakete einer ersten Gruppe von Teil-Datenpakten das gleiche relative Sprungmuster (=Gruppensprungmuster) aufweisen, wie Teil-Datenpakete einer zweiten Gruppe von Teil-Datenpaketen], wobei die zweite Korrelationsstufe ausgebildet ist, um aus dem Satz von Korrelationsergebnissen [z.B. ein zwei dimensionales Array von Korrelationsergebnissen] der ersten Korrelationsstufe Gruppen von Korrelationsergebnissen basierend auf einem Gruppenkorrelationsmuster [z.B. welches Zeit- und Frequenzabstände der Korrelationsergebnisse des zwei dimensionalen Arrays von Korrelationsergebnissen angibt], das von dem Gruppen-Sprungmuster [z.B. welches relative Zeit- und Frequenzabstande der Gruppe von Teil-Datenpaketen angibt] abgeleitet ist, auszuwählen und gruppenweise zu kombinieren [z.B. zu addieren], um einen Satz von Korrelationsergebnissen der zweiten Korrelationsstufe zu erhalten.

Beispielsweise kann ein zweites Datenpaket der ersten Gruppe von Datenpaketen den gleichen Zeit- und Frequenzabstand zu einem ersten Datenpaket der ersten Gruppe von Datenpakten aufweisen, wie ein viertes Datenpaket der zweiten Gruppe von Datenpaketen zu einem dritten Datenpaket der zweiten Gruppe von Datenpaketen.

Bei Ausführungsbeispielen kann die zweite Korrelationsstufe ausgebildet sein, um die Gruppen von Korrelationsergebnissen aus dem Satz von Korrelationsergebnissen der ersten Korrelationsstufe in Zeit- und oder Frequenzrichtung basierend auf dem Gruppenkorrelationsmuster auszuwählen.

Bei Ausführungsbeispielen kann der Satz von Korrelationsergebnissen der ersten Korrelationsstufe ein zwei dimensionales Array von Korrelationsergebnissen sein, wobei das Gruppenkorrelationsmuster Zeit- und Frequenzabstände der Korrelationsergebnisse des zwei dimensionalen Arrays von Korrelationsergebnissen der ersten Korrelationsstufe angibt, die den relativen Zeit- und Frequenzabständen des Gruppen-Sprungmusters der Gruppen von Teil-Datenpaketen entsprechen.

Bei Ausführungsbeispielen kann der Satz von Korrelationsergebnissen der zweiten Korrelationsstufe ein zwei dimensionales Array von Korrelationsergebnissen sein, wobei eine erste Dimension des zweidimensionalen Arrays von Korrelationsergebnissen eine [z.B. relative] zeitliche Lage der Gruppe von Teil-Datenpaketen beschreibt [Zeitrichtung], wobei eine zweite Dimension des zweidimensionalen Arrays von Korrelationsergebnissen eine [z.B. relative] Frequenzlage der Gruppe von Teil-Datenpaketen beschreibt [Frequenzrichtung].

Bei Ausführungsbeispielen kann zumindest eine Dimension [z.B. Frequenzrichtung] des zweidimensionalen Arrays von Korrelationsergebnissen der zweiten Korrelationsstufe kleiner sein als die jeweilige zumindest eine Dimension des zweidimensionalen Arrays von Korrelationsergebnissen der ersten Korrelationsstufe.

Bei Ausführungsbeispielen kann die zweite Korrelationsstufe einen [z.B. zwei dimensionalen] Ausgangs-Warteschlangenzwischenspeicher [z.B. Ringpuffer] aufweisen, der ausgebildet ist, um den Satz von Korrelationsergebnissen der zweiten Korrelationsstufe zwischen zu speichern.

Bei Ausführungsbeispielen können zumindest zwei weitere Gruppen von Teil-Datenpaketen der Vielzahl von Teil-Datenpaketen gruppenweise ein gleiches relatives weiteres Gruppensprungmuster aufweisen [z.B. so dass Teil-Datenpakete der zumindest zwei zweiten weiteren Gruppen von Teil-Datenpaketen den gleichen relativen Zeit- und Frequenzabstand zueinander aufweisen, oder mit anderen Worten, so dass Teil-Datenpakete einer dritten Gruppe von Teil-Datenpakten das gleiche relative weitere Sprungmuster (= weiteres Gruppensprungmuster) aufweisen, wie Teil-Datenpakete einer vierten Gruppe von Teil-Datenpaketen], wobei die zweite Korrelationsstufe ausgebildet ist, um aus dem Satz von Korrelationsergebnissen [z.B. ein zwei dimensionales Array von Korrelationsergebnissen] der ersten Korrelationsstufe weitere Gruppen von Korrelationsergebnissen basierend auf einem weiteren Gruppenkorrelationsmuster [z.B. welches Zeit- und Frequenzabstände der Korrelationsergebnisse des zwei dimensionalen Arrays von Korrelationsergebnissen angibt], das von dem weiteren Gruppen-Sprungmuster [z.B. welches relative Zeit- und Frequenzabstande der zweiten Gruppe von Teil-Datenpaketen angibt] abgeleitet ist, auszuwählen und gruppenweise zu kombinieren [z.B. zu addieren], um einen Satz von weiteren Korrelationsergebnissen der zweiten Korrelationsstufe zu erhalten, wobei das Gruppensprungmuster und das weitere Gruppensprungmuster unterschiedlich sind.

Bei Ausführungsbeispielen können die zumindest zwei Gruppen von Teil-Datenpaketen eine Sequenz bilden, wobei die zumindest zwei Gruppen von Teil-Datenpaketen ein relatives Gruppensequenzsprungmuster [z.B. relative Zeit- und Frequenzabstände zwischen den Gruppen] zueinander aufweisen, wobei der Datenempfänger eine dritte Korrelationsstufe aufweist, die ausgebildet ist, um aus dem Satz von Korrelationsergebnissen [z.B. ein zwei dimensionales Array von Korrelationsergebnissen] der zweiten Korrelationsstufe Gruppen von Korrelationsergebnissen basierend auf einem Gruppensequenzkorrelationsmuster [z.B. welches Zeit- und Frequenzabstände der Korrelationsergebnisse des zwei dimensionalen Arrays von Korrelationsergebnissen angibt], das von dem Gruppensequenzsprungmuster abgeleitet ist, auszuwählen und gruppenweise zu kombinieren [z.B. zu addieren], um einen Satz von Korrelationsergebnissen der dritten Korrelationsstufe zu erhalten.

Bei Ausführungsbeispielen kann die dritte Korrelationsstufe ausgebildet sein, um die Gruppen von Korrelationsergebnissen aus dem Satz von Korrelationsergebnissen der zweiten Korrelationsstufe in Zeit- und oder Frequenzrichtung basierend auf dem Gruppensequenzkorrelationsmuster auszuwählen.

Bei Ausführungsbeispielen kann der Satz von Korrelationsergebnissen der zweiten Korrelationsstufe ein zwei dimensionales Array von Korrelationsergebnissen sein, wobei das Gruppensequenzkorrelationsmuster Zeit- und Frequenzabstände der Korrelationsergebnisse des zwei dimensionalen Arrays von Korrelationsergebnissen der zweiten Korrelationsstufe angibt, die den relativen Zeit- und Frequenzabständen des Gruppensequenzsprungmusters entsprechen.

Bei Ausführungsbeispielen kann der Satz von Korrelationsergebnissen der dritten Korrelationsstufe ein zwei dimensionales Array von Korrelationsergebnissen sein, wobei eine erste Dimension des zweidimensionalen Arrays von Korrelationsergebnissen eine [z.B. relative] zeitliche Lage der Gruppen von Teil-Datenpaketen beschreibt [Zeitrichtung], wobei eine zweite Dimension des zweidimensionalen Arrays von Korrelationsergebnissen eine relative Frequenzlage der Gruppen von Teil-Datenpaketen beschreibt [Frequenzrichtung].

Bei Ausführungsbeispielen kann zumindest eine Dimension [z.B. Frequenzrichtung] des zweidimensionalen Arrays von Korrelationsergebnissen der dritten Korrelationsstufe kleiner sein als die jeweilige zumindest eine Dimension des zweidimensionalen Arrays von Korrelationsergebnissen der zweiten Korrelationsstufe.

Bei Ausführungsbeispielen kann die dritte Korrelationsstufe einen [z.B. mehrkanaligen] Ausgangs-Warteschlangenzwischenspeicher [z.B. Ringpuffer] aufweisen, der ausgebildet ist, um den Satz von Korrelationsergebnissen der dritten Korrelationsstufe zwischen zu speichern.

Bei Ausführungsbeispielen kann der Datenempfänger ausgebildet sein, um den Satz von Korrelationsergebnissen in einer geeigneten Form an eine nachfolgende Paket-Detektion zu übergeben.

Bei Ausführungsbeispielen können die zumindest zwei Gruppen von Teil-Datenpaketen eine weitere Sequenz bilden [z.B. eine erste Gruppe und eine zweite Gruppe von Teil-Datenpakten bilden eine erste Sequenz, wobei eine dritte Gruppe und eine vierte Gruppe von Teil-Datenpaketen eine zweite Sequenz bilden], wobei die zumindest zwei Gruppen von Teil-Datenpaketen ein relatives weiteres Gruppensequenzsprungmuster [z.B. relative Zeit- und Frequenzabstände zwischen den Gruppen] zueinander aufweisen, wobei der Datenempfänger eine dritte Korrelationsstufe aufweist, die ausgebildet ist, um aus dem Satz von Korrelationsergebnissen [z.B. ein zwei dimensionales Array von Korrelationsergebnissen] der zweiten Korrelationsstufe Gruppen von Korrelationsergebnissen basierend auf einem weiteren Gruppens-Sequenzkorrelationsmuster [z.B. welches Zeit- und Frequenzabstände der Korrelationsergebnisse des zwei dimensionalen Arrays von Korrelationsergebnissen angibt], das von dem weiteren Gruppensequenzsprungmuster abgeleitet ist, auszuwählen und gruppenweise zu kombinieren [z.B. zu addieren], um einen weiteren Satz von Korrelationsergebnissen der dritten Korrelationsstufe zu erhalten, wobei das Gruppensequenzsprungmuster und das weitere Gruppensequenzsprungmuster unterschiedlich sind.

Bei Ausführungsbeispielen können die Datenpakete entsprechend eines Sprungmusters in der Zeit- und Frequenz verteilt sein, wobei die zweite Korrelationsstufe ausgebildet sein kann, um aus dem Satz von Korrelationsergebnissen [z.B. ein zwei dimensionales Array von Korrelationsergebnissen] der ersten Korrelationsstufe Gruppen von Korrelationsergebnissen basierend auf einem Korrelationsmuster [z.B. welches Zeit- und Frequenzabstände der Korrelationsergebnisse des zwei dimensionalen Arrays von Korrelationsergebnissen angibt], das von dem Sprungmuster der Teil-Datenpakete abgeleitet ist, auszuwählen und gruppenweise zu kombinieren [z.B. zu addieren oder kohärent zu addieren], um einen Satz von Korrelationsergebnissen der zweiten Korrelationsstufe zu erhalten.

Bei Ausführungsbeispielen kann die zweite Korrelationsstufe ausgebildet ist, um die Gruppen von Korrelationsergebnissen aus dem Satz von Korrelationsergebnissen der ersten Korrelationsstufe in Zeit- und oder Frequenzrichtung basierend auf dem Korrelationsmuster auszuwählen.

Bei Ausführungsbeispielen kann der Satz von Korrelationsergebnissen der ersten Korrelationsstufe ein zwei dimensionales Array von Korrelationsergebnissen sein, wobei das Korrelationsmuster Zeit- und Frequenzabstände der Korrelationsergebnisse des zwei dimensionalen Arrays von Korrelationsergebnissen der ersten Korrelationsstufe angibt, die den relativen Zeit- und Frequenzabständen des Sprungmusters der Teil-Datenpakete entsprechen.

Bei Ausführungsbeispielen kann der Satz von Korrelationsergebnissen der zweiten Korrelationsstufe ein zwei dimensionales Array von Korrelationsergebnissen sein, wobei eine erste Dimension des zweidimensionalen Arrays von Korrelationsergebnissen eine [z.B. relative] zeitliche Lage Teil-Datenpakete beschreibt [Zeitrichtung], wobei eine zweite Dimension des zweidimensionalen Arrays von Korrelationsergebnissen eine [z.B. relative] Frequenzlage Teil-Datenpakete beschreibt [Frequenzrichtung].

Bei Ausführungsbeispielen kann die erste Dimension und/oder die zweite Dimension des zweidimensionalen Arrays von Korrelationsergebnissen der zweiten Korrelationsstufe kleiner sein als die jeweilige Dimension des zweidimensionalen Arrays von Korrelationsergebnissen der ersten Korrelationsstufe.

Bei Ausführungsbeispielen kann die zweite Korrelationsstufe einen [z.B. mehrkanaligen] Ausgangs-Warteschlangenzwischenspeicher [z.B. Ringpuffer] aufweisen, der ausgebildet ist, um den Satz von Korrelationsergebnissen der zweiten Korrelationsstufe zwischen zu speichern.

Bei Ausführungsbeispielen kann der Datenempfänger ausgebildet sein, um den Satz von Korrelationsergebnissen in einer geeigneten Form an eine nachfolgende Paket-Detektion zu übergeben.

Bei Ausführungsbeispielen können zumindest zwei weitere Gruppen von Teil-Datenpaketen der Vielzahl von Teil-Datenpaketen gruppenweise ein gleiches relatives weiteres Gruppensprungmuster aufweisen [z.B. so dass Teil-Datenpakete der zumindest zwei zweiten weiteren Gruppen von Teil-Datenpaketen den gleichen relativen Zeit- und Frequenzabstand zueinander aufweisen, oder mit anderen Worten, so dass Teil-Datenpakete einer dritten Gruppe von Teil-Datenpakten das gleiche relative weitere Sprungmuster (= weiteres Gruppensprungmuster) aufweisen, wie Teil-Datenpakete einer vierten Gruppe von Teil-Datenpaketen], wobei die zweite Korrelationsstufe ausgebildet ist, um aus dem Satz von Korrelationsergebnissen [z.B. ein zwei dimensionales Array von Korrelationsergebnissen] der ersten Korrelationsstufe weitere Gruppen von Korrelationsergebnissen basierend auf einem weiteren Gruppenkorrelationsmuster [z.B. welches Zeit- und Frequenzabstände der Korrelationsergebnisse des zwei dimensionalen Arrays von Korrelationsergebnissen angibt], das von dem weiteren Gruppen-Sprungmuster [z.B. welches relative Zeit- und Frequenzabstande der zweiten Gruppe von Teil-Datenpaketen angibt] abgeleitet ist, auszuwählen und gruppenweise zu kombinieren [z.B. zu addieren], um einen Satz von weiteren Korrelationsergebnissen der zweiten Korrelationsstufe zu erhalten, wobei das Gruppensprungmuster und das weitere Gruppensprungmuster unterschiedlich sind.

Weitere Ausführungsbeispiele schaffen ein Verfahren zum Empfangen eines Signals, wobei das Signal eine Mehrzahl von Teil-Datenpaketen aufweist [z.B. die entsprechend eines Sprungmusters in der Zeit- und Frequenz verteilt sind], wobei die Mehrzahl von Teil-Datenpaketen jeweils einen Teil eines Datenpakets aufweisen. Das Verfahren umfasst einen Schritt des Durchführens einer mehrstufigen Korrelation [z.B. des empfangenen Signals (z.B. in einer ersten Korrelationsstufe) und einer (z.B. durch die erste Korrelationsstufe) aufbereiteten Version des zu verarbeitenden Signals (z.B. in einer zweiten Korrelationsstufe)], um die Mehrzahl von Teil-Datenpaketen [z.B. basierend auf Präambeln derselben] in dem empfangenen Signal zu detektieren, wobei eine zweite Korrelationsstufe der mehrstufigen Korrelation basierend auf Korrelationsergebnissen [z.B. basierend auf der aufbereiteten Version des empfangenen Signals] einer ersten Korrelationsstufe der mehrstufigen Korrelation erfolgt.

Weitere Ausführungsbeispiele schaffen einen Datenempfänger, der ausgebildet ist, um ein Signal zu empfangen, das zumindest ein Datenpaket aufweist, wobei das Datenpaket eine Präambel aufweist, wobei der Datenempfänger eine Korrelationsstufe aufweist, die ausgebildet ist, um das empfangene Signal oder eine davon abgeleitete Version [z.B. eine gefilterte und/oder gespeicherte Version des empfangenen Signals] mit einer Mehrzahl von Präambelabschnitten zu korrelieren [z.B. die mit unterschiedlichen (z.B. sich überlappenden oder aneinander angrenzenden) Abschnitten der Präambel des Datenpakets korrespondieren (z.B. übereinstimmen (z.B. bei einem ungestörten Übertragungskanal))], um eine Mehrzahl von Abschnittskorrelationsergebnissen [z.B. Abschnittskorrelationsamplituden; z.B. ein Abschnittskorrelationsergebnis (z.B. eine Korrelationsamplitude) pro Präambelabschnitt pro Sample] zu erhalten, wobei die erste Korrelationsstufe ausgebildet ist, um die Mehrzahl von Abschnittskorrelationsergebnissen [z.B. pro Sample] zu kombinieren [z.B. zu addieren oder inkohärent zu addieren (z.B. durch Betragsbildung)], um einen Satz von Korrelationsergebnissen [z.B. (normierte) Korrelationsamplituden; z.B. für das zu empfangene Signal] zu erhalten, wobei die erste Korrelationsstufe ausgebildet ist, um die Mehrzahl von Abschnittskorrelationsergebnissen zu normieren [z.B. durch Bildung von Betragsquadraten], wobei die erste Korrelationsstufe ausgebildet ist, um die Mehrzahl von Abschnittskorrelationsergebnissen in Abhängigkeit von einer ermittelten (z.B. berechneten) Leistung oder Störleistung ($p[n]$) des zu empfangenen Signals oder der davon abgeleiteten Version [z.B. die gefilterte und/oder gespeicherte Version des zu empfangenen Signals] zu normieren.

Bei Ausführungsbeispielen kann die Korrelationsstufe ausgebildet sein, um das zu verarbeitende Signal oder eine davon abgeleitete Version mit einer Mehrzahl von Präambelabschnitten zu korrelieren, die mit unterschiedlichen [z.B. sich überlappenden oder aneinander angrenzenden] Abschnitten der Präambel des Datenpakets korrespondieren [z.B. übereinstimmen (z.B. bei einem ungestörten Übertragungskanal)], um die Mehrzahl von Abschnittskorrelationsergebnissen [z.B. Abschnittskorrelationsamplituden; z.B. ein Abschnittskorrelationsergebnis (z.B. eine Korrelationsamplitude) pro Präambelabschnitt pro Abtastwert] zu erhalten.

Bei Ausführungsbeispielen kann die erste Korrelationsstufe ausgebildet sein, um die Abschnittskorrelationsergebnisse durch Bildung von Betragsquadraten, Division durch die ermittelte Leistung und Berechnung der Wurzeln der Quotienten zu normieren.

Weitere Ausführungsbeispiele schaffen ein Verfahren zum Empfangen eines Signals, wobei das Signal zumindest ein Datenpaket aufweist, wobei das Datenpaket eine Präambel aufweist. Das Verfahren umfasst einen Schritt des Korrelierens des empfangenen Signals oder einer davon abgeleiteten Version [z.B. eine gefilterte und/oder gespeicherte Version des empfangenen Signals] mit einer Mehrzahl von Präambelabschnitten, die mit unterschiedlichen [z.B. sich überlappenden oder aneinander angrenzenden] Abschnitten der Präambel des Datenpakets korrespondieren [z.B. übereinstimmen (z.B. bei einem ungestörten Übertragungskanal)], um eine Mehrzahl von Abschnittskorrelationsergebnissen [z.B. Abschnittskorrelationsamplituden; z.B. ein Abschnittskorrelationsergebnis (z.B. eine Korrelationsamplitude) pro Präambelabschnitt pro Abtastwert] zu erhalten. Ferner umfasst das Verfahren einen Schritt des Normierens der Mehrzahl von Abschnittskorrelationsergebnissen, wobei die Mehrzahl von Abschnittskorrelationsergebnissen in Abhängigkeit von einer ermittelten (z.B. berechneten) Leistung oder Störleistung (p[n]) des empfangenen Signals oder der davon abgeleiteten Version [z.B. die gefilterte und/oder gespeicherte Version des empfangenen Signals] normiert wird. Ferner umfasst das Verfahren einen Schritt des Kombinierens der Mehrzahl von normierten Abschnittskorrelationsergebnissen [z.B. pro Sample] [z.B. zu addieren oder inkohärent zu addieren], um einen Satz von Korrelationsergebnissen [z.B. (normierte) Korrelationsamplituden; z.B. für das empfangene Signal] zu erhalten.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum

**EP 4 107 891 B1**

Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

<u>Literaturverzeichnis</u>

[1] G. Kilian, M. Breiling, H. H. Petkov, H. Lieske, F. Beer, J. Robert, and A. Heuberger, "Increasing Transmission Reliability for Telemetry Systems Using Telegram Splitting," IEEE Transactions on Communications, vol. 63, no. 3, pp. 949-961, Mar. 2015.

[2] DE 10 2011 082098 B4

[3] WO 2017/167366 A1

[4] DE 10 2017 206248 A1

[5] ETSI TS 103357, ETSI Technical Specification

**Patentansprüche**

**1.** Datenempfänger (110),

wobei der Datenempfänger (110) konfiguriert ist, um ein Signal (120) von einem Datensender (100) zu empfangen, wobei das Signal (120) zumindest zwei Pilotsequenzen (144_1-144_n) aufweist, die entsprechend eines Pilotmusters (140) in der Zeit verteilt sind, wobei zumindest eine zweite Pilotsequenz (144_2) der zumindest zwei Pilotsequenzen (144_1-144_n) eine zeitlich veränderliche Frequenzverschiebung gegenüber einer ersten Pilotsequenz (144_1) der zumindest zwei Pilotsequenzen (144_1-144_n) aufweist,

wobei der Datenempfänger einen Detektor (130) mit einem Korrelator (122) aufweist, der konfiguriert ist, um die zumindest zwei Pilotsequenzen (144_1-144_n) basierend auf einem Korrelationsmuster zu detektieren,

wobei das Korrelationsmuster mit dem Pilotmuster (140) korrespondiert und eine Verteilung der zumindest zwei Pilotsequenzen (144_1-144_n) in der Zeit und Frequenz beschreibt,

wobei das Korrelationsmuster mit einer zeitlich veränderlichen Frequenzverschiebung beaufschlagt ist, um einen Einfluss der zeitlich veränderlichen Frequenzverschiebung der zumindest einen zweiten Pilotsequenz (144_2) gegenüber der ersten Pilotsequenz (144_1) zu reduzieren.

2. Datenempfänger (110) nach dem vorangehenden Anspruch,

wobei sich zumindest einer aus Datensender (100) und Datenempfänger (110) relativ zu dem anderen aus Datensender (100) und Datenempfänger (110) bewegt,

wobei die zeitlich veränderliche Frequenzverschiebung durch eine relative Bewegungsänderung zwischen dem Datensender (100) und Datenempfänger (110) resultiert.

3. Datenempfänger (110) nach einem der vorangehenden Ansprüche,
wobei der Datenempfänger (110) konfiguriert ist, um die zeitlich veränderliche Frequenzverschiebung der zumindest einen zweiten Pilotsequenz (144_2) gegenüber der ersten Pilotsequenz (144_1) zu schätzen und um das Korrelationsmuster in der Frequenz basierend auf der geschätzten zeitlich veränderlichen Frequenzverschiebung anzupassen.

4. Datenempfänger (110) nach einem der Ansprüche 1 bis 3,

wobei der Korrelator (122) zumindest zwei parallel arbeitende Korrelationseinheiten (118_1, 118_2) aufweist,

wobei eine erste Korrelationseinheit (118_1) der zumindest zwei parallel arbeitenden Korrelationseinheiten (118_1, 118_2) konfiguriert ist, um basierend auf dem Korrelationsmuster Korrelationen der zumindest zwei Pilotsequenzen (144_1-144_n) mit Referenzsequenzen durchzuführen, um einen Satz von Korrelationsergebnissen (119_1) der ersten Korrelationseinheit (118_1) zu erhalten,

wobei eine zweite Korrelationseinheit (118_2) der zumindest zwei parallel arbeitenden Korrelationseinheiten (118_1, 118_2) konfiguriert ist, um basierend auf dem Korrelationsmuster Korrelationen der zumindest zwei Pilotsequenzen (144_1-144_n) mit Referenzsequenzen durchzuführen, um einen Satz von Korrelationsergebnissen (119_2) der zweiten Korrelationseinheit (118_2) zu erhalten,

wobei der Datenempfänger (110) konfiguriert ist, um das in den zumindest zwei parallel arbeitenden Korrelationseinheiten (118_1, 118_2) verwendete Korrelationsmuster in der Frequenz unterschiedlich anzupassen, um Einflüsse unterschiedlicher zeitlich veränderlicher Frequenzverschiebungen zu reduzieren,

wobei der Datenempfänger (110) konfiguriert ist, um einen Satz von Korrelationsergebnissen aus den Sätzen von Korrelationsergebnissen (119_1, 119_2) der zumindest zwei parallel arbeitenden Korrelationseinheiten (118_1, 118_2), basierend auf dem die Detektion der zumindest zwei Pilotsequenzen (144_1-144_n) erfolgt, in Abhängigkeit von Werten des jeweiligen Satzes von Korrelationsergebnissen auszuwählen.

5. Datenempfänger (110) nach einem der Ansprüche 1 bis 3,

wobei der Korrelator (122) ein mehrstufiger Korrelator ist, der eine erste Korrelationsstufe (124) und zumindest eine auf die erste Korrelationsstufe folgende zweite Korrelationsstufe (128, 129) aufweist, die basierend auf Korrelationsergebnissen (125) der ersten Korrelationsstufe (124) arbeitet,

wobei der Detektor (130) konfiguriert ist, um die zumindest zwei Pilotsequenzen (144_1-144_n) in dem empfangenen Signal (121) zu detektieren,

wobei der Datenempfänger (110) konfiguriert ist, um zumindest ein Korrelationsmuster, das in zumindest einer Korrelationsstufe aus der zumindest einen zweiten Korrelationsstufe (128, 129) des mehrstufigen Korrelators (122) verwendet wird, in der Frequenz anzupassen, um den Einfluss der zeitlich veränderlichen Frequenzverschiebung zu reduzieren.

6. Datenempfänger (110) nach einem der vorangehenden Ansprüche,

wobei der Datenempfänger (110) einen Decoder (133) aufweist, der konfiguriert ist, um Daten, die das empfangene Signal aufweist, zu decodieren,

wobei der Decoder (133) konfiguriert ist, um bei der Decodierung der Daten die zeitlich veränderliche Frequenzverschiebung zu berücksichtigen oder zu korrigieren.

7. Verfahren (300), ausgeführt durch einen Datenempfänger (110), mit folgenden Schritten:

Empfangen (302) eines Signals von einem Datensender, wobei das Signal zumindest zwei Pilotsequenzen aufweist, die entsprechend eines Pilotmusters in der Zeit verteilt sind, wobei zumindest eine zweite Pilotsequenz der zumindest zwei Pilotsequenzen eine zeitlich veränderliche Frequenzverschiebung gegenüber einer ersten Pilotsequenz der zumindest zwei Pilotsequenzen aufweist, und

Detektieren der zumindest zwei Pilotsequenzen basierend auf einem Korrelationsmuster, wobei das Korrelationsmuster mit dem Pilotmuster korrespondiert und eine Verteilung der zumindest zwei Pilotsequenzen in der Zeit und Frequenz beschreibt,

wobei das Korrelationsmuster mit einer zeitlich veränderlichen Frequenzverschiebung beaufschlagt ist, um einen Einfluss der zeitlich veränderlichen Frequenzverschiebung der zumindest einen zweiten Pilotsequenz (144_2) gegenüber der ersten Pilotsequenz zu reduzieren.

8. Datenempfänger (110),

wobei der Datenempfänger (110) konfiguriert ist, um ein Signal (120) von einem Datensender (100) zu empfangen, wobei das Signal (120) zumindest zwei Pilotsequenzen (144_1-144_n) aufweist, die entsprechend eines Pilotmusters (140) in der Zeit verteilt sind, wobei zumindest eine zweite Pilotsequenz (144_2) der zumindest zwei Pilotsequenzen (144_1-144_n) eine zeitlich veränderliche Frequenzverschiebung gegenüber einer ersten Pilotsequenz (144_1) der zumindest zwei Pilotsequenzen (144_1-144_n) aufweist,

wobei der Datenempfänger (110) einen Detektor (130) mit einem Korrelator (122) aufweist, der konfiguriert ist, um die zumindest zwei Pilotsequenzen (144_1-144_n) basierend auf einem aus einem Satz von Korrelationsmustern ausgewählten Korrelationsmuster zu detektieren,

wobei die Korrelationsmuster des Satzes von Korrelationsmustern mit dem Pilotmuster (140) korrespondieren und eine Verteilung der zumindest zwei Pilotsequenzen (144_1-144_n) in der Zeit und Frequenz beschreiben,

wobei die Korrelationsmuster des Satzes von Korrelationsmustern mit unterschiedlichen zeitlich Frequenzverschiebung beaufschlagt sind, um Einflüsse von unterschiedlichen zeitlich veränderlichen Frequenzverschiebungen der zumindest einen zweiten Pilotsequenz (144_2) gegenüber der ersten Pilotsequenz (144_1) zu reduzieren.

9. Datenempfänger nach Anspruch 8,

wobei der Detektor (130) konfiguriert ist, um die zeitlich veränderliche Frequenzverschiebung der zumindest einen zweiten Pilotsequenz (144_2) gegenüber der ersten Pilotsequenz (144_1) zu schätzen,

wobei der Detektor (130) konfiguriert ist, um ein Korrelationsmuster aus dem Satz von Korrelationsmustern in Abhängigkeit der geschätzten Frequenzverschiebung auszuwählen, um das ausgewählte Korrelationsmuster zu erhalten.

10. Datenempfänger (110) nach Anspruch 8 oder 9,

wobei der Datenempfänger (110) einen Decoder (133) aufweist, der konfiguriert ist, um Daten, die das Signal (120) aufweist zu decodieren,

wobei der Decoder (133) konfiguriert ist, um bei der Decodierung der Daten den zeitlich veränderlichen Frequenzversatz, der durch das für die Detektion ausgewählte Korrelationsmuster reduziert wird, zu berücksichtigen oder zu korrigieren.

11. Datenempfänger (110) nach einem der Ansprüche 8 bis 10,

wobei das Signal (120) eine Mehrzahl von Teil-Datenpaketen (142_1-142_n) aufweist, die entsprechend eines Sprungmusters (140) in der Zeit- und Frequenz verteilt sind,

wobei die zumindest zwei Pilotsequenzen (144_1-144_n) eine Mehrzahl von Pilotsequenzen (144_1-144_n) sind, wobei die Mehrzahl von Teil-Datenpakten (142_1-142_n) jeweils eine Pilotsequenz der Mehrzahl von Pilotsequenzen (144_1-144_n) aufweisen,

wobei der Satz von Korrelationsmustern von dem Sprungmuster (140) abgeleitet ist.

12. Datenempfänger (110) nach einem der Ansprüche 8 bis 11,
wobei der Satz von Korrelationsmustern von zumindest einem in ETSI TS 103 357 definierten Sprungmuster abgeleitet ist.

13. Verfahren (310), ausgeführt durch einen Datenempfänger (110), mit folgenden Schritten:

Empfangen (312) eines Signals von einem Datensender zu empfangen, wobei das Signal zumindest zwei Pilotsequenzen aufweist, die entsprechend eines Pilotmusters in der Zeit verteilt sind, wobei zumindest eine zweite Pilotsequenz der zumindest zwei Pilotsequenzen eine zeitlich veränderliche Frequenzverschiebung gegenüber einer ersten Pilotsequenz der zumindest zwei Pilotsequenzen aufweist, und
Detektieren (314) der zumindest zwei Pilotsequenzen basierend auf einem aus einem Satz von Korrelationsmustern ausgewählten Korrelationsmuster,
wobei die Korrelationsmuster des Satzes von Korrelationsmustern mit dem Pilotmuster korrespondieren und eine Verteilung der zumindest zwei Pilotsequenzen in der Zeit und Frequenz beschreiben,
wobei die Korrelationsmuster des Satzes von Korrelationsmustern mit unterschiedlichen zeitlich veränderlichen Frequenzverschiebungen beaufschlagt sind, um Einflüsse von unterschiedlichen zeitlich veränderlichen Frequenzverschiebungen der zumindest einen zweiten Pilotsequenz gegenüber der ersten Pilotsequenz zu reduzieren.

14. Computerprogramm, umfassend Befehle, die bei der Ausführung des Programms durch einen Computer diesen veranlassen, das Verfahren nach Anspruch 7 oder 13 auszuführen.

**Claims**

1. A data receiver (110),

wherein the data receiver (110) is configured to receive a signal (120) from a data transmitter (100), wherein the signal (120) comprises at least two pilot sequences (144_1-144_n) which are distributed in time according to a pilot pattern (140), wherein at least one second pilot sequence (144_2) of the at least two pilot sequences (144_1-144_n) comprises a temporally varying frequency shift relative to a first pilot sequence (144_1) of the at least two pilot sequences (144_1-144_n),
wherein the data receiver comprises a detector (130) with a correlator (122) which is configured to detect the at least two pilot sequences (144_1-144_n) based on a correlation pattern,
wherein the correlation pattern corresponds to the pilot pattern (140) and describes a distribution of the at least two pilot sequences (144_1-144_n) in time and frequency,
wherein the correlation pattern is provided with a temporally varying frequency shift in order to reduce an influence of the temporally varying frequency shift of the at least one second pilot sequence (144_2) relative to the first pilot sequence (144_1).

2. The data receiver (110) according to the preceding claim,

wherein at least one of the data transmitter (100) and the data receiver (110) moves relative to the other of the data transmitter (100) and the data receiver (110),
wherein the temporally varying frequency shift results from a relative movement change between the data transmitter (100) and the data receiver (110).

3. The data receiver (110) according to any of the preceding claims,
wherein the data receiver (110) is configured to estimate the temporally varying frequency shift of the at least one second pilot sequence (144_2) relative to the first pilot sequence (144_1) and to adapt the correlation pattern in frequency based on the estimated temporally varying frequency shift.

4. The data receiver (110) according to any of claims 1 to 3,

wherein the correlator (122) comprises at least two correlation units (118_1, 118_2) operating in parallel,
wherein a first correlation unit (118_1) of the at least two correlation units (118_1, 118_2) operating in parallel is configured to perform, based on the correlation pattern, correlations of the at least two pilot sequences (144_1-144_n) with reference sequences in order to obtain a set of correlation results (119_1) of the first correlation unit (118_1),

wherein a second correlation unit (118_2) of the at least two correlation units (118_1, 118_2) operating in parallel is configured to perform, based on the correlation pattern, correlations of the at least two pilot sequences (144_1-144_n) with reference sequences in order to obtain a set of correlation results (119_2) of the second correlation unit (118_2),

wherein the data receiver (110) is configured to adapt the correlation pattern used in the at least two correlation units (118_1, 118_2) operating in parallel differently in frequency in order to reduce influences of different temporally varying frequency shifts,

wherein the data receiver (110) is configured to select a set of correlation results from the sets of correlation results (119_1, 119_2) of the at least two correlation units (118_1, 118_2) operating in parallel, based on which the detection of the at least two pilot sequences (144_1-144_n) takes place, depending on values of the respective set of correlation results.

5. The data receiver (110) according to any of claims 1 to 3,

wherein the correlator (122) is a multi-stage correlator which comprises a first correlation stage (124) and at least one second correlation stage (128, 129) following the first correlation stage, which second correlation stage operates based on correlation results (125) of the first correlation stage (124),

wherein the detector (130) is configured to detect the at least two pilot sequences (144_1-144_n) in the received signal (121),

wherein the data receiver (110) is configured to adapt at least one correlation pattern, which is used in at least one correlation stage from the at least one second correlation stage (128, 129) of the multi-stage correlator (122), in frequency in order to reduce the influence of the temporally varying frequency shift.

6. The data receiver (110) according to any of the preceding claims,

wherein the data receiver (110) comprises a decoder (133) which is configured to decode data comprising the received signal,

wherein the decoder (133) is configured to take into account or correct the temporally varying frequency shift when decoding the data.

7. A method (300), performed by a data receiver (110), comprising the following steps:

receiving (302) a signal from a data transmitter, wherein the signal comprises at least two pilot sequences which are distributed in time according to a pilot pattern, wherein at least one second pilot sequence of the at least two pilot sequences comprises a temporally varying frequency shift relative to a first pilot sequence of the at least two pilot sequences, and

detecting the at least two pilot sequences based on a correlation pattern,

wherein the correlation pattern corresponds to the pilot pattern and describes a distribution of the at least two pilot sequences in time and frequency,

wherein the correlation pattern is provided with a temporally varying frequency shift in order to reduce an influence of the temporally varying frequency shift of the at least one second pilot sequence (144_2) relative to the first pilot sequence.

8. A data receiver (110),

wherein the data receiver (110) is configured to receive a signal (120) from a data transmitter (100), wherein the signal (120) comprises at least two pilot sequences (144_1-144_n) which are distributed in time according to a pilot pattern (140), wherein at least one second pilot sequence (144_2) of the at least two pilot sequences (144_1-144_n) comprises a temporally varying frequency shift relative to a first pilot sequence (144_1) of the at least two pilot sequences (144_1-144_n),

wherein the data receiver (110) comprises a detector (130) with a correlator (122) which is configured to detect the at least two pilot sequences (144_1-144_n) based on a correlation pattern selected from a set of correlation patterns,

wherein the correlation patterns of the set of correlation patterns correspond to the pilot pattern (140) and describe a distribution of the at least two pilot sequences (144_1-144_n) in time and frequency,

wherein the correlation patterns of the set of correlation patterns are provided with different temporal frequency shifts in order to reduce influences of different temporally varying frequency shifts of the at least one second pilot sequence (144_2) relative to the first pilot sequence (144_1).

**9.** The data receiver according to claim 8,

wherein the detector (130) is configured to estimate the temporally varying frequency shift of the at least one second pilot sequence (144_2) relative to the first pilot sequence (144_1),
wherein the detector (130) is configured to select a correlation pattern from the set of correlation patterns depending on the estimated frequency shift in order to obtain the selected correlation pattern.

**10.** The data receiver (110) according to claim 8 or 9,

wherein the data receiver (110) comprises a decoder (133) which is configured to decode data comprising the signal (120),
wherein the decoder (133) is configured to take into account or correct the temporally varying frequency offset, which is reduced by the correlation pattern selected for the detection, when decoding the data.

**11.** The data receiver (110) according to any of claims 8 to 10,

wherein the signal (120) comprises a plurality of partial data packets (142_1-142_n) which are distributed in time and frequency according to a hopping pattern (140),
wherein the at least two pilot sequences (144_1-144_n) are a plurality of pilot sequences (144_1-144_n), wherein the plurality of partial data packets (142_1-142_n) each comprise a pilot sequence of the plurality of pilot sequences (144_1-144_n),
wherein the set of correlation patterns is derived from the hopping pattern (140).

**12.** The data receiver (110) according to any of claims 8 to 11,
wherein the set of correlation patterns is derived from at least one hopping pattern defined in ETSI TS 103 357.

**13.** A method (310), performed by a data receiver (110), comprising the following steps:

receiving (312) a signal from a data transmitter, wherein the signal comprises at least two pilot sequences which are distributed in time according to a pilot pattern, wherein at least one second pilot sequence of the at least two pilot sequences comprises a temporally varying frequency shift relative to a first pilot sequence of the at least two pilot sequences, and
detecting (314) the at least two pilot sequences based on a correlation pattern selected from a set of correlation patterns,
wherein the correlation patterns of the set of correlation patterns correspond to the pilot pattern and describe a distribution of the at least two pilot sequences in time and frequency,
wherein the correlation patterns of the set of correlation patterns are provided with different temporally varying frequency shifts in order to reduce influences of different temporally varying frequency shifts of the at least one second pilot sequence relative to the first pilot sequence.

**14.** A computer program, comprising instructions which, when the program is executed by a computer, cause the same to carry out the method according to claim 7 or 13.

**Revendications**

**1.** Récepteur de données (110),

dans lequel le récepteur de données (110) est configuré pour recevoir un signal (120) en provenance d'un émetteur de données (100), dans lequel le signal (120) présente au moins deux séquences pilotes (144_1-144_n) qui sont réparties dans le temps conformément à un motif pilote (140), dans lequel au moins une deuxième séquence pilote (144_2) parmi les au moins deux séquences pilotes (144_1-144_n) présente un décalage de fréquence variable avec le temps par rapport à une première séquence pilote (144_1) des au moins deux séquences pilotes (144_1-144 n),

dans lequel le récepteur de données présente un détecteur (130) avec un corrélateur (122) qui est configuré pour détecter les au moins deux séquences pilotes (144_1-144_n) sur la base d'un motif de corrélation,
dans lequel le motif de corrélation correspond avec le motif pilote (140) et décrit une répartition dans le temps et en fréquence des au moins deux séquences pilotes (144_1-144 n),
dans lequel le motif de corrélation est chargé avec un décalage de fréquence variable avec le temps pour réduire une influence du décalage de fréquence variable avec le temps de l'au moins une deuxième séquence pilote (144_2) par rapport à la première séquence pilote (144_1).

2. Récepteur de données (110) selon la revendication précédente,

dans lequel au moins un élément parmi l'émetteur de données (100) et le récepteur de données (110) se déplace par rapport à l'autre élément parmi l'émetteur de données (100) et le récepteur de données (110),
dans lequel le décalage de fréquence variable avec le temps résulte d'un changement de mouvement relatif entre l'émetteur de données (100) et le récepteur de données (110).

3. Récepteur de données (110) selon une des revendications précédentes,
dans lequel le récepteur de données (110) est configuré pour estimer le décalage de fréquence variable avec le temps de l'au moins une deuxième séquence pilote (144_2) par rapport à la première séquence pilote (144_1) et pour adapter le motif de corrélation en fréquence sur la base du décalage de fréquence variable avec le temps qui a été estimé.

4. Récepteur de données (110) selon une des revendications 1 à 3,

dans lequel le corrélateur (122) présente au moins deux unités de corrélation fonctionnant en parallèle (118_1, 118_2),
dans lequel une première unité de corrélation (118_1) parmi les au moins deux unités de corrélation fonctionnant en parallèle (118_1, 118_2) est configurée pour réaliser des corrélations des au moins deux séquences pilotes (144_1-144_n) avec des séquences de référence sur la base du motif de corrélation afin d'obtenir un ensemble de résultats de corrélation (119_1) de la première unité de corrélation (118_1),
dans lequel une deuxième unité de corrélation (118_2) parmi les au moins deux unités de corrélation fonctionnant en parallèle (118_1, 118_2) est configurée pour réaliser des corrélations des au moins deux séquences pilotes (144_1-144_n) avec des séquences de référence sur la base du motif de corrélation afin d'obtenir un ensemble de résultats de corrélation (119_2) de la deuxième unité de corrélation (118_2),
dans lequel le récepteur de données (110) est configuré pour adapter différemment en fréquence le motif de corrélation utilisé dans les au moins deux unités de corrélation fonctionnant en parallèle (118_1, 118_2) afin de réduire les influences de différents décalages de fréquence variables avec le temps,
dans lequel le récepteur de données (110) est configuré pour sélectionner un ensemble de résultats de corrélation à partir des ensembles de résultats de corrélation (119_1, 119_2) des au moins deux unités de corrélation fonctionnant en parallèle (118_1, 118_2), sur la base duquel se fait la détection des au moins deux séquences pilotes (144_1-144 n), en fonction de valeurs de l'ensemble respectif de résultats de corrélation.

5. Récepteur de données (110) selon une des revendications 1 à 3,

dans lequel le corrélateur (122) est un corrélateur à plusieurs étages qui présente un premier étage de corrélation (124) et au moins un deuxième étage de corrélation (128, 129), qui suit le premier étage de corrélation et qui fonctionne sur la base de résultats de corrélation (125) du premier étage de corrélation (124),
dans lequel le détecteur (130) est configuré pour détecter les au moins deux séquences pilotes (144_1-144_n) dans le signal reçu (121),
dans lequel le récepteur de données (110) est configuré pour adapter en fréquence au moins un motif de corrélation qui est utilisé dans au moins un étage de corrélation à partir de l'au moins un deuxième étage de corrélation (128, 129) du corrélateur à plusieurs étages (122) afin de réduire l'influence du décalage de fréquence variable avec le temps.

6. Récepteur de données (110) selon une des revendications précédentes,

dans lequel le récepteur de données (110) présente un décodeur (133) qui est configuré pour décoder des données qui présentent le signal reçu,
dans lequel le décodeur (133) est configuré pour prendre en compte ou corriger le décalage de fréquence variable avec le temps lors du décodage des données.

7. Procédé (300) réalisé par un récepteur de données (110), comprenant les étapes suivantes :

recevoir (302) un signal en provenance d'un émetteur de données, dans lequel le signal présente au moins deux séquences pilotes qui sont réparties dans le temps conformément à un motif pilote, dans lequel au moins une deuxième séquence pilote des au moins deux séquences pilotes présente un décalage de fréquence variable avec le temps par rapport à une première séquence pilote des au moins deux séquences pilotes, et
détecter les au moins deux séquences pilotes sur la base d'un motif de corrélation,
dans lequel le motif de corrélation correspond avec le motif pilote et décrit une répartition dans le temps et en fréquence des au moins deux séquences pilotes,
dans lequel le motif de corrélation est chargé avec un décalage de fréquence variable avec le temps pour réduire une influence du décalage de fréquence variable avec le temps de l'au moins une deuxième séquence pilote (144_2) par rapport à la première séquence pilote.

8. Récepteur de données (110),

dans lequel le récepteur de données (110) est configuré pour recevoir un signal (120) en provenance d'un émetteur de données (100), dans lequel le signal (120) présente au moins deux séquences pilotes (144_1-144_n) qui sont réparties dans le temps conformément à un motif pilote (140), dans lequel au moins une deuxième séquence pilote (144_2) parmi les au moins deux séquences pilotes (144_1-144_n) présente un décalage de fréquence variable avec le temps par rapport à une première séquence pilote (144_1) des au moins deux séquences pilotes (144_1-144 n),
dans lequel le récepteur de données (110) présente un détecteur (130) avec un corrélateur (122) qui est configuré pour détecter les au moins deux séquences pilotes (144_1-144_n) sur la base d'un motif de corrélation sélectionné à partir d'un ensemble de motifs de corrélation,
dans lequel les motifs de corrélation de l'ensemble de motifs de corrélation correspondent avec le motif pilote et décrivent une répartition dans le temps et en fréquence des au moins deux séquences pilotes (144_1-144_n),
dans lequel les motifs de corrélation de l'ensemble de motifs de corrélation sont chargés avec différents décalages de fréquence avec le temps pour réduire les influences de différents décalages de fréquence variables avec le temps de l'au moins une deuxième séquence pilote (144_2) par rapport à la première séquence pilote (144_1).

9. Récepteur de données selon la revendication 8,

dans lequel le détecteur (130) est configuré pour estimer le décalage de fréquence variable avec le temps de l'au moins une deuxième séquence pilote (144_2) par rapport à la première séquence pilote (144_1),
dans lequel le détecteur (130) est configuré pour sélectionner un motif de corrélation à partir de l'ensemble de motifs de corrélation en fonction du décalage de fréquence estimé pour obtenir le motif de corrélation sélectionné.

10. Récepteur de données (110) selon la revendication 8 ou 9,

dans lequel le récepteur de données (110) présente un décodeur (133) qui est configuré pour décoder des données qui présentent le signal (120),
dans lequel le décodeur (133) est configuré pour, lors du décodage des données, prendre en compte ou corriger le décalage de fréquence variable avec le temps qui est réduit par le motif de corrélation sélectionné pour la détection.

11. Récepteur de données (110) selon une des revendications 8 à 10,

dans lequel le signal (120) présente une pluralité de paquets de données partiels (142_1-142_n) qui sont répartis dans le temps et en fréquence conformément à un motif de saut (140),
dans lequel les au moins deux séquences pilotes (144_1-144_n) sont une pluralité de séquences pilotes (144_1-144_n), dans lequel la pluralité de paquets de données partiels (142_1-142_n) présentent à chaque fois une séquence pilote de la pluralité de séquences pilotes (144_1-144_n),
dans lequel l'ensemble de motifs de corrélation est dérivé du motif de saut (140).

12. Récepteur de données (110) selon une des revendications 8 à 11,

dans lequel l'ensemble de motifs de corrélation est dérivé d'au moins un motif de saut défini dans la norme ETSI TS 103 357.

13. Procédé (310) réalisé par un récepteur de données (110), comprenant les étapes suivantes :

recevoir (312) un signal en provenance d'un émetteur de données, dans lequel le signal présente au moins deux séquences pilotes qui sont réparties dans le temps conformément à un motif pilote, dans lequel au moins une deuxième séquence pilote parmi les au moins deux séquences pilotes présente un décalage de fréquence variable avec le temps par rapport à une première séquence pilote des au moins deux séquences pilotes, et détecter (314) les au moins deux séquences pilotes sur la base d'un motif de corrélation sélectionné à partir d'un ensemble de motifs de corrélation,
dans lequel les motifs de corrélation de l'ensemble de motifs de corrélation correspondent avec le motif pilote et décrivent dans le temps et en fréquence une répartition des au moins deux séquences pilotes,
dans lequel les motifs de corrélation de l'ensemble de motifs de corrélation sont chargés avec différents décalages de fréquence variables avec le temps pour réduire des influences de différents décalages de fréquence variables avec le temps de l'au moins une deuxième séquence pilote par rapport à la première séquence pilote.

14. Programme d'ordinateur, comprenant des ordres qui amènent un ordinateur, lors de la réalisation du programme par celui-ci, à réaliser le procédé selon la revendication 7 ou 13.

Fig. 1

EP 4 107 891 B1

Fig. 2

EP 4 107 891 B1

Fig. 3

Fig. 4

EP 4 107 891 B1

110

122

mehrstufige Korrelator

Empfangssignal

121

1. Korrelationsstufe

124

125

2. Korrelationsstufe

128

Korrelationssignale

## Fig. 5a

110

122

Empfangssignal

121

1. Korrelationsstufe

124

125

2. Korrelationsstufe

128

126

3. Korrelationsstufe

129

## Fig. 5b

130

120

Breitbandsignal → | Paket-Detektor | → detektierte Pakete

Paket-Korrelator

| Matched-Filterbank | → | Präambel-Korrelation | → | Sequenz-Korrelation | → | Paket-Detektion | →

132    121    124    126    127    134

122

Fig. 6

Frequenz

(1)

(2)

(3)

(4)

Teil-
Pakete

Zeit

Fig. 7

142

$N_T$

$N_D/2$

$N_P$

$N_D/2$

| Datensymbole | Präambelsymbole | Datensymbole |
|---|---|---|

146

144

146

Fig. 8

Frequenzband mit der Bandbreite B

Fig. 9

Fig. 10

Fig. 11

Fig. 12

Beispiel 1: $N_P = 12$, $K = 3$, $L_K = 4$, $D_K = 4$

Beispiel 2: $N_P = 12$, $K = 5$, $L_K = 4$, $D_K = 2$

Fig. 13

Fig. 14

Beispiel:
$M_T = 2; L_K = 4$

170

170

$M_T \cdot L_K = 8$

$M_T \cdot L_K = 8$

$C_P$

$C_P$

$S_1$

$S_2$

$S_3$

$S_4$

$S_1$

$S_2$

$S_3$

$S_4$

152

150

152

154

154

+

+

$C_P$

$C_P$

$c_i[n]$, n ungerade

$c_i[n]$, n gerade

Fig. 15

Fig. 16

Fig. 17

Fig. 18

$$C_G \times (1 + M_T \cdot \max_i \{\max\{T_{PG}\}\})$$

Fig. 19

Fig. 20

Mischer ($M_F = 4$):

$\otimes$ $f_{mix} = -f_{sym}/16$

$\otimes$ $f_{mix} = +f_{sym}/16$

Fig. 21

Fig. 22

Fig. 23

Fig. 24

122

Korrelator

118_1

1. Korrelationseinheit

119_1

121

2. Korrelationseinheit

119_2

118_2

Fig. 25

122

Korrelator

1. Korrelationsstufe

2. Korrelationsstufe

3. Korrelationsstufe (optional)

121

125

126

124

128

129

Fig. 26

Fig. 27

EP 4 107 891 B1

Doppler-Verschiebung bei 1 GHz,
LEO bei 700 km

Fig. 28a

Doppler-Verschiebungsrate bei 1 GHz,
LEO bei 700 km

Fig. 28b

Fig. 29

Fig. 30

Fig. 31

EP 4 107 891 B1

Fig. 32

Fig. 33

EP 4 107 891 B1

Fig. 34

EP 4 107 891 B1

<u>110</u>

130            137            133

```
  ──▶│ Detektion │──▶│ Delta-Doppler- │──▶│ Decodierung │──▶
                      │ Kompensation  │
```

# Fig. 35

<u>110</u>

empfangenes
Signal (r)

```
  ────┬──────────▶│ Paketdetektor │∿130
      │           └───────┬───────┘
      │                   │
      │            TSMA-Sprungmuster-ID,
      │            Zeitindex, Freq.index,
      │            Doppler-Schätzwert
      │                   │
      │                   ▼
      │           ┌───────────────┐
      └──────────▶│ Doppler-      │∿137
                  │ Kompensation  │
                  └───────┬───────┘
                          │ r_dop_comp
                          ▼
                  ┌───────────────┐   decodiertes
                  │ Paket-        │── Signal ──▶
                  │ decodierer    │
                  └───────────────┘
                          │
                         133
```

# Fig. 36

<u>300</u>

Empfangen eines Signals von einem Datensender, wobei das Signal zumindest zwei Pilotsequenzen aufweist, die entsprechend eines Pilotmusters in der Zeit verteilt sind, wobei zumindest eine zweite Pilotsequenz der zumindest zwei Pilotsequenzen eine zeitlich veränderliche Frequenzverschiebung gegenüber einer ersten Pilotsequenz der zumindest zwei Pilotsequenzen aufweist

302

Detektieren der zumindest zwei Pilotsequenzen basierend auf einem Korrelationsmuster, wobei das Korrelationsmuster in der Frequenz an die zeitlich veränderliche Frequenzverschiebung angepasst ist, um einen Einfluss der zeitlich veränderlichen Frequenzverschiebung zu reduzieren

304

# Fig. 37

<u>310</u>

Empfangen eines Signals von einem Datensender zu empfangen, wobei das Signal zumindest zwei Pilotsequenzen aufweist, die entsprechend eines Pilotmusters in der Zeit verteilt sind, wobei zumindest eine zweite Pilotsequenz der zumindest zwei Pilotsequenzen eine zeitlich veränderliche Frequenzverschiebung gegenüber einer ersten Pilotsequenz der zumindest zwei Pilotsequenzen aufweist

312

Detektieren der zumindest zwei Pilotsequenzen basierend auf einem aus einem Satz von Korrelationsmustern ausgewählten Korrelationsmuster, wobei die Korrelationsmuster des Satzes von Korrelationsmustern unterschiedliche Einflüsse von zeitlich veränderlichen Frequenzverschiebungen reduzieren

314

# Fig. 38

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008158050 A1
- DE 102011082098 B4
- WO 2017167366 A1
- DE 102017206248 A1

**In der Beschreibung aufgeführte Nicht-Patentliteratur**

- **G. KILIAN** ; **M. BREILING** ; **H. H. PETKOV** ; **H. LIESKE** ; **F. BEER** ; **J. ROBERT** ; **A. HEUBERGER**. Increasing Transmission Reliability for Telemetry Systems Using Telegram Splitting. *IEEE Transactions on Communications*, March 2015, vol. 63 (3), 949-961